(19) Europäisches Patentamt / European Patent Office / Office européen des brevets

(11) **EP 4 273 692 A1**

(12) **EUROPEAN PATENT APPLICATION**
published in accordance with Art. 153(4) EPC

(43) Date of publication:
08.11.2023 Bulletin 2023/45

(21) Application number: 22758730.0

(22) Date of filing: 21.01.2022

(51) International Patent Classification (IPC):
*G06F 3/14* (2006.01)    *H04M 1/725* (2021.01)

(52) Cooperative Patent Classification (CPC):
G06F 3/14; H04M 1/725

(86) International application number:
PCT/CN2022/073098

(87) International publication number:
WO 2022/179364 (01.09.2022 Gazette 2022/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.02.2021 CN 202110221570

(71) Applicant: Huawei Technologies Co., Ltd.
Shenzhen, Guangdong 518129 (CN)

(72) Inventors:
• DU, Zhong
  Shenzhen, Guangdong 518129 (CN)
• LIU, Fengkai
  Shenzhen, Guangdong 518129 (CN)
• ZHOU, Xingchen
  Shenzhen, Guangdong 518129 (CN)

(74) Representative: Pfenning, Meinig & Partner mbB
Patent- und Rechtsanwälte
Theresienhöhe 11a
80339 München (DE)

(54) **SPLICED DISPLAY METHOD, ELECTRONIC DEVICE AND SYSTEM**

(57) This application provides a splicing display method, an electronic device, and a system. The method includes: A first electronic device displays a first interface; a second electronic device sends first indication information to the first electronic device in response to detecting a first input of a user, where the first indication information indicates the first electronic device and the second electronic device to perform splicing display; in response to receiving the first indication information, the first electronic device displays a first part of image information and sends a second part of image information to the second electronic device based on orientation information of the first electronic device and the second electronic device, where the first part of image information and the second part of image information are associated with the first interface; and the second electronic device displays the second part of image information in response to receiving the second part of image information. In embodiments of this application, screens of a plurality of electronic devices can be spliced for display, thereby improving user experience.

FIG. 26

## Description

This application claims priority to Chinese Patent Application No. 202110221570.3, filed with the China National Intellectual Property Administration on February 27, 2021 and entitled "SPLICING DISPLAY METHOD, ELECTRONIC DEVICE, AND SYSTEM", which is incorporated herein by reference in its entirety.

## TECHNICAL FIELD

This application relates to the terminal field, and more specifically, to a splicing display method, an electronic device, and a system.

## BACKGROUND

Currently, users have an increasing quantity of electronic devices, and a survey shows that one user has an average of seven electronic devices. When a user uses a single electronic device (for example, a mobile phone) to watch a video or view a document, a viewing effect of the user is affected due to a limited screen size. Therefore, how to interconnect a plurality of electronic devices into a whole to help a user watch on a larger screen has become a problem that needs to be urgently resolved.

## SUMMARY

This application provides a splicing display method, an electronic device, and a system, so that screens of a plurality of electronic devices can be spliced for display, thereby improving user experience.

According to a first aspect, a system is provided. The system includes a first electronic device and a second electronic device, the first electronic device communicates with the second electronic device through a near field wireless connection, and the first electronic device is configured to display a first interface; the second electronic device is configured to send first indication information to the first electronic device in response to detecting a first input of a user, where the first indication information indicates the first electronic device and the second electronic device to perform splicing display; the first electronic device is further configured to: in response to receiving the first indication information, display a first part of image information and send a second part of image information to the second electronic device based on orientation information of the first electronic device and the second electronic device, where the first part of image information and the second part of image information are associated with the first interface; and the second electronic device is further configured to display the second part of image information in response to receiving the second part of image information.

In this embodiment of this application, the first input of the user is detected on the second electronic device, and the first electronic device and the second electronic device are triggered to perform splicing display, so that screens of a plurality of electronic devices are spliced. This can enhance viewing experience of the user, thereby improving user experience.

In some possible implementations, the first input is an operation in which the user performs sliding from left to right. In response to detecting the first input of the user, the second electronic device determines that a left device of the second electronic device is a source device.

In some possible implementations, if there are a plurality of devices on a left side of the second electronic device, the second electronic device may determine that a leftmost device in the plurality of devices is a source device.

In some possible implementations, a system is provided. The system includes a first electronic device and a second electronic device, the first electronic device communicates with the second electronic device through a near field wireless connection, and the first electronic device is configured to display a first interface; the first electronic device is configured to: in response to detecting an input of a user, display a first part of image information and send a second part of image information to the second electronic device based on orientation information of the first electronic device and the second electronic device, where the first part of image information and the second part of image information are associated with the first interface; and the second electronic device is further configured to display the second part of image information in response to receiving the second part of image information.

In this embodiment of this application, the input of the user is detected on the first electronic device, and the first electronic device and the second electronic device are triggered to perform splicing display, so that screens of a plurality of electronic devices are spliced. This can enhance viewing experience of the user, thereby improving user experience.

With reference to the first aspect, in some implementations of the first aspect, the first electronic device is further configured to: receive first information sent by the second electronic device, where the first information indicates a size of a display of the second electronic device; and the first electronic device is specifically configured to: enlarge image information corresponding to the first interface and segment the enlarged image information based on a quantity of electronic devices performing splicing display, a size of a display of the first electronic device, and the size of the display of the second electronic device, to obtain the first part of image information and the second part of image information.

In this embodiment of this application, after receiving the first indication information sent by the second electronic device, the first electronic device may perform splicing display with the second electronic device in a full-screen mode. In a scenario in which the user watches a video, a photo, or the like, when screens of a plurality of electronic devices are spliced, viewing experience of watching a video or a picture by the user can be enhanced, thereby improving user experience.

With reference to the first aspect, in some implementations of the first aspect, a size of the display of the first electronic device in a first direction is a first size, a size of the first electronic device in a second direction is a second size, a size of the display of the second electronic device in the first direction is a third size, the first direction is perpendicular to the second direction, and the first electronic device is specifically configured to: when the first electronic device and the second electronic device perform splicing display along the first direction, enlarge, by the first electronic device, a size of the image information corresponding to the first interface in the first direction to a fourth size and keep a size of the image information corresponding to the first interface in the second direction unchanged, where the fourth size is a sum of the first size and the third size.

With reference to the first aspect, in some implementations of the first aspect, a third part of image information is further obtained after the enlarged image information is segmented, the third part of image information is located between the first part of image information and the second part of image information, and the third part of image information is determined by the first electronic device based on a distance between the first electronic device and the second electronic device.

In this embodiment of this application, the first electronic device may select a segmentation manner or a mask manner to segment the enlarged image information. In some possible implementations, when the distance between the first electronic device and the second electronic device is less than or equal to a preset distance (for example, three centimeters), the first electronic device may perform splicing display with the second electronic device in a mask manner; or when the distance between the first electronic device and the second electronic device is greater than the preset distance, the first electronic device may perform splicing display with the second electronic device in a segmentation manner.

With reference to the first aspect, in some implementations of the first aspect, content on a first page of a first file is displayed on the first interface, and the first electronic device is specifically configured to: when it is determined that the first file includes content on a plurality of pages, display the content on the first page and send content on a second page of the first file to the second electronic device; and the second electronic device is specifically configured to display the content on the second page in response to receiving the content on the second page.

In this embodiment of this application, after receiving the first indication information sent by the second electronic device, the first electronic device may perform splicing display with the second electronic device in a paging mode. In a scenario in which the user views a document application, efficiency of reading a document by the user can be improved, and a page flip operation of the user can be reduced, thereby improving user experience.

With reference to the first aspect, in some implementations of the first aspect, the first file further includes content on a third page and content on a fourth page, and the first electronic device is further configured to: in response to detecting a second input of the user, display the content on the third page and send the content on the fourth page to the second electronic device; and the second electronic device is further configured to display the content on the fourth page in response to receiving the content on the fourth page.

In this embodiment of this application, when the first electronic device detects the second input of the user, the first electronic device and the second electronic device may be controlled to perform page flip, so that the first electronic device and the second electronic device respectively display the content on the third page and the content on the fourth page. This can improve efficiency of reading a document by the user and reduce a page flip operation of the user, thereby improving user experience.

With reference to the first aspect, in some implementations of the first aspect, the first file further includes content on a third page and content on a fourth page, and the second electronic device is further configured to send second indication information to the first electronic device in response to detecting a third input of the user, where the second indication information indicates that the second electronic device detects the third input; the first electronic device is further configured to: in response to receiving the second indication information, display the content on the third page and send the content on the fourth page to the second electronic device; and the second electronic device is further configured to display the content on the fourth page in response to receiving the content on the fourth page.

In this embodiment of this application, the second electronic device may send the second indication information to the first electronic device when detecting the input of the user, so that the first electronic device determines that the user detects a page flip operation on the second electronic device, and the first electronic device and the second electronic device respectively display the content on the third page and the content on the fourth page. This can improve efficiency of reading a document by the user and reduce a page flip operation of the user, thereby improving user experience.

With reference to the first aspect, in some implementations of the first aspect, the first interface is a desktop of the first electronic device, and the first electronic device is specifically configured to: in response to receiving the first indication information, display the desktop and send image information corresponding to the desktop to the second electronic device; and the second electronic device is specifically configured to display the desktop in response to receiving the image information corresponding to the desktop.

In this embodiment of this application, after receiving the first indication information sent by the second electronic device, the first electronic device may perform splicing display with the second electronic device in a paging mode. In a scenario in which the user needs to simultaneously start a plurality of applications, for example, the user needs to send a message to a contact when watching a video or the user receives, when playing a game, a message sent by a contact, the user can start the plurality of applications through the first electronic device and the second electronic device without switching applications, thereby improving user experience.

With reference to the first aspect, in some implementations of the first aspect, the desktop includes an icon of a first application, and the second electronic device is further configured to send third indication information to the first electronic device in response to a fourth input of the user, where the third indication information indicates that the second electronic device detects the fourth input, and the fourth input is an input for the icon of the first application; the first electronic device is further configured to send image information corresponding to a display interface of the first application to the second electronic device in response to receiving the third indication information; and the second electronic device is further configured to display the display interface of the first application in response to receiving the image information corresponding to the display interface of the first application.

With reference to the first aspect, in some implementations of the first aspect, the desktop further includes an icon of a second application, and the first electronic device is further configured to display a display interface of the second application in response to detecting a fifth input of the user for the icon of the second application.

With reference to the first aspect, in some implementations of the first aspect, the first interface is a display interface of a third application, the display interface includes a first interface element, and the first interface element is associated with a second interface of the third application, where the first part of image information is image information corresponding to the first interface, and the second part of image information is image information corresponding to the first interface; or the first part of image information is image information corresponding to the first interface, and the second part of image information is image information corresponding to the second interface.

In this embodiment of this application, after receiving the first indication information sent by the second electronic device, the first electronic device may perform splicing display with the second electronic device in a paging mode. In a multiplier mode, the first electronic device and the second electronic device may display upper-level and lower-level activity (activity) pages of an application, and the application may simultaneously display two activity pages through adjustment in this mode, thereby bringing better user experience during multi-device splicing.

In some possible implementations, the first interface element may be any interface element that is on the first interface and that is associated with another display interface; or the first interface element may be an interface element at a preset position.

With reference to the first aspect, in some implementations of the first aspect, the first interface further includes a second interface element, the second interface element is associated with a third interface of the third application, and the first electronic device is further configured to: in response to detecting a sixth input of the user for the second interface element, display the image information corresponding to the first interface and send image information corresponding to the third interface to the second electronic device; and the second electronic device is further configured to display the third interface in response to receiving the image information corresponding to the third interface.

In this embodiment of this application, when detecting, on the first interface, an operation of tapping the second interface element by the user, the first electronic device may continue to display the first interface and send the image information corresponding to the third interface to the second electronic device, so that the first electronic device and the second electronic device respectively display two upper-level and lower-level activity pages: the first interface and the third interface, and the user does not need to switch back and forth between the upper-level and lower-level activity pages, thereby improving user experience.

With reference to the first aspect, in some implementations of the first aspect, the third interface includes a third interface element, the third interface element is associated with a fourth interface of the third application, and the second electronic device is further configured to send fourth indication information to the first electronic device in response to detecting a seventh input of the user, where the fourth indication information indicates that the second electronic device detects the seventh input, and the seventh input is an input for the third interface element; the first electronic device is further configured to: in response to receiving the fourth indication information, display the fourth interface and send the image information corresponding to the third interface to the second electronic device; and the second electronic device is further configured to display the third interface in response to receiving the image information corresponding to the third interface.

With reference to the first aspect, in some implementations of the first aspect, the second electronic device is further configured to: display a first control when displaying the second part of image information; and in response to detecting an eighth input of the user for the first control, display a fifth interface and send fifth indication information to the first electronic device, where the fifth indication information indicates the first electronic device and the second electronic device to exit splicing display, and the fifth interface is a display interface displayed before the second electronic device detects the first input.

According to a second aspect, a splicing display method is provided. The method is applied to a first electronic device, the first electronic device communicates with a second electronic device through a near field wireless connection, and the method includes: The first electronic device displays a first interface; the first electronic device receives first indication information sent by the second electronic device, where the first indication information indicates the first electronic device and the second electronic device to perform splicing display; and in response to receiving the first indication information, the first electronic device displays a first part of image information and sends a second part of image information to the second electronic device based on orientation information of the first electronic device and the second electronic device, where the first part of image information and the second part of image information are associated with the first interface.

With reference to the second aspect, in some implementations of the second aspect, the method further includes: The first electronic device receives first information sent by the second electronic device, where the first information indicates a size of a display of the second electronic device. Before the first electronic device displays the first part of image information and sends the second part of image information to the second electronic device, the method includes: The first electronic device enlarges image information corresponding to the first interface and segments the enlarged image information based on a quantity of electronic devices performing splicing display, a size of a display of the first electronic device, and the size of the display of the second electronic device, to obtain the first part of image information and the second part of image information.

With reference to the second aspect, in some implementations of the second aspect, a size of the display of the first electronic device in a first direction is a first size, a size of the first electronic device in a second direction is a second size, a size of the display of the second electronic device in the first direction is a third size, and the first direction is perpendicular to the second direction. That the first electronic device enlarges image information corresponding to the first interface based on a quantity of electronic devices performing splicing display, a size of a display of the first electronic device, and the size of the display of the second electronic device includes: When the first electronic device and the second electronic device perform splicing display along the first direction, the first electronic device enlarges a size of the image information corresponding to the first interface in the first direction to a fourth size and keeps a size of the image information corresponding to the first interface in the second direction unchanged, where the fourth size is a sum of the first size and the third size.

With reference to the second aspect, in some implementations of the second aspect, a third part of image information is further obtained after the enlarged image information is segmented, the third part of image information is located between the first part of image information and the second part of image information, and the third part of image information is determined by the first electronic device based on a distance between the first electronic device and the second electronic device.

With reference to the second aspect, in some implementations of the second aspect, content on a first page of a first file is displayed on the first interface, and the displaying a first part of image information and sending a second part of image information to the second electronic device includes: when it is determined that the first file includes content on a plurality of pages, displaying the content on the first page and sending content on a second page of the first file to the second electronic device.

With reference to the second aspect, in some implementations of the second aspect, the first file further includes content on a third page and content on a fourth page, and the method further includes: In response to detecting a second input of the user, the first electronic device displays the content on the third page and sends the content on the fourth page to the second electronic device.

With reference to the second aspect, in some implementations of the second aspect, the first file further includes content on a third page and content on a fourth page, and the method further includes: The first electronic device receives second indication information sent by the second electronic device, where the second indication information indicates that the second electronic device detects a third input; and in response to receiving the second indication information, displays the content on the third page and sends the content on the fourth page to the second electronic device.

With reference to the second aspect, in some implementations of the second aspect, the first interface is a desktop of the first electronic device, and the displaying a first part of image information and sending a second part of image information to the second electronic device includes: In response to receiving the first indication information, the first electronic device displays the desktop and sends image information corresponding to the desktop to the second electronic device.

With reference to the second aspect, in some implementations of the second aspect, the desktop includes an icon of a first application, and the method further includes: The first electronic device receives third indication information sent by the second electronic device, where the third indication information indicates that the second electronic device detects a fourth input, and the fourth input is an input for the icon of the first application; and in response to receiving the third indication information, the first electronic device sends image information corresponding to a display interface of the first application to the second electronic device.

With reference to the second aspect, in some implementations of the second aspect, the desktop further includes an icon of a second application, and the method further includes: The first electronic device displays a display interface of the second application in response to detecting a fifth input of the user for the icon of the second application.

With reference to the second aspect, in some implementations of the second aspect, the first interface is a display interface of a third application, the display interface includes a first interface element, and the first interface element is associated with a second interface of the third application, where the first part of image information is image information corresponding to the first interface, and the second part of image information is image information corresponding to the first interface; or the first part of image information is image information corresponding to the first interface, and the second part of image information is image information corresponding to the second interface.

With reference to the second aspect, in some implementations of the second aspect, the first interface further includes a second interface element, the second interface element is associated with a third interface of the third application, and the method further includes: In response to detecting a sixth input of the user for the second interface element, the first electronic device displays the image information corresponding to the first interface and sends image information corresponding to the third interface to the second electronic device.

With reference to the second aspect, in some implementations of the second aspect, the third interface includes a third interface element, the third interface element is associated with a fourth interface of the third application, and the method further includes: The first electronic device receives fourth indication information sent by the second electronic device, where the fourth indication information indicates that the second electronic device detects a seventh input, and the seventh input is an input for the third interface element; and in response to receiving the fourth indication information, the first electronic device displays the fourth interface and sends the image information corresponding to the third interface to the second electronic device.

With reference to the second aspect, in some implementations of the second aspect, the method further includes: The first electronic device receives fifth indication information sent by the second electronic device, where the fifth indication information indicates the first electronic device and the second electronic device to exit splicing display.

According to a third aspect, a splicing display method is provided. The method is applied to a second electronic device, the second electronic device communicates with a first electronic device through a near field wireless connection, and the method includes: sending first indication information to the first electronic device in response to detecting a first input of a user, where the first indication information indicates the first electronic device and the second electronic device to perform splicing display; receiving a second part of image information sent by the first electronic device, where the second part of image information is associated with a first interface, and the first interface is a display interface displayed when the first electronic device receives the first indication information; and displaying the second part of image information in response to receiving the second part of image information.

With reference to the third aspect, in some implementations of the third aspect, the second part of image information is image information obtained by enlarging image information corresponding to the first interface and then segmenting the enlarged image information by the first electronic device.

With reference to the third aspect, in some implementations of the third aspect, content on a first page of a first file is displayed on the first interface, and the displaying the second part of image information in response to receiving the second part of image information includes: The second electronic device displays content on a second page in response to receiving the content on the second page.

With reference to the third aspect, in some implementations of the third aspect, the first file further includes content on a third page and content on a fourth page, and the method further includes: The second electronic device sends second indication information to the first electronic device in response to detecting a third input of the user, where the second indication information indicates that the second electronic device detects the third input; the second electronic device receives the content that is on the fourth page and that is sent by the first electronic device; and the second electronic device displays the content on the fourth page in response to receiving the content on the fourth page.

With reference to the third aspect, in some implementations of the third aspect, the first interface is a desktop of the first electronic device, and the displaying the second part of image information in response to receiving the second part of image information includes: The second electronic device displays the desktop in response to receiving image information corresponding to the desktop.

With reference to the third aspect, in some implementations of the third aspect, the desktop includes an icon of a first application, and the method further includes: The second electronic device sends third indication information to the first electronic device in response to a fourth input of the user, where the third indication information indicates that the second electronic device detects the fourth input, and the fourth input is an input for the icon of the first application; the second electronic device receives image information corresponding to a display interface of the first application; and the second electronic device displays the display interface of the first application in response to receiving the image information corresponding to the display interface of the first application.

With reference to the third aspect, in some implementations of the third aspect, the first interface is a display interface of a third application, the display interface includes a first interface element, and the first interface element is associated with a second interface of the third application, where the second part of image information is image information corresponding to the first interface; or the second part of image information is image information corresponding to the second interface.

With reference to the third aspect, in some implementations of the third aspect, the second part of image information further includes a second interface element, the second interface element is associated with a third interface of the third application, and the method further includes: The second electronic device sends fourth indication information to the first electronic device in response to detecting a fifth input of the user, where the fourth indication information indicates that the second electronic device detects the fifth input, and the fifth input is an input for the second interface element; and the second electronic device receives image information that is corresponding to the third interface and that is sent by the first electronic device; and displays the third interface in response to receiving the image information corresponding to the third interface.

With reference to the third aspect, in some implementations of the third aspect, the method further includes: The second electronic device displays a first control when displaying the second part of image information; and in response to detecting an eighth input of the user for the first control, the second electronic device displays a fourth interface and sends fifth indication information to the first electronic device, where the fifth indication information indicates the first electronic device and the second electronic device to exit splicing display, and the fourth interface is a display interface displayed before the second electronic device detects the first input.

According to a fourth aspect, an apparatus is provided. The apparatus includes: a display unit, configured to display a first interface; a receiving unit, configured to receive first indication information sent by a second electronic device, where the first indication information indicates the apparatus and the second electronic device to perform splicing display; and the display unit is further configured to display a first part of image information based on orientation information of the first electronic device and the second electronic device in response to receiving the first indication information; and a sending unit, configured to send a second part of image information to the second electronic device, where the first part of image information and the second part of image information are associated with the first interface.

According to a fifth aspect, an apparatus is provided. The apparatus includes: a detection unit, configured to detect a first input of a user; a sending unit, configured to send first indication information to a first electronic device in response to the first input, where the first indication information indicates the first electronic device and the apparatus to perform splicing display; a receiving unit, configured to receive a second part of image information sent by the first electronic device, where the second part of image information is associated with a first interface, and the first interface is a display interface displayed when the first electronic device receives the first indication information; and a display unit, configured to display the second part of image information in response to receiving the second part of image information.

According to a sixth aspect, an electronic device is provided, including one or more processors, a memory, and one or more computer programs. The one or more computer programs are stored in the memory, and the one or more computer programs include instructions. When the instructions are executed by the electronic device, the electronic device is enabled to perform the method in any possible implementation of the second aspect.

According to a seventh aspect, an electronic device is provided, including one or more processors, a memory, and one or more computer programs. The one or more computer programs are stored in the memory, and the one or more computer programs include instructions. When the instructions are executed by the electronic device, the electronic device is enabled to perform the method in any possible implementation of the third aspect.

According to an eighth aspect, a computer program product including instructions is provided. When the computer program product is run on a first electronic device, the electronic device is enabled to perform the method in the second aspect; or when the computer program product is run on a second electronic device, the electronic device is enabled to perform the method in the third aspect.

According to a ninth aspect, a computer-readable storage medium including instructions is provided. When the instructions are run on a first electronic device, the electronic device is enabled to perform the method in the second aspect; or when the instructions are run on a second electronic device, the electronic device is enabled to perform the method in the third aspect.

According to a tenth aspect, a chip is provided, configured to execute instructions. When the chip runs, the chip performs the method in the second aspect; or the chip performs the method in the third aspect.

**BRIEF DESCRIPTION OF DRAWINGS**

FIG. 1 is a schematic diagram of a hardware structure of an electronic device according to an embodiment of this application;

FIG. 2 is a block diagram of a software structure according to an embodiment of this application;

FIG. 3(a) to FIG. 3(d) show a set of graphical user interfaces according to an embodiment of this application;

FIG. 4(a) to FIG. 4(d) show another set of graphical user interfaces according to an embodiment of this application;

FIG. 5(a) to FIG. 5(c) show another set of graphical user interfaces according to an embodiment of this application;

FIG. 6(a) to FIG. 6(e) show another set of graphical user interfaces according to an embodiment of this application;

FIG. 7(a) to FIG. 7(d) show another set of graphical user interfaces according to an embodiment of this application;

FIG. 8(a) to FIG. 8(c) show another set of graphical user interfaces according to an embodiment of this application;

FIG. 9(a) to FIG. 9(f) show another set of graphical user interfaces according to an embodiment of this application;

FIG. 10(a) and FIG. 10(b) show another set of graphical user interfaces according to an embodiment of this application;

FIG. 11(a) to FIG. 11(c) show another set of graphical user interfaces according to an embodiment of this application;

FIG. 12(a) to FIG. 12(c) show another set of graphical user interfaces according to an embodiment of this application;

FIG. 13(a) and FIG. 13(b) show another set of graphical user interfaces according to an embodiment of this application;

FIG. 14(a) and FIG. 14(b) show another set of graphical user interfaces according to an embodiment of this application;

FIG. 15 is a schematic diagram of a structure of a source device and a sink device according to an embodiment of this application;

FIG. 16A and FIG. 16B are a schematic flowchart of a method for performing display by a source device and a sink device in a full-screen mode according to an embodiment of this application;

FIG. 17 shows a process in which a source device performs cropping in a segmentation manner and displays a cropped canvas on a virtual display according to an embodiment of this application;

FIG. 18 shows a process in which a source device performs cropping in a mask manner and displays a cropped canvas on a virtual display according to an embodiment of this application;

FIG. 19 shows another process in which a source device performs cropping in a segmentation manner and displays a cropped canvas on a virtual display according to an embodiment of this application;

FIG. 20 shows another process in which a source device performs cropping in a mask manner and displays a cropped canvas on a virtual display according to an embodiment of this application;

FIG. 21 is a schematic flowchart of a method for performing display by a source device and a sink device in a paging mode according to an embodiment of this application;

FIG. 22A and FIG. 22B are a schematic diagram of displaying a desktop of a source end in a paging mode according to an embodiment of this application;

FIG. 23 is a schematic flowchart of a method for performing display by a source device and a sink device in a multiplier mode according to an embodiment of this application;

FIG. 24A to FIG. 24C show a process of opening an activity page in an application in a multiplier mode according to an embodiment of this application;

FIG. 25 is a schematic flowchart of a method for performing display by a source device and a sink device in a dual-application mode according to an embodiment of this application;

FIG. 26 is a schematic flowchart of a splicing display method according to an embodiment of this application;

FIG. 27 is a schematic diagram of a structure of an apparatus according to an embodiment of this application;

FIG. 28 is another schematic diagram of a structure of an apparatus according to an embodiment of this application; and

FIG. 29 is another schematic diagram of a structure of an electronic device according to an embodiment of this application.

**DESCRIPTION OF EMBODIMENTS**

The following describes the technical solutions in embodiments of this application with reference to the accompanying drawings in embodiments of this application. In the descriptions of the embodiments of this application, unless otherwise specified, "/" indicates an "or" relationship. For example, A/B may represent A or B. "and/or" in this specification is merely an association relationship for describing associated objects, and represents that three relationships may exist. For example, A and/or B may represent the following three cases: Only A exists, both A and B exist, and only B exists.

In addition, in the descriptions of the embodiments of this application, "a plurality of" means two or more than two.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of the embodiments, unless otherwise specified, "a plurality of" means two or more.

A method provided in the embodiments of this application may be applied to an electronic device such as a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in the embodiments of this application.

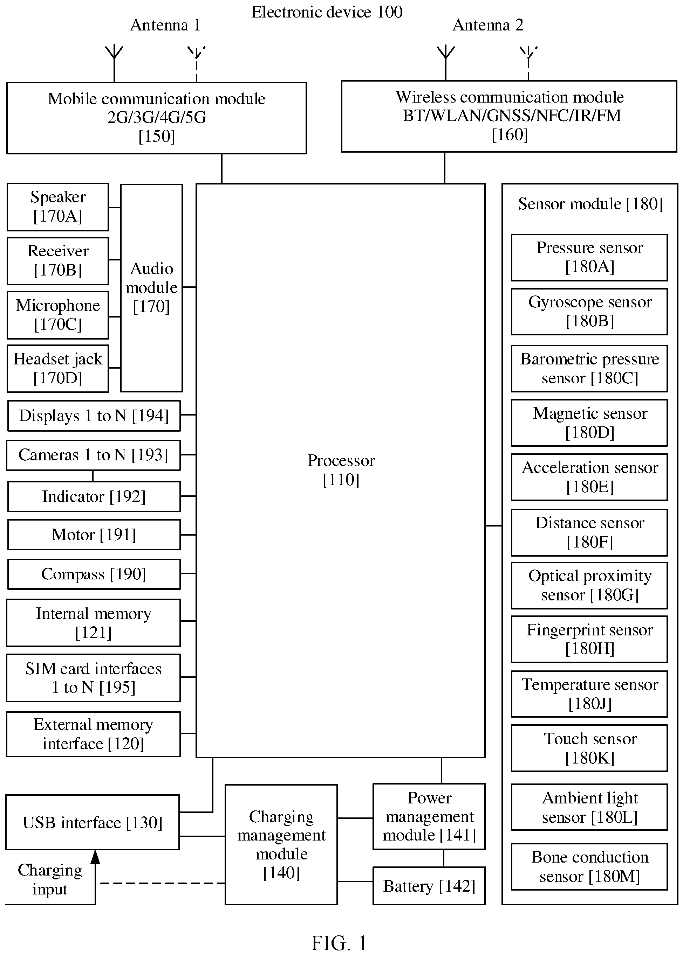

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction executing.

The memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface to implement a photographing function of the electronic device 100. The processor 110 communicates with the display 194 through the DSI interface to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device, or may be configured to connect to a headset for playing audio through the headset. The interface may alternatively be configured to connect to another electronic device such as an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from the interface connection manner in this embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input of a wired charger through the USB interface 130. In some embodiments in which wireless charging is used, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input from the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health state (electric leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be multiplexed to improve antenna utilization. For example, the antenna 1 may be multiplexed as a diversity antenna of a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some function modules in the mobile communication module 150 may be disposed in the processor 110. In some embodiments, at least some function modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert the signal into an electromagnetic wave through the antenna 2 for radiation.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a static image or a video. An object generates, through a lens, an optical image to be projected to a photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Application such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, a music file or a video file is stored in the external memory card.

The internal memory 121 may be configured to store computer-executable program code. The executable program code includes instructions. The processor 110 runs the instructions stored in the internal memory 121, to perform various function application and data processing of the electronic device 100. The internal memory 121 may include a program storage region and a data storage region. The program storage region may store an operating system, an application required by at least one function (for example, a voice play function or an image play function), and the like. The data storage region may store data (for example, audio data or a phone book) created in a process of using the electronic device 100, and the like. In addition, the internal memory 121 may include a high-speed random access memory, and may further include a nonvolatile memory, for example, at least one magnetic disk storage device, a flash storage device, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules of the audio module 170 are disposed in the processor 110.

The speaker 170A, also referred to as a "loudspeaker", is configured to convert an electrical audio signal into a sound signal. The electronic device 100 may be configured to listen to music or answer a hands-free call by using the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "microphone", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and further implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunication industry association of the USA (cellular telecommunication industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is exerted on the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an application icon "Messages", an instruction for viewing an SMS message is executed. When a touch operation whose touch operation intensity is greater than or equal to the first pressure threshold is performed on the application icon "Messages", an instruction for creating an SMS message is executed.

The gyroscope sensor 180B may be configured to determine a motion posture of the electronic device 100. In some embodiments, angular velocities of electronic device 100 around three axes (which are x, y, and z axes) may be determined by using the gyroscope sensor 180B. The gyroscope sensor 180B may be configured to implement image stabilization during shooting. For example, when a shutter is pressed, the gyroscope sensor 180B detects an angle at which the electronic device 100 jitters, obtains, through calculation based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover leather case by using the magnetic sensor 180D. In some embodiments, when the electronic device 100 is a flip device, the electronic device 100 may detect opening and closing of the flip by using the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is applied to switching between a landscape mode and a portrait mode, a pedometer, or the like.

The distance sensor 180F is configured to measure a distance. The electronic device 100 may measure a distance in an infrared manner or a laser manner. In some embodiments, in a shooting scenario, the electronic device 100 may measure a distance through the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When adequate reflected light is detected, it may be determined that there is an object near the electronic device 100. When inadequate reflected light is detected, the electronic device 100 may determine that there is no object near the electronic device 100. The electronic device 100 may detect, by using the optical proximity sensor 180G, that a user holds the electronic device 100 close to an ear for a call, to automatically perform screen-off for power saving. The optical proximity sensor 180G may also be used in a leather case mode or a pocket mode to automatically unlock or lock the screen.

The ambient light sensor 180L is configured to sense ambient light brightness. The electronic device 100 may adaptively adjust brightness of the display 194 based on the sensed ambient light brightness. The ambient light sensor 180L may be further configured to automatically adjust a white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based shooting, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to prevent abnormal power-off caused by a low temperature.

The touch sensor 180K is also referred to as a "touch panel". The touch sensor 180K may be disposed on the display 194, and the touch sensor 180K and the display 194 form a touchscreen, which is also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt or a touch vibration feedback. For example, touch operations performed on different applications (for example, photographing and audio playback) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. A touch vibration feedback effect may be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be also compatible to different types of SIM cards. The SIM card interface 195 may be also compatible to an external memory card. The electronic device 100 interacts with a network through the SIM card, to implement functions such as conversation and data communication. In some embodiments, the electronic device 100 uses an embedded SIM (embedded SIM, eSIM) card, that is, an embedded SIM card. The eSIM card may be embedded into the electronic device 100, and cannot be separated from the electronic device 100.

It should be understood that a calling card in this embodiment of this application includes but is not limited to a SIM card, an eSIM card, a universal subscriber identity module (universal subscriber identity module, USIM), a universal integrated circuit card (universal integrated circuit card, UICC), and the like.

A software system of the electronic device 100 may use a layered architecture, an event-driven architecture, a microkernel architecture, a micro service architecture, or a cloud architecture. In embodiments of this application, an Android system with a layered architecture is used as an example to describe the software structure of the electronic device 100.

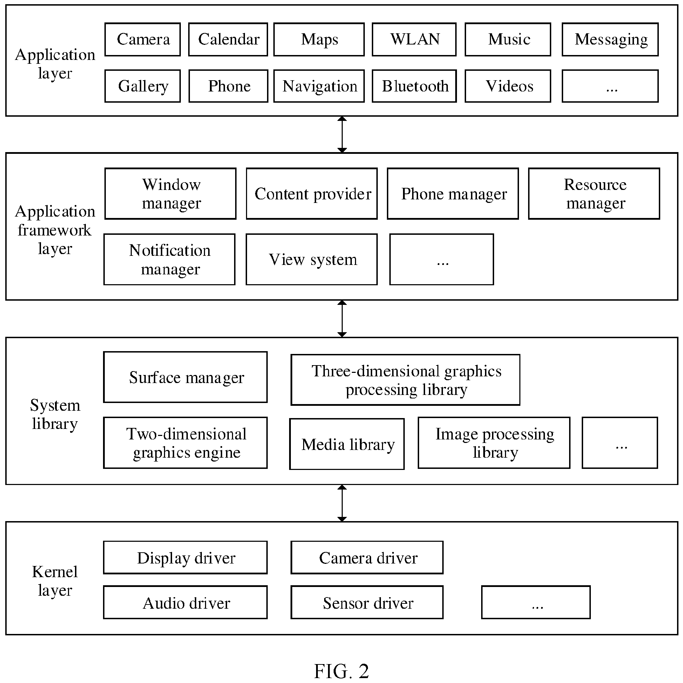

FIG. 2 is a block diagram of the software structure of the electronic device 100 in this embodiment of this application. In the layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, and Messaging.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history and a browsing bookmark, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to notify download completion, provide a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer are run on the virtual machine. The virtual machine executes Java files at the application layer and the application framework layer as binary files. The virtual machine is configured to implement functions such as object life cycle management, stack management, thread management, security and exception management, and garbage collection.

The system library may include a plurality of function modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and HarmonyOS.

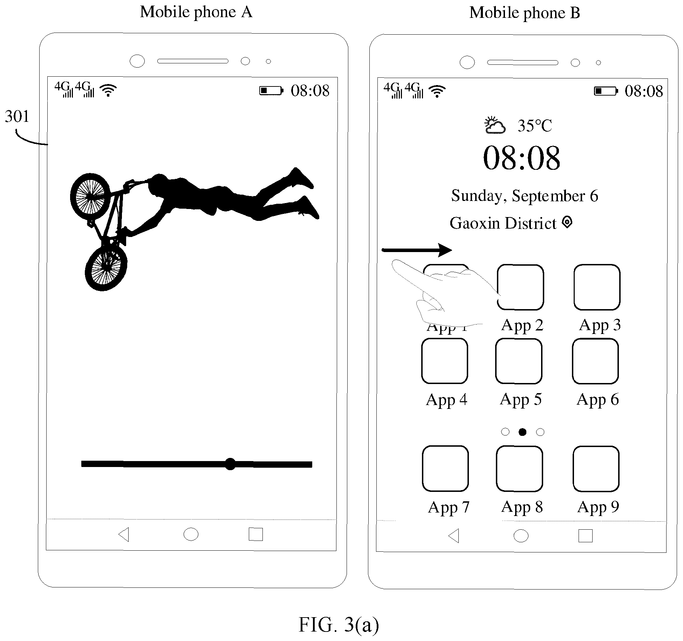

FIG. 3(a) to FIG. 3(d) show a set of graphical user interfaces (graphical user interface, GUI) according to an embodiment of this application.

With reference to GUIs shown in FIG. 3(a), a mobile phone A displays a playback interface of a video application and a video playback image 301 is displayed on the playback interface, and a mobile phone B displays a desktop of the mobile phone B in this case.

After the mobile phone B approaches the mobile phone A, the mobile phone A and the mobile phone B may perform networking in a near field wireless connection manner. A networking mode includes but is not limited to access point (access point, AP) networking and peer-to-peer (peer-to-peer, P2P) networking. In the AP networking, devices connected to a same AP (for example, a home Wi-Fi router) may communicate with each other through an AP device, to form many-to-many networking. For example, the mobile phone A and the mobile phone B may be located in a same home router. When the mobile phone B approaches the mobile phone A, the mobile phone A may use a received signal strength indicator (received signal strength indicator, RSSI) technology to calculate a distance between the device A and the device B based on strength of a received signal. When the distance is less than or equal to a preset distance, the mobile phone A and the mobile phone B may perform AP networking.

Wi-Fi direct (Wi-Fi direct) may also be referred to as Wi-Fi peer-to-peer (Wi-Fi peer-to-peer, Wi-Fi P2P), and is a peer-to-peer connection manner. In the Wi-Fi P2P, a plurality of Wi-Fi devices can form a peer-to-peer network (peer-to-peer network, P2P network) without an access point (access point, AP) to communicate with each other. One station (station, STA) may function as a conventional AP, and is referred to as a group owner (group owner, GO); and another STA may be referred to as a group client (group client, GC), and the GC may be connected to the GO like being connected to an AP. One STA may play a role of a GO (that is, act as an AP), and another STA may play a role of a GC. In this embodiment of this application, when a device approaches another device, a left device may be a GO and a right device may be a GC by default. For example, the mobile phone A may serve as a GO, and the mobile phone B may serve as a GC. Alternatively, when a device detects a rightward slide operation of a user, the device may serve as a GC and may select another left device of the device as a GO; or when a device detects a leftward slide operation of a user, the device may serve as a GC and may select another right device of the device as a GO.

To construct a P2P network, an electronic device first needs to be able to scan another electronic device through a P2P protocol, and this process is referred to as a discovery phase; and establishment of a P2P connection can be triggered only after the discovery. After the mobile phone B approaches the mobile phone A, the mobile phone A may use the RSSI technology to calculate the distance between the device A and the device B based on an RSSI. When the distance is less than or equal to the preset distance, the mobile phone A and the mobile phone B may perform P2P networking.

The Wi-Fi P2P technology is a basis of an upper-layer service. Currently, P2P applications established over P2P mainly include a Miracast application and a WLAN direct application. In a Miracast application scenario, an electronic device supporting P2P may discover, through scanning, a large-screen device supporting P2P and is connected to the large-screen device, and then directly send resources such as a video and a picture of the electronic device to the large-screen device for display. The P2P technology greatly enriches experience of the Wi-Fi technology.

When the mobile phone B detects a rightward slide operation of the user on the desktop, the mobile phone B sends indication information to the mobile phone A, where the indication information indicates that the mobile phone B expects to enter a full-screen mode.

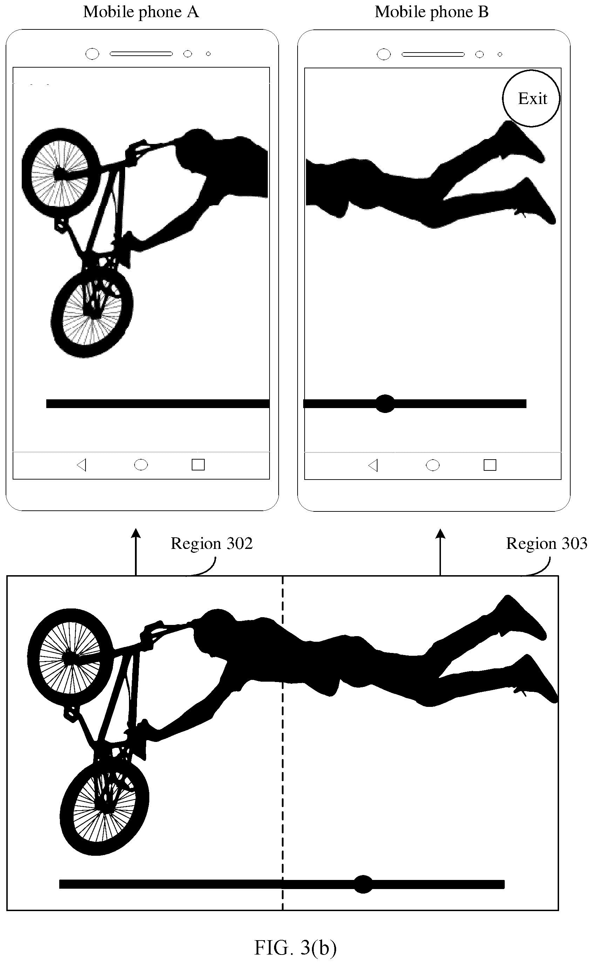

With reference to GUIs shown in FIG. 3(b), after the mobile phone A receives the indication information sent by the mobile phone B, the mobile phone A may enlarge a size of a canvas displayed on a current playback interface by one time. The mobile phone A may crop the canvas that is enlarged by one time, to obtain two regions (a region 302 and a region 303) of a same size. The mobile phone A may display a canvas in the region 302 through a display and project a canvas in the region 303 to the mobile phone B, so that the mobile phone B displays the canvas in the region 303 through a display.

In an embodiment, a display interface of the mobile phone B further includes an exit control. When the mobile phone B detects that the user taps the exit control, the mobile phone B may send indication information to the mobile phone A, where the indication information indicates the mobile phone A to exit a full-screen mode.

In an embodiment, the exit control may be drawn by the mobile phone B. After the mobile phone A and the mobile phone B enter a full-screen mode, the exit control may be drawn and displayed through the display of the mobile phone B.

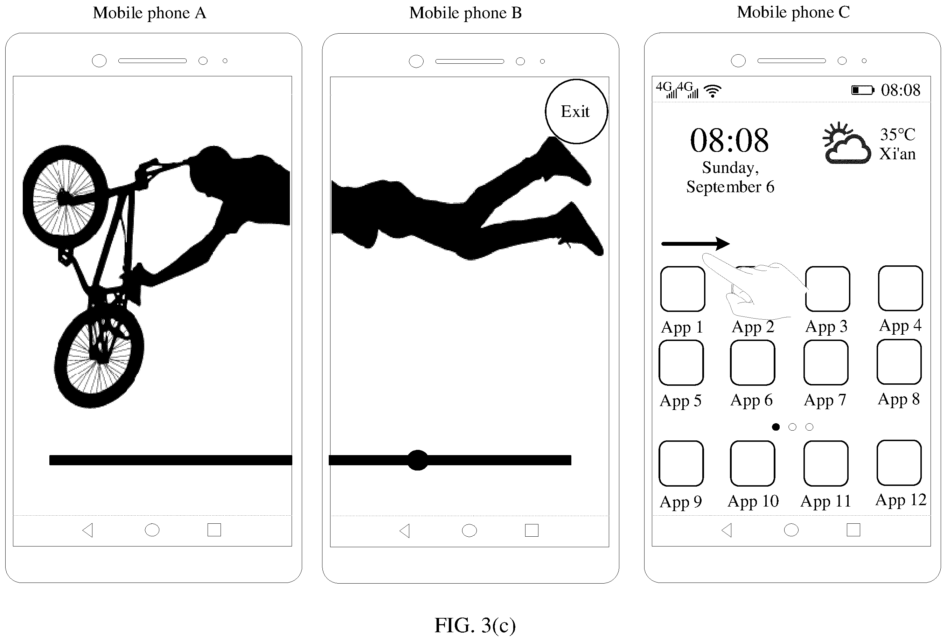

With reference to GUIs shown in FIG. 3(c), when a mobile phone C approaches the mobile phone A, the mobile phone A, the mobile phone B, and the mobile phone C may perform AP networking or P2P networking. When the mobile phone C detects a rightward slide operation of the user, the mobile phone C may send indication information to the mobile phone A, where the indication information indicates that the mobile phone C expects to enter a full-screen mode.

In an embodiment, when the mobile phone C approaches the mobile phone B, the mobile phone B may determine, through RSSI ranging, that a distance between the mobile phone C and the mobile phone B is less than or equal to a preset distance, and the mobile phone A, the mobile phone B, and the mobile phone C may perform AP networking, or the mobile phone A, the mobile phone B, and the mobile phone C may perform P2P networking.

In an embodiment, when the mobile phone C approaches the mobile phone B, the mobile phone A and the mobile phone B may respectively determine a distance between the mobile phone A and the mobile phone C and a distance between the mobile phone B and the mobile phone C through RSSI ranging. When the distance between the mobile phone A and the mobile phone C is less than or equal to a first preset distance and the distance between the mobile phone B and the mobile phone C is less than or equal to a second preset distance, the mobile phone A, the mobile phone B, and the mobile phone C may perform AP networking, or the mobile phone A, the mobile phone B, and the mobile phone C may perform P2P networking.

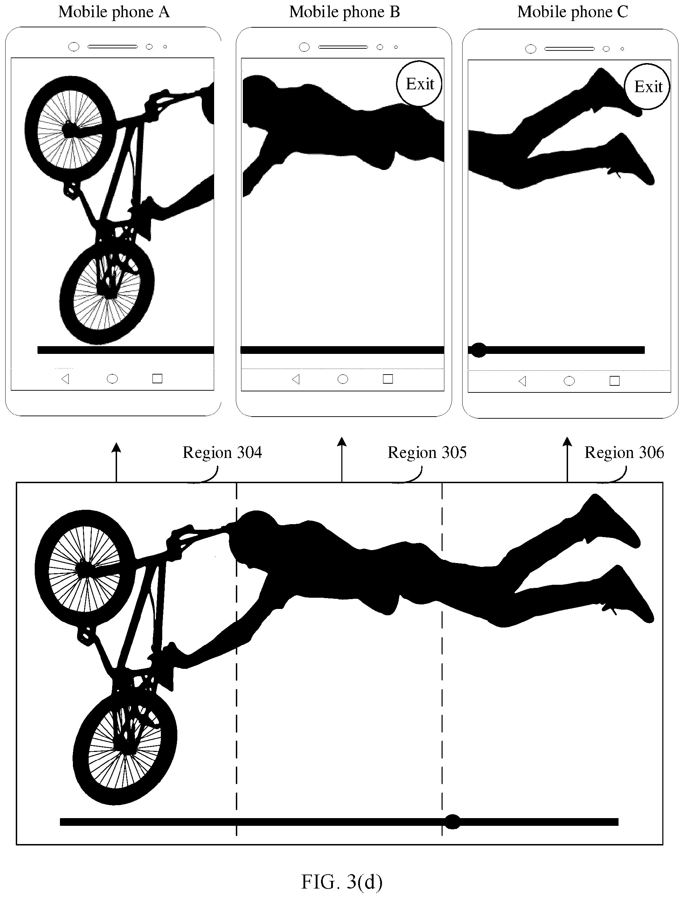

With reference to GUIs shown in FIG. 3(d), after the mobile phone A receives the indication information sent by the mobile phone C, the mobile phone A may enlarge a size of a canvas displayed on a current playback interface by two times. The mobile phone A may crop the canvas that is enlarged by two times, to obtain three regions (a region 304, a region 305, and a region 306) of a same size. The mobile phone A may display a canvas in the region 304 through a display, and the mobile phone A may project a canvas in the region 305 to the mobile phone B and project a canvas in the region 306 to the mobile phone C, so that the mobile phone B displays the canvas in the region 305 through a display and the mobile phone C displays the canvas in the region 306 through a display.

In an embodiment, a display interface of the mobile phone C further includes an exit control. When the mobile phone C detects that the user taps the exit control, the mobile phone C may send indication information to the mobile phone A, where the indication information indicates the mobile phone A to exit a full-screen mode.

In an embodiment, the exit control may be drawn by the mobile phone C. After the mobile phone A, the mobile phone B, and the mobile phone C enter a full-screen mode, the mobile phone C may draw the exit control and display the exit control through the display of the mobile phone C. In this case, both the mobile phone B and the mobile phone C may include an exit control.

In this embodiment of this application, in the near field wireless connection manner, a plurality of devices may be spliced to obtain a larger screen without an additional hardware device. A source (source) device may dynamically modify a size of a display canvas, and cropped canvases are distributed to sink (sink) devices for display, thereby improving user experience.

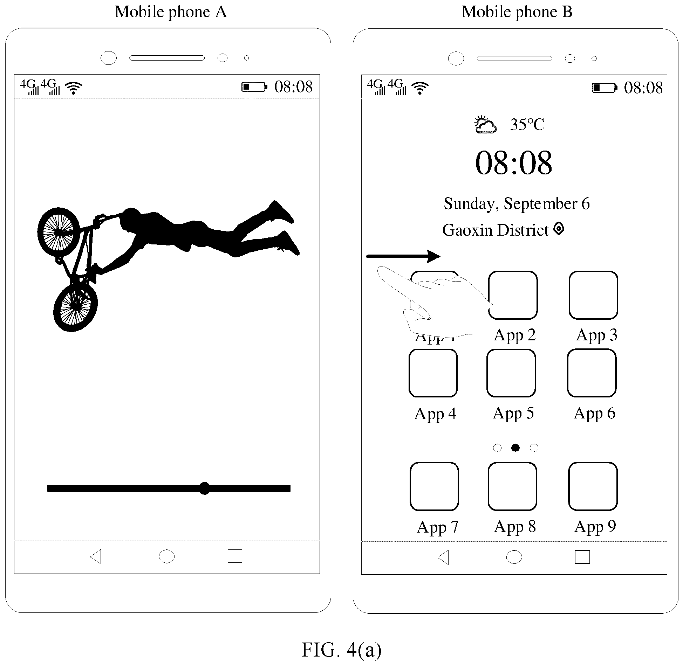

With reference to FIG. 3(a) to FIG. 3(d), the foregoing shows a manner in which after the mobile phone A enlarges a canvas, a canvas size is evenly divided based on a quantity of a plurality of devices, and then canvases are wholly presented on devices, and this manner may also be considered as a segmentation manner. Considering that there is a spacing between the mobile phone A and the mobile phone B or between the mobile phone B and the mobile phone C, after the mobile phone A enlarges the canvas, a seam between devices is considered as a mask element, and the canvas is partially blocked by the mask element. The mobile phone A may alternatively process the enlarged canvas in a mask manner. With reference to GUIs shown in FIG. 4(a) to FIG. 4(d), the following describes a process of processing in a mask manner.

With reference to GUIs shown in FIG. 4(a), a mobile phone A displays a playback interface of a video application and a video playback image is displayed on the playback interface, and a mobile phone B displays a desktop of the mobile phone B in this case.

After the mobile phone B approaches the mobile phone A, the mobile phone A and the mobile phone B may perform networking in a near field wireless connection manner. When the mobile phone B detects a rightward slide operation of a user on the desktop, the mobile phone B sends indication information to the mobile phone A, where the indication information indicates that the mobile phone B expects to enter a full-screen mode.

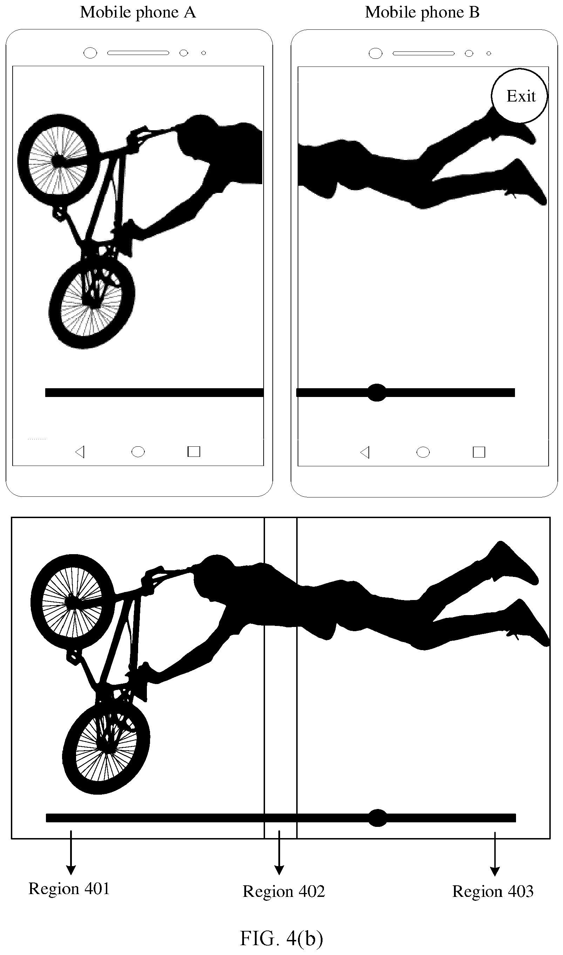

With reference to GUIs shown in FIG. 4(b), after the mobile phone A receives the indication information sent by the mobile phone B, the mobile phone A may enlarge a size of a canvas displayed on a current playback interface by one time. The mobile phone A may crop, based on a distance between the mobile phone A and the mobile phone B, the canvas that is enlarged by one time, to obtain canvases in a region 401, a region 402, and a region 403. The mobile phone A may display a canvas in the region 401 through a display and project a canvas in the region 403 to the mobile phone B, so that the mobile phone B displays the canvas in the region 403 through a display.

A pixel value of the region 402 is determined based on the distance between the mobile phone A and the mobile phone B. In a possible implementation, if a physical size of a screen of the mobile phone A is X (6 cm), a screen resolution is M (1080)×N (2340). Assuming that a physical size of a width of the region 402 is Y (for example, 0.5 cm), a pixel value $Z=(Y/X) \times M=90$, namely, 90 pixels, need to be cropped. In this embodiment of this application, the physical size of the width of the region 402 may be obtained through calculation by the mobile phone A by measuring the distance between the mobile phone A and the mobile phone B based on an RSSI; or the physical size of the width of the region 402 may be a sum of physical frame sizes of the mobile phone A and the mobile phone B when the mobile phone A and the mobile phone B are wholly attached.

In an embodiment, if the distance between the mobile phone A and the mobile phone B is greater than a preset distance (for example, 3 cm), the mobile phone A may crop the enlarged canvas in a segmentation manner; or if the distance between the mobile phone A and the mobile phone B is less than or equal to the preset distance, the mobile phone A may crop the enlarged canvas in a mask manner.

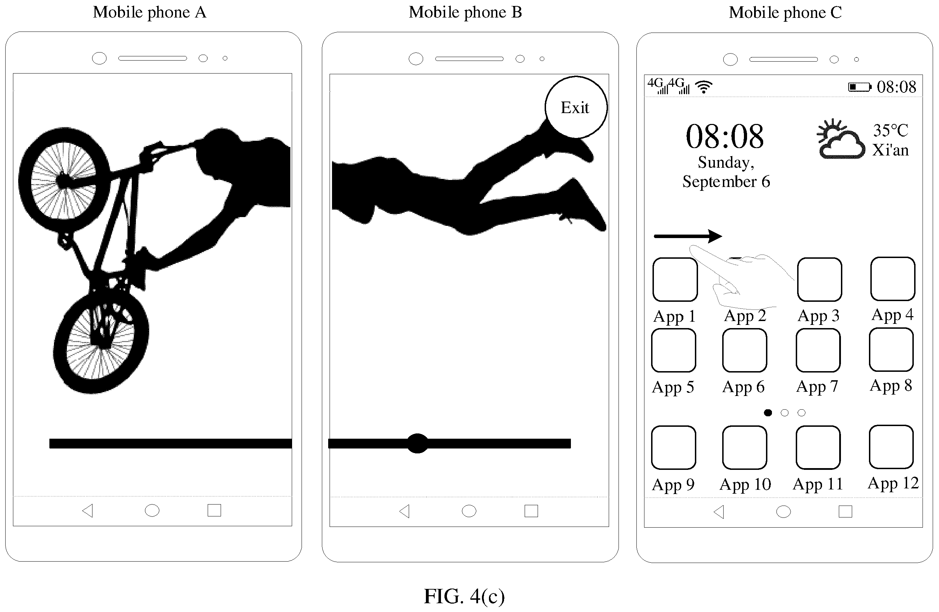

With reference to GUIs shown in FIG. 4(c), when a mobile phone C approaches the mobile phone B, the mobile phone A, the mobile phone B, and the mobile phone C may perform AP networking or P2P networking. When the mobile phone C detects a rightward slide operation of the user, the mobile phone C may send indication information to the mobile phone A, where the indication information indicates that the mobile phone C expects to enter a full-screen mode.

In an embodiment, the mobile phone C may further indicate a distance between the mobile phone B and the mobile phone C to the mobile phone A.

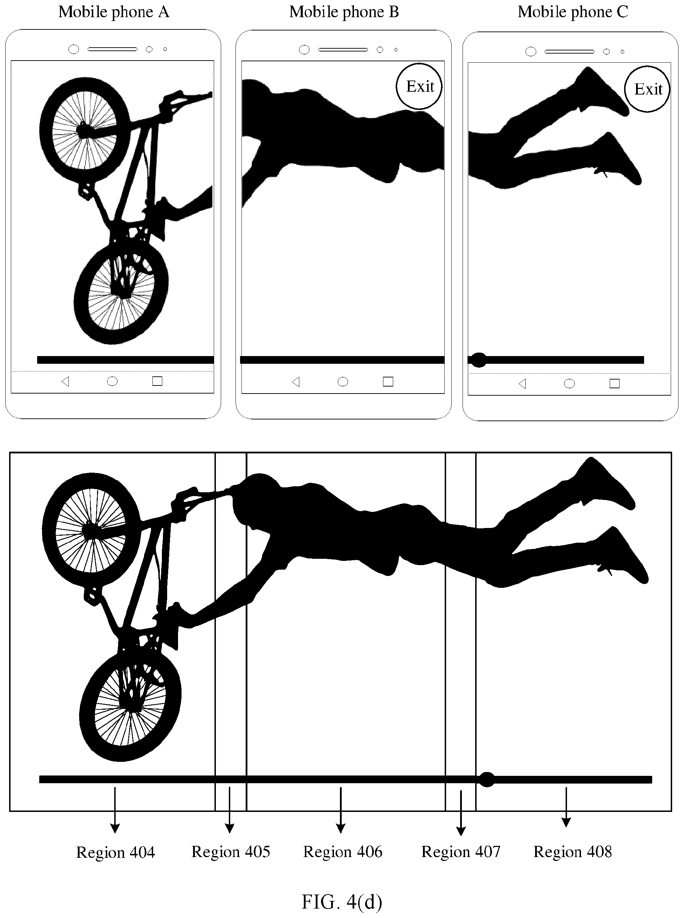

With reference to GUIs shown in FIG. 4(d), after the mobile phone A receives the indication information sent by the mobile phone C, the mobile phone A may enlarge a size of a canvas displayed on a current playback interface by two times. The mobile phone A may crop, based on the distance between the mobile phone A and the mobile phone B and the distance between the mobile phone B and the mobile phone C, the canvas that is enlarged by two times. As shown in FIG. 4(d), the mobile phone A may crop the canvas that is enlarged by two times, to obtain a region 404, a region 405, a region 406, a region 407, and a region 408. Pixel values of the region 405 and the region 407 may be determined based on the distance between the mobile phone A and the mobile phone B and the distance between the mobile phone B and the mobile phone C. For a specific determining process, refer to the descriptions of the foregoing embodiment. For brevity, details are not described herein again. The mobile phone A may display a canvas in the region 404 through a display, and project a canvas in the region 406 to the mobile phone B and project a canvas in the region 408 to the mobile phone C, so that the mobile phone B displays the canvas in the region 406 through a display and the mobile phone C displays the canvas in the region 408 through a display.

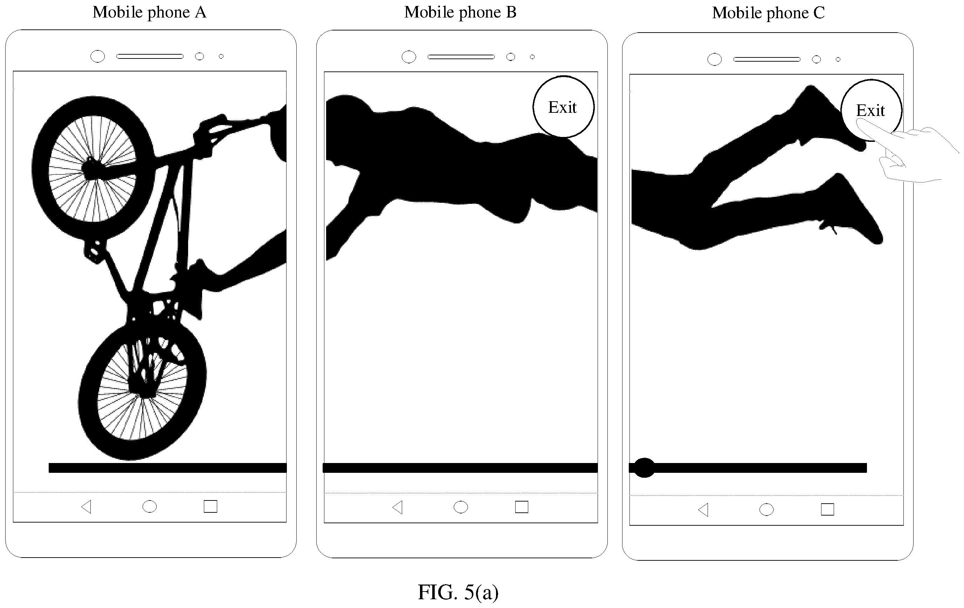

The foregoing separately describes, by using FIG. 3(a) to FIG. 3(d) and FIG. 4(a) to FIG. 4(d), processes of cropping a canvas in a segmentation manner and a mask manner. With reference to FIG. 5(a) to FIG. 5(c), the following describes a process of exiting a full-screen mode among a plurality of devices. FIG. 5(a) to FIG. 5(c) show another set of GUIs according to an embodiment of this application.

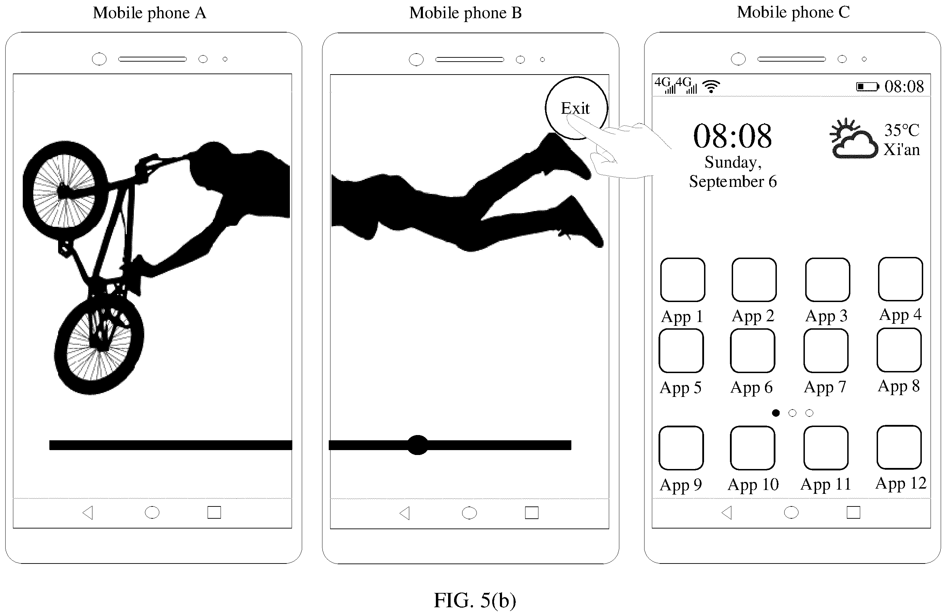

With reference to GUIs shown in FIG. 5(a), a mobile phone A, a mobile phone B, and a mobile phone C are currently in a full-screen mode. When detecting that a user taps an exit control, the mobile phone C displays a GUI shown in FIG. 5(b).

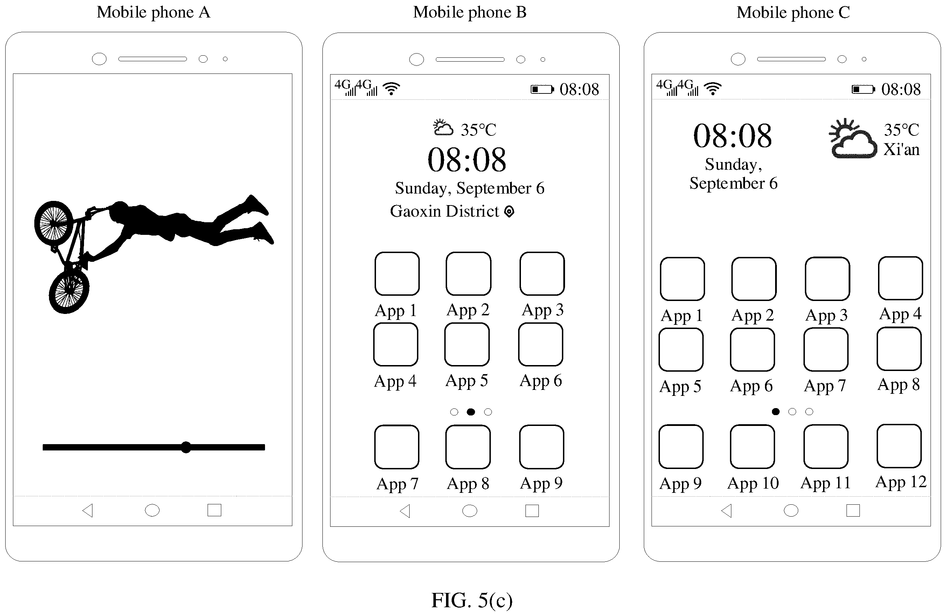

With reference to GUIs shown in FIG. 5(b), in response to detecting that the user taps the exit control, the mobile phone C may send indication information to the mobile phone A, where the indication information indicates the mobile phone C to exit a full-screen mode. After receiving the indication information, the mobile phone A may enlarge a size of a canvas by one time, instead of originally enlarging the size of the canvas by two times. The mobile phone A may crop the canvas that is enlarged by one time, to obtain two regions (for example, a region 302 and a region 303 shown in FIG. 3(b)) of a same size. The mobile phone A may display a canvas in the region 302 through a display and project a canvas in the region 303 to the mobile phone B, so that the mobile phone B displays the canvas in the region 303 through a display. The mobile phone C exits a full-screen mode, and displays a desktop of the mobile phone C. When detecting an operation of tapping an exit control by the user, the mobile phone B may display a GUI shown in FIG. 5(c).

With reference to GUIs shown in FIG. 5(c), in response to detecting that the user taps the exit control, the mobile phone B may send indication information to the mobile phone A, where the indication information indicates the mobile phone B to exit a full-screen mode. After receiving the indication information, the mobile phone A may not enlarge the size of the canvas, instead of originally enlarging the size of the canvas by one time. In this case, the mobile phone A may display a video playback interface, and the mobile phone B exits a full-screen mode and displays a desktop of the mobile phone B.

It should be further understood that, in the GUIs shown in FIG. 5(a), the mobile phone A processes, in a segmentation manner, the canvas that is enlarged by two times. In this case, after receiving the indication that the mobile phone C exits a full-screen mode, the mobile phone A may continue to process, in a segmentation manner, the canvas that is enlarged by one time. In an embodiment, if the mobile phone A processes, in a mask manner, the canvas that is enlarged by two times, after receiving the indication that the mobile phone C exits a full-screen mode, the mobile phone A may continue to process, in a mask manner, the canvas that is enlarged by one time.

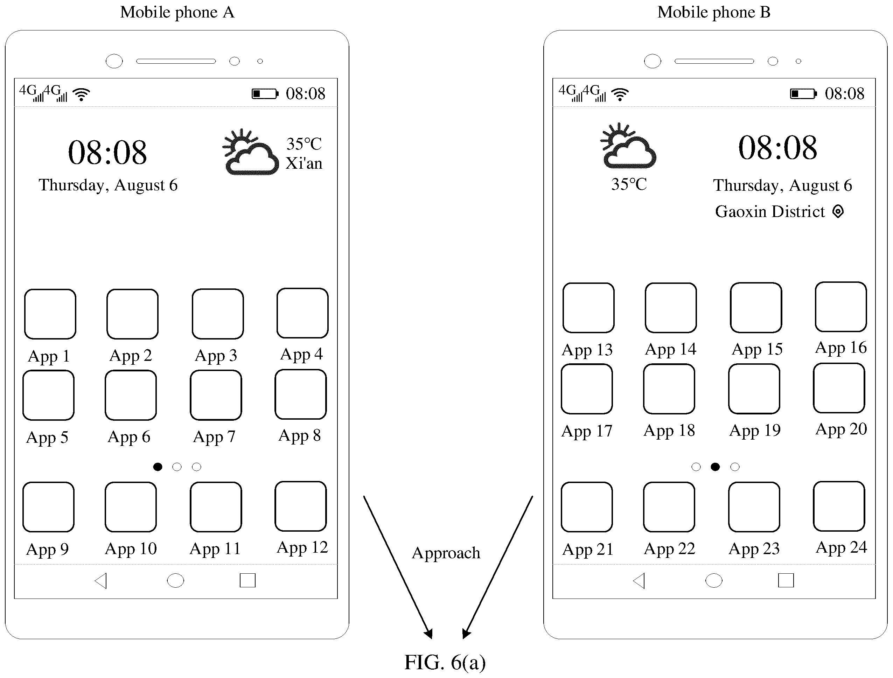

FIG. 6(a) to FIG. 6(e) show another set of GUIs according to an embodiment of this application.

With reference to GUIs shown in FIG. 6(a), a distance between a mobile phone A and a mobile phone B is greater than a preset distance, the mobile phone A displays a desktop of the mobile phone A, and the mobile phone B displays a desktop of the mobile phone B.

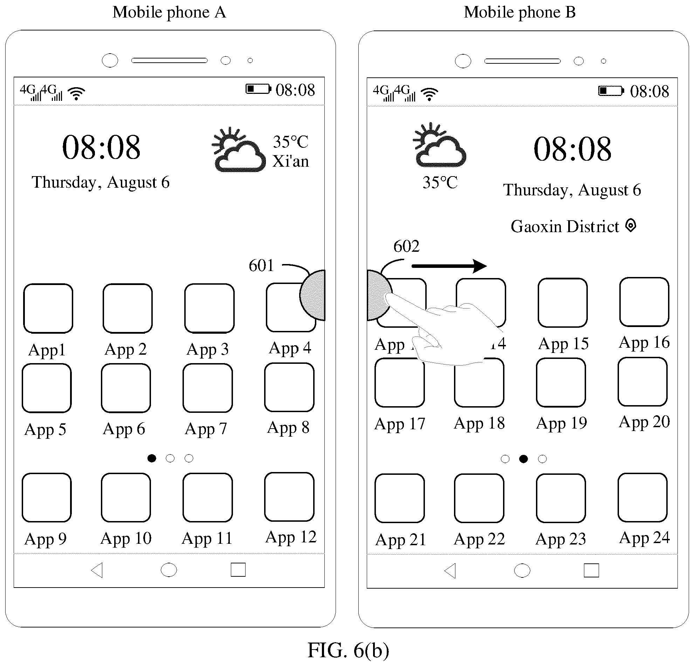

When the mobile phone A and the mobile phone B approach each other and the distance between the mobile phone A and the mobile phone B is less than or equal to the preset distance, the mobile phone A and the mobile phone B display GUIs shown in FIG. 6(b).

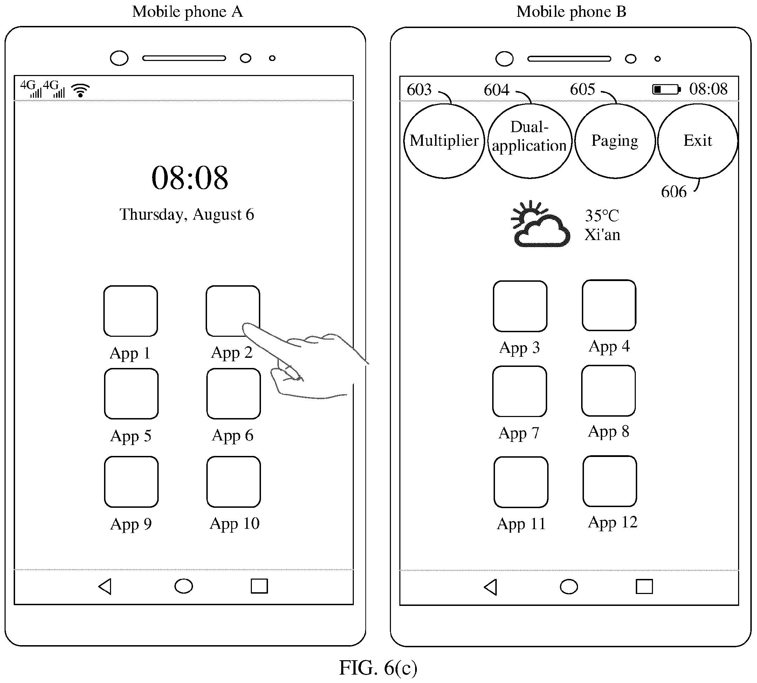

With reference to the GUIs shown in FIG. 6(b), when the distance between the mobile phone A and the mobile phone B is less than or equal to the preset distance, a control 601 is displayed on the desktop of the mobile phone A, and a control 602 is displayed on the desktop of the mobile phone B. When detecting an operation of dragging the control 602 rightwards by a user, the mobile phone B displays a GUI shown in FIG. 6(c).

With reference to GUIs shown in FIG. 6(c), in response to detecting the operation of dragging the control 602 rightwards by the user, the mobile phone B sends indication information to the mobile phone A, where the indication information indicates that the mobile phone B expects to enter a full-screen mode. After receiving the indication information, the mobile phone A may enlarge a canvas on a current interface (the desktop of the mobile phone A) by one time. The mobile phone A may crop the canvas that is enlarged by one time, to obtain two regions (a left region and a right region) of a same size. The mobile phone A may display a canvas (including a network standard, signal strength, and a Wi-Fi connection status in a status bar, time (08:08), date information (Thursday, August 6), and icons of App 1, App 2, App 5, App 6, App 9, and App 10) in the left region through a display and project a canvas (including battery level information and time information (08:08) in a status bar, weather information (35°C), location information (Xi'an), and icons of App 3, App 4, App 7, App 8, App 11, and App 12) in the right region to the mobile phone B, so that the mobile phone B displays the canvas in the right region through a display. In addition, the mobile phone B may further include an icon 603 of a multiplier mode, an icon 604 of a dual-application mode, an icon 605 of a paging mode, and an exit control 606.

In an embodiment, the icon 603 of the multiplier mode, the icon 604 of the dual-application mode, the icon 605 of the paging mode, and the exit control 606 may be drawn by the mobile phone B. After receiving projected content of the mobile phone A, the mobile phone B may add the icons and the controls to the projected content.

In an embodiment, the icon 603 of the multiplier mode, the icon 604 of the dual-application mode, the icon 605 of the paging mode, and the exit control 606 may alternatively be drawn by the mobile phone A and displayed on the mobile phone A.

In an embodiment, the icon 603 of the multiplier mode, the icon 604 of the dual-application mode, and the icon 605 of the paging mode may be drawn by the mobile phone A and displayed on the mobile phone A, and the exit control 606 may be drawn by the mobile phone B and displayed on the mobile phone B.

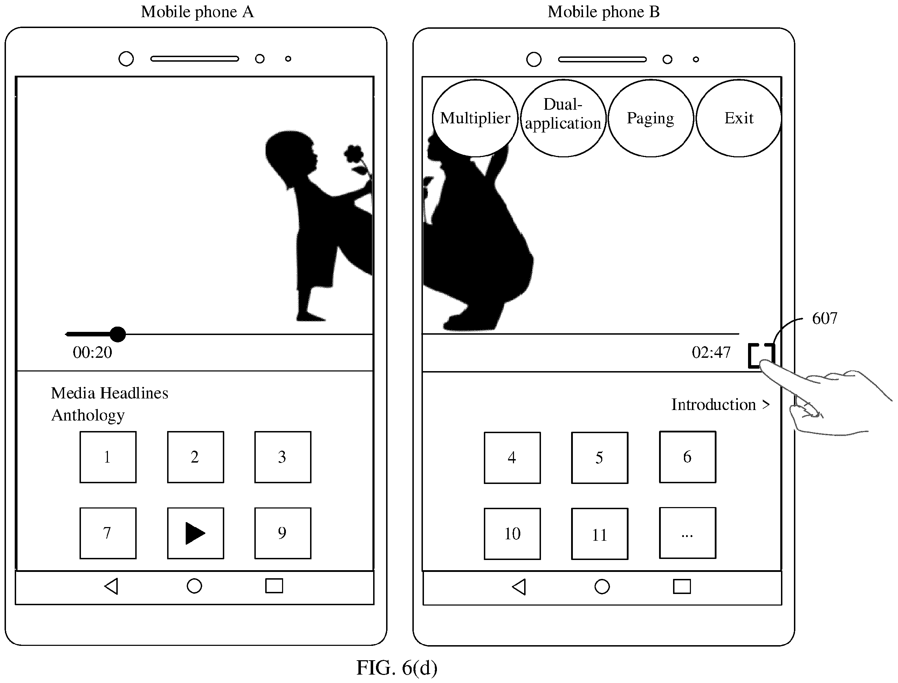

When detecting an operation of tapping an icon of App 2 by the user, the mobile phone A displays a GUI shown in FIG. 6(d). In response to detecting that the user taps the icon of App 2, the mobile phone A starts App 2, and simultaneously the mobile phone A enlarges, by one time, a canvas displayed by App 2 and then processes the canvas that is enlarged by one time. For display manners of the mobile phone A and the mobile phone B, refer to the descriptions of the foregoing embodiment. For brevity, details are not described herein again.

In this embodiment of this application, App 2 may be a video app.

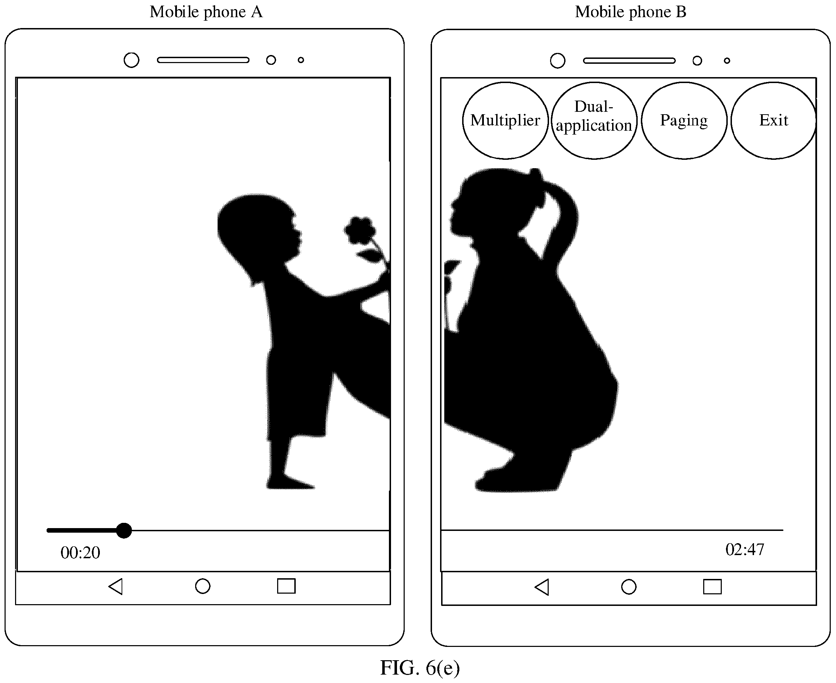

In GUIs shown in FIG. 6(e), when the mobile phone B detects an operation of tapping a control 607 by the user, the mobile phone B may send a touch event and coordinate information to the mobile phone A. The touch event indicates that the mobile phone B detects the tap operation of the user, and the coordinate information indicates coordinates when the mobile phone B detects the tapping by the user. The mobile phone A may determine, based on the touch event and the coordinate information, that the user taps a full-screen viewing control on the mobile phone B, to display video windows in full screen on the mobile phone A and the mobile phone B. It should be understood that, for a process in which the mobile phone A and the mobile phone B display the video windows in full screen, refer to the descriptions of the foregoing embodiment. For brevity, details are not described herein again.

It should be understood that, the mobile phone A shown in FIG. 6(a) to FIG. 6(e) may crop, in a segmentation manner, the canvas that is enlarged by one time, or the mobile phone A may crop, in a mask manner, the canvas that is enlarged by one time. For a specific implementation process, refer to the descriptions of the foregoing embodiment. For brevity, details are not described herein again.

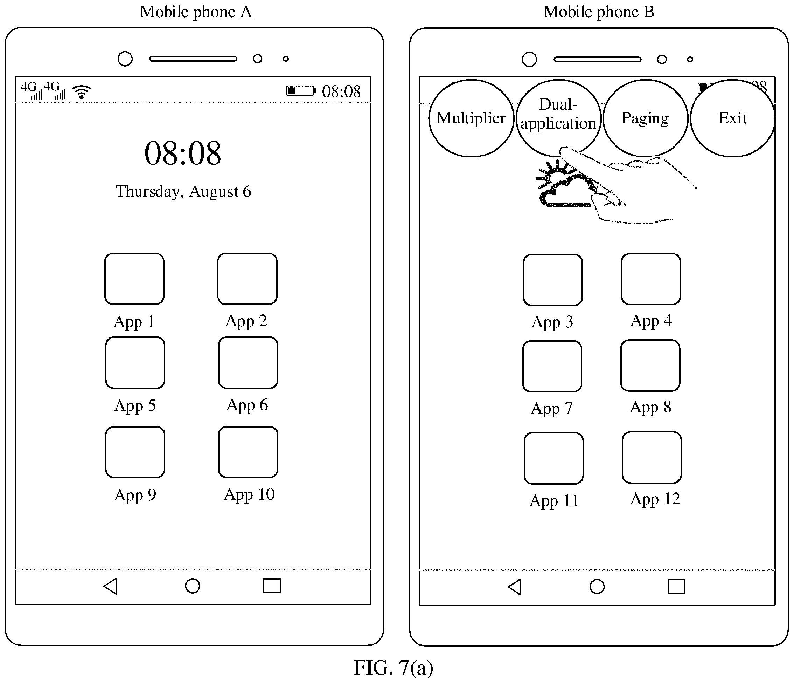

FIG. 7(a) to FIG. 7(d) show another set of GUIs according to an embodiment of this application. The GUIs show a process of switching from a full-screen mode to a dual-application mode.

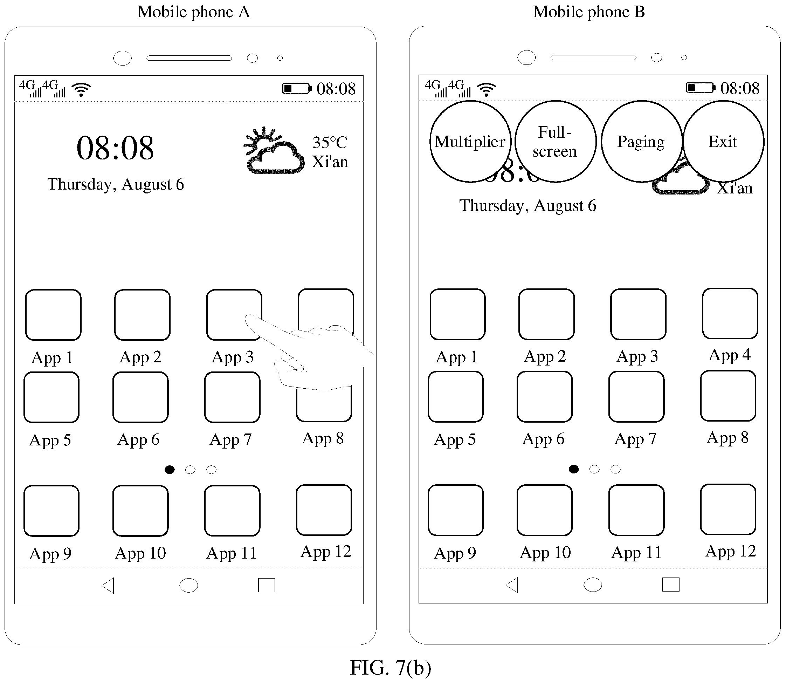

With reference to GUIs shown in FIG. 7(a), a mobile phone A and a mobile phone B are in a full-screen mode. When detecting an operation of tapping a dual-application mode by a user, the mobile phone B displays a GUI shown in FIG. 7(b).

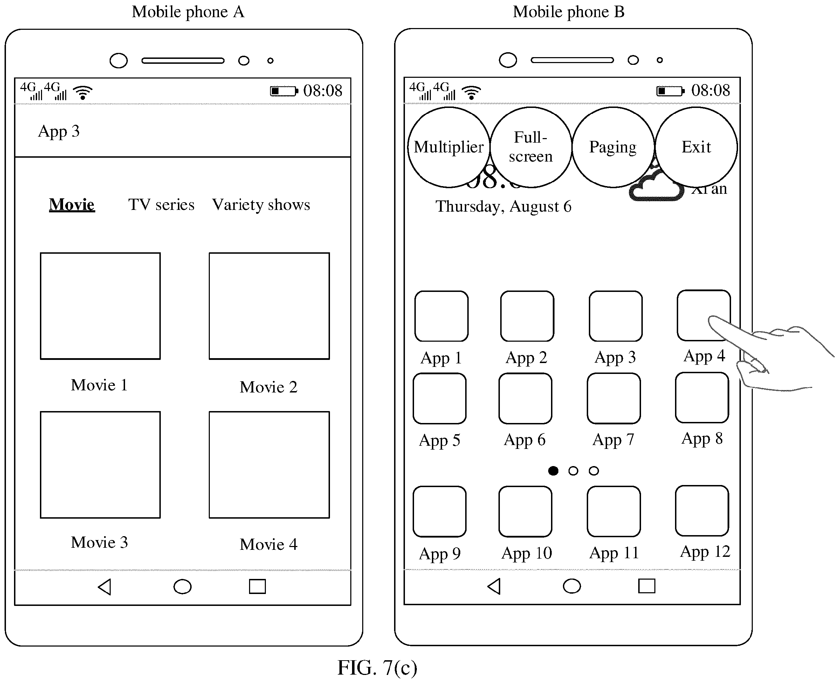

With reference to GUIs shown in FIG. 7(b), in response to detecting the operation of tapping an icon of the dual-application mode by the user, the mobile phone B may send indication information to the mobile phone A, where the indication information indicates that the mobile phone B detects that the user taps the icon of the dual-application mode. In response to receiving the indication information sent by the mobile phone A, the mobile phone A displays a desktop of the mobile phone A, and the mobile phone A sends a canvas corresponding to the desktop of the mobile phone A to the mobile phone B, so that the mobile phone B also displays the desktop of the mobile phone A. When detecting an operation of tapping an icon of App 3 by the user, the mobile phone A displays a GUI shown in FIG. 7(c).

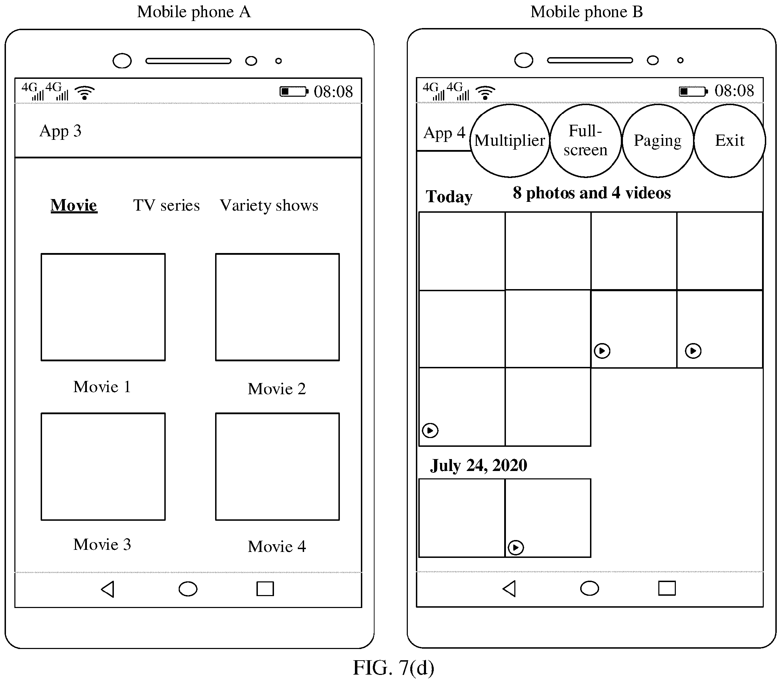

With reference to GUIs shown in FIG. 7(c), in response to detecting the operation of tapping the icon of App 3 by the user, the mobile phone A may display a display interface of App 3. In this case, the mobile phone B displays the desktop of the mobile phone A. When detecting an operation of tapping an icon of App 4 by the user, the mobile phone B displays a GUI shown in FIG. 7(d).

In this embodiment of this application, App 3 may be a video app, and App 4 may be a photo app.

With reference to GUIs shown in FIG. 7(d), in response to detecting the operation of tapping the icon of App 4 by the user, the mobile phone B may send a touch event and coordinate information to the mobile phone A. The touch event indicates that the mobile phone B detects the tap operation of the user, and the coordinate information indicates coordinates when the mobile phone B detects the tapping by the user. The mobile phone A may determine, based on the coordinate information, that the user taps the icon of App 4 on the mobile phone B. In this case, the mobile phone A may start App 4 in the background and project a display interface of App 4 to the mobile phone B, so that the mobile phone B displays the interface of App 4.

In this embodiment of this application, when the mobile phone A and the mobile phone B are in a dual-application mode, the user may respectively start, on the mobile phone A and the mobile phone B, different applications on the mobile phone A, thereby improving user experience. For example, the user may use the mobile phone A and the mobile phone B to respectively open a shopping App 1 and a shopping App 2, to compare prices of a commodity; or the user may use a video app on the mobile phone B to watch a video while using a social app on the mobile phone A to chat.

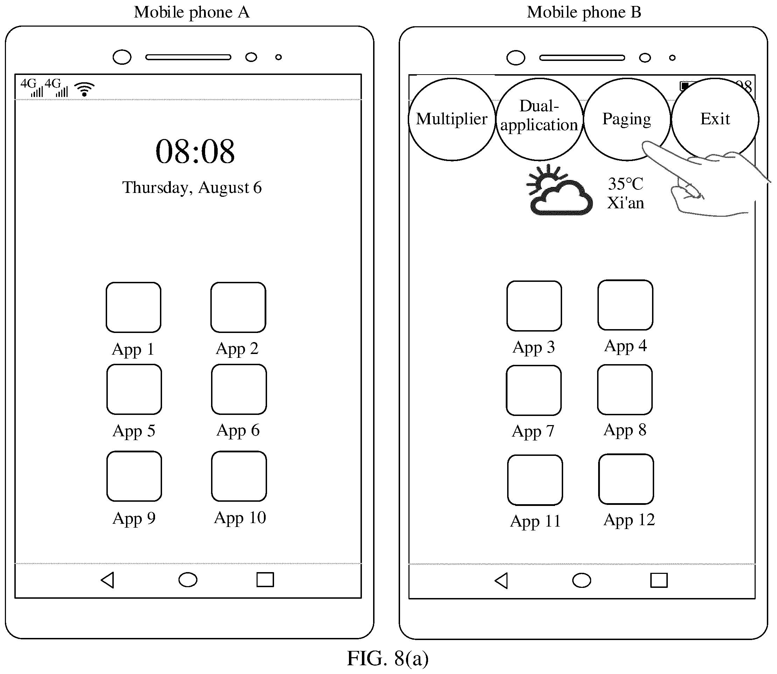

FIG. 8(a) to FIG. 8(c) show another set of GUIs according to an embodiment of this application. The GUIs show a process of switching from a full-screen mode to a paging mode.

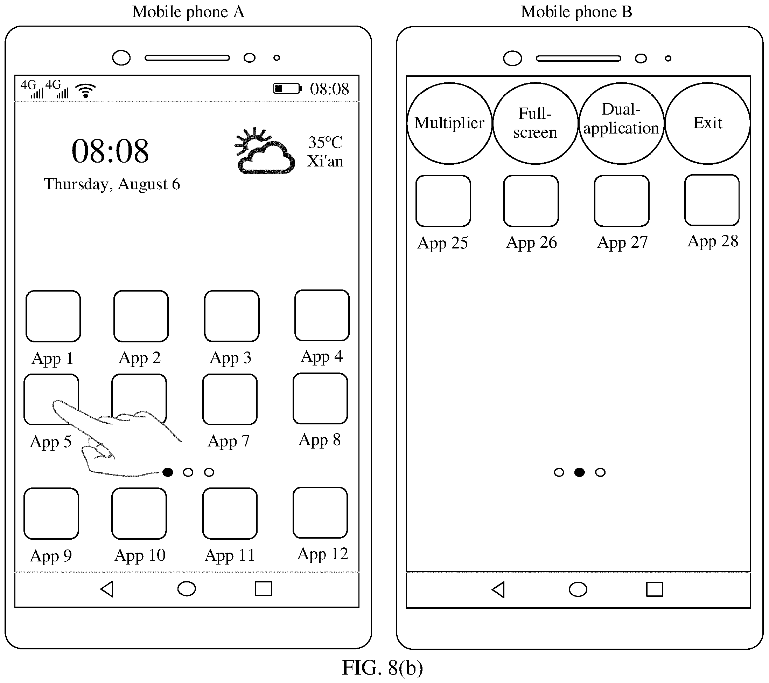

With reference to GUIs shown in FIG. 8(a), a mobile phone A and a mobile phone B are in a full-screen mode. When detecting an operation of tapping a paging mode by a user, the mobile phone B displays a GUI shown in FIG. 8(b).

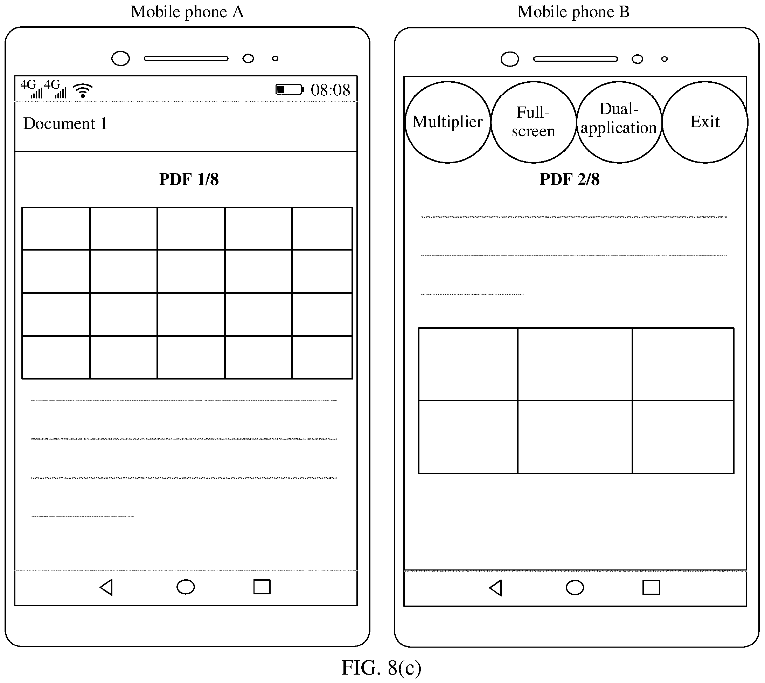

With reference to GUIs shown in FIG. 8(b), in response to detecting the operation of tapping an icon of the paging mode by the user, the mobile phone B may send indication information to the mobile phone A, where the indication information indicates that the user B detects that the user taps the icon of the paging mode. The mobile phone A may switch from a full-screen mode to a paging mode according to the indication information. The mobile phone A displays a desktop of the mobile phone A. The desktop of the mobile phone A includes three desktop pages, and the mobile phone A currently displays a first desktop page. The mobile phone A projects a canvas corresponding to a second desktop page of the mobile phone A to the mobile phone B, so that the mobile phone B displays the second desktop page of the mobile phone A. When detecting an operation of tapping an icon of App 5 by the user, the mobile phone A displays a GUI shown in FIG. 8(c).

With reference to GUIs shown in FIG. 8(c), in response to detecting the operation of tapping the icon of App 5 by the user, the mobile phone A may display a display interface of App 5. The display interface is a display interface of a document 1, and the document 1 includes eight pages. The mobile phone A may display content on a first page of the document 1, and simultaneously the mobile phone A may project content on a second page of the document 1 to the mobile phone B, so that the mobile phone B displays the content on the second page of the document 1.

In an embodiment, when the mobile phone A detects a slide operation (for example, upward slide) of the user on a display, the mobile phone A may display content on a third page of the document 1, and simultaneously the mobile phone A projects content on a fourth page of the document 1 to the mobile phone B, so that the mobile phone B displays the content on the fourth page of the document 1.

In this embodiment of this application, when the mobile phone A and the mobile phone B are in a paging mode, efficiency of browsing interface content by the user is improved, thereby improving user experience.

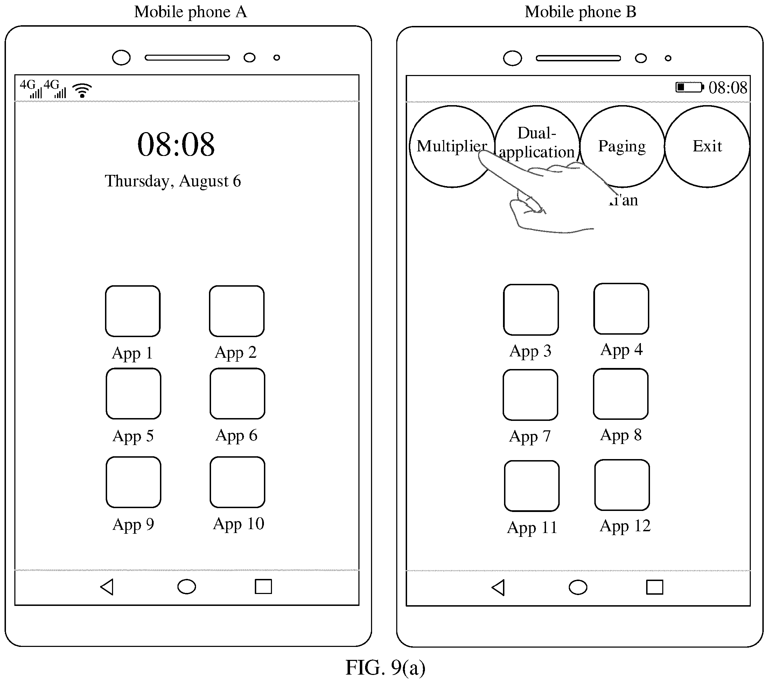

FIG. 9(a) to FIG. 9(f) show another set of GUIs according to an embodiment of this application. The GUIs show a process of switching from a full-screen mode to a multiplier mode.

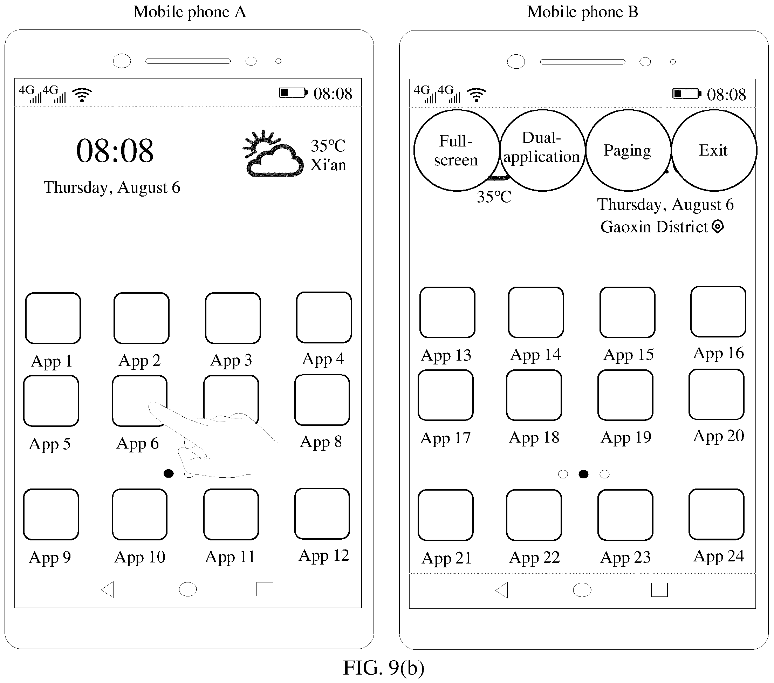

With reference to GUIs shown in FIG. 9(a), a mobile phone A and a mobile phone B are in a full-screen mode. When detecting an operation of tapping a multiplier mode by a user, the mobile phone B displays a GUI shown in FIG. 9(b).

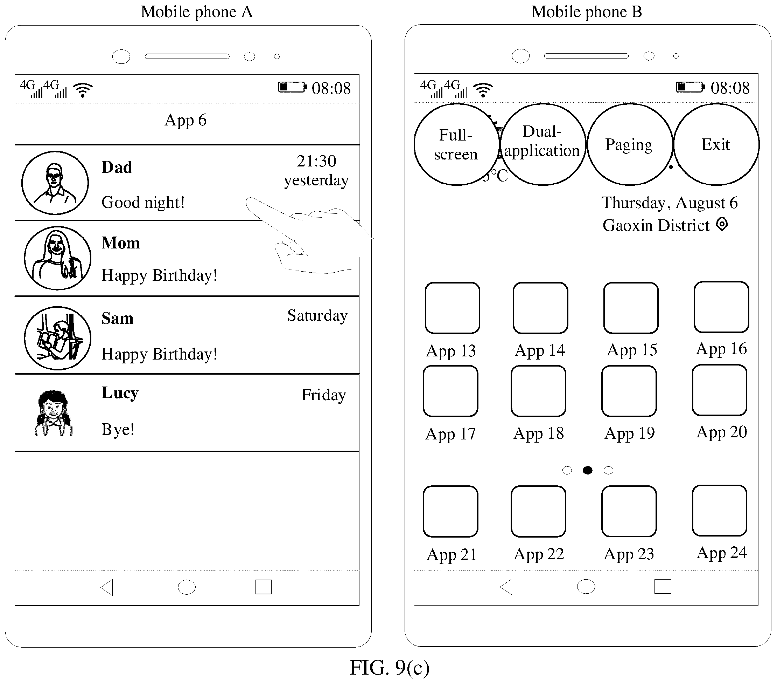

With reference to GUIs shown in FIG. 9(b), in response to detecting the operation of tapping an icon of the multiplier mode by the user, the mobile phone B may send indication information to the mobile phone A, where the indication information indicates that the mobile phone B detects that the user taps the icon of the multiplier mode. The mobile phone A may determine, according to the indication information, to switch from a full-screen mode to a multiplier mode. The mobile phone A displays a desktop of the mobile phone A, and the mobile phone B displays a desktop of the mobile phone B. When detecting an operation of tapping an icon of App 6 by the user, the mobile phone A displays a GUI shown in FIG. 9(c).

It should be understood that, as shown in FIG. 9(a), when the mobile phone A determines to switch from a full-screen mode to a multiplier mode, content displayed on the mobile phone B is not limited. The mobile phone B may display the desktop of the mobile phone B; or when the mobile phone A and the mobile phone B enter a multiplier mode, the mobile phone A may project a canvas corresponding to the desktop of the mobile phone A to the mobile phone B, so that the mobile phone B displays the desktop of the mobile phone A.

In an embodiment, the mobile phone A may display a first display interface of an application, and the mobile phone B may display the desktop of the mobile phone B. When the mobile phone B detects an operation in which the user performs sliding from left to right on a screen, the mobile phone B may send indication information to the mobile phone A, where the indication information may indicate the mobile phone B and the mobile phone A to perform splicing display in a multiplier mode. In response to receiving the indication information sent by the mobile phone B, the mobile phone A may continue to display the first display interface of the application, and simultaneously the mobile phone A may not send any image information to the mobile phone B, and the mobile phone B may continue to display the desktop of the mobile phone B; or in response to receiving the indication information sent by the mobile phone B, the mobile phone A may continue to display the first display interface of the application, and simultaneously the mobile phone A may send image information corresponding to the first display interface to the mobile phone B, so that the mobile phone B can display the first display interface; or the first display interface includes a first interface element, the first interface element is associated with another display interface of the application, and in response to receiving the indication information sent by the mobile phone B, the mobile phone A may continue to display the first display interface of the application, and simultaneously the mobile phone A may send image information corresponding to the second display interface to the mobile phone B. It should be understood that, when receiving the indication information, the mobile phone A may select any interface element from the display interface, or the mobile phone A may select an interface element in a specific orientation (for example, an upper left corner) on the interface. After selecting the interface element, the mobile phone A may send a display interface associated with the interface element to the mobile phone B, so that the mobile phone B displays the display interface corresponding to the interface element.

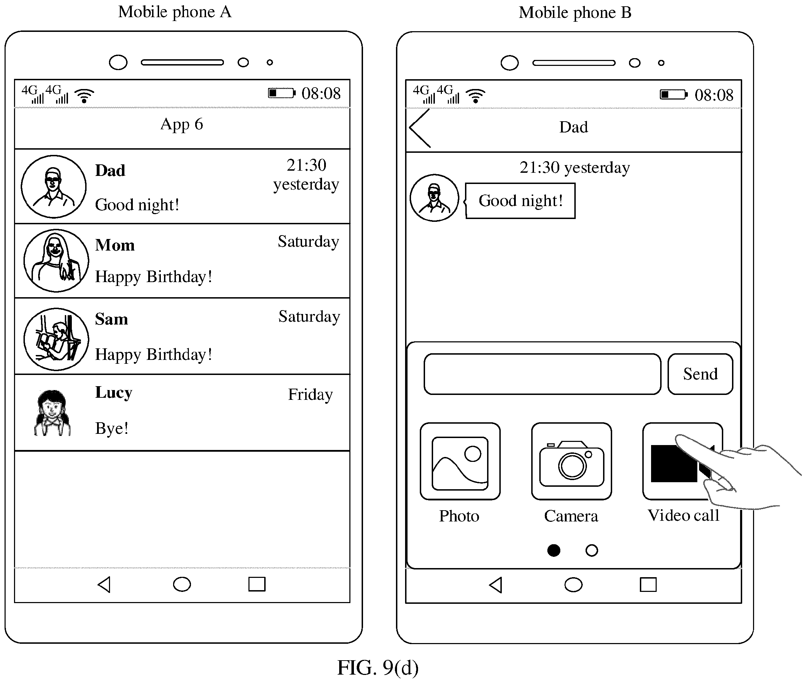

With reference to GUIs shown in FIG. 9(c), the mobile phone A may start App 6 in response to detecting an operation of tapping an icon of App 6 by the user. App 6 is a social application App. The mobile phone A displays a chat list between the user and a plurality of contacts, and the mobile phone B displays the desktop of the mobile phone B in this case. When detecting that the user taps a chat record between the user and a contact Dad, the mobile phone A displays a GUI shown in FIG. 9(d).

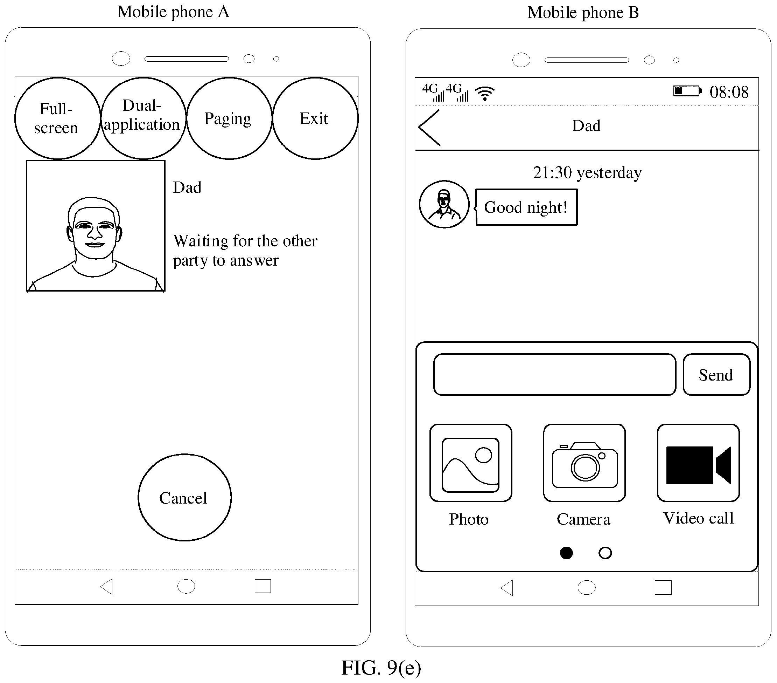

With reference to GUIs shown in FIG. 9(d), in response to detecting that the user taps the chat record between the user and the contact Dad, the mobile phone A displays the chat list between the user and the plurality of contacts, and the mobile phone A may project a chat interface between the user and the contact Dad to the mobile phone B, so that the mobile phone B displays the chat interface between the user and the contact Dad. The chat interface includes a text input box, a send control, a control for sending local photos, a control for sending real-time photos, and a video call control. When detecting an operation of tapping the video call control by the user, the mobile phone B displays a GUI shown in FIG. 9(e).

With reference to GUIs shown in FIG. 9(e), in response to detecting the operation of tapping the video call control by the user, the mobile phone B sends a touch event and coordinate information to the mobile phone A. The touch event indicates that the mobile phone B detects the tap operation of the user, and the coordinate information indicates coordinates when the mobile phone B detects the tapping by the user. The mobile phone A may determine, based on the coordinate information, that the user taps the video call control on the mobile phone B. The mobile phone A may display an interface of requesting the contact Dad to answer a video call.

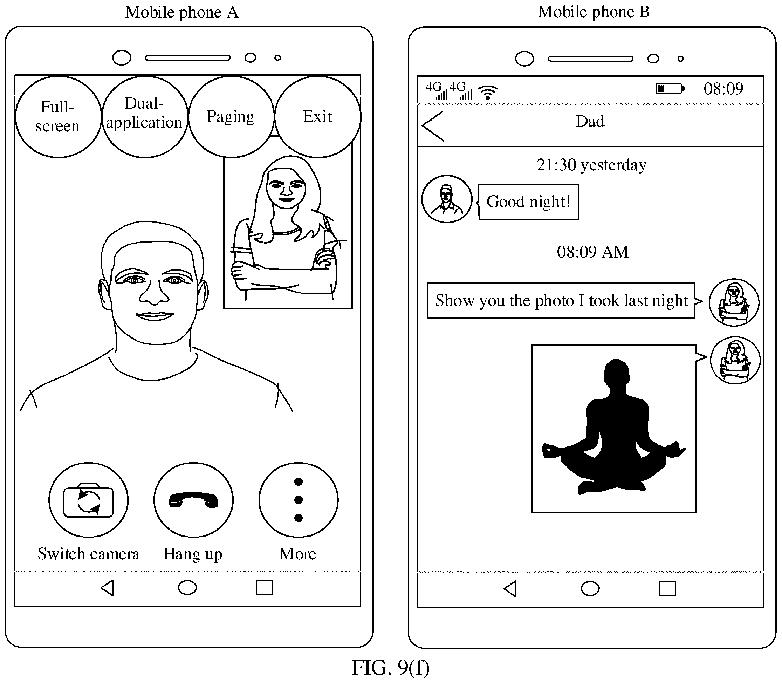

With reference to GUIs shown in FIG. 9(f), after the contact Dad accepts the video call request, the mobile phone A may display a video call interface between the user and the contact Dad, and the mobile phone B may display the chat interface between the user and the contact Dad in this case. When the mobile phone B detects text content entered by the user, the mobile phone B may send the text content to the mobile phone A, so as to complete a real reply to a message on the mobile phone A. After completing the real reply to the message, the mobile phone A may project an updated chat interface between the user and the contact Dad to the mobile phone B, so that the mobile phone B displays the updated chat interface between the user and the contact Dad.

When the mobile phone A displays the video chat interface between the user and the contact Dad, the user may chat with the contact Dad through the mobile phone B. The user may send text information (for example, "Show you the photo I took last night") and a photo to the contact Dad on the chat interface.

This embodiment of this application provides a manner of displaying upper-level and lower-level activity (activity) pages of an application in a multiplier mode, and the application may simultaneously display two activity pages through adjustment in this mode, thereby bringing better user experience during multi-device splicing.

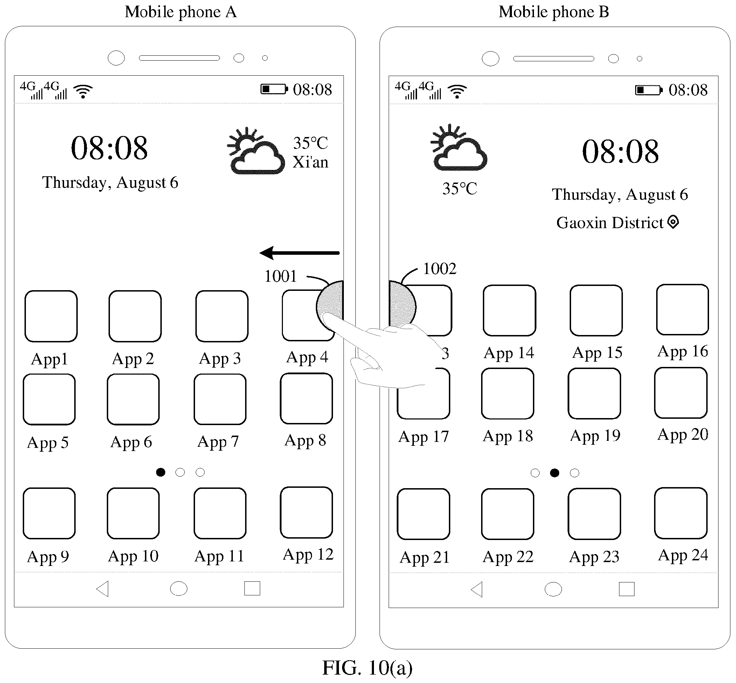

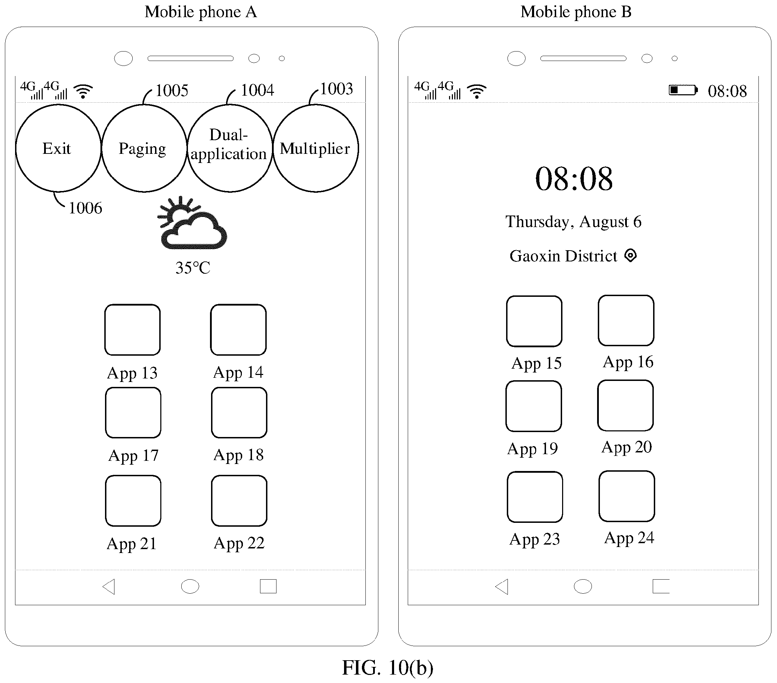

FIG. 10(a) and FIG. 10(b) show another set of GUIs according to an embodiment of this application.

With reference to GUIs shown in FIG. 10(a), when a distance between a mobile phone A and a mobile phone B is less than or equal to a preset distance, a control 1001 is displayed on a desktop of the mobile phone A, and a control 1002 is displayed on a desktop of the mobile phone B. When detecting an operation of dragging the control 1001 leftwards by a user, the mobile phone A displays a GUI shown in FIG. 10(b).

With reference to GUIs shown in FIG. 10(b), in response to detecting the operation of dragging the control 1001 leftwards by the user, the mobile phone A sends indication information to the mobile phone B, where the indication information indicates that the mobile phone A expects to enter a full-screen mode. After receiving the indication information, the mobile phone B may enlarge a canvas on a current interface (the desktop of the mobile phone B) by one time. The mobile phone B may crop the canvas that is enlarged by one time, to obtain two regions (a left region and a right region) of a same size. The mobile phone B may display a canvas (including battery level information, time (08:08), date information (Thursday, August 6), location information (Gaoxin District), and icons of App 15, App 16, App 19, App 20, App 23, and App 24) in the right region through a display and project a canvas (including a network standard and a Wi-Fi connection status in a status bar, weather information (35°C), and icons of App 13, App 14, App 17, App 18, App 21, and App 22) in the left region to the mobile phone A, so that the mobile phone A displays the canvas in the left region through a display. In addition, the mobile phone A may further include an icon 1003 of a multiplier mode, an icon 1004 of a dual-application mode, an icon 1005 of a paging mode, and an exit control 1006.

In an embodiment, the icon 1003 of the multiplier mode, the icon 1004 of the dual-application mode, the icon 1005 of the paging mode, and the exit control 1006 may be drawn by the mobile phone A and displayed through the display of the mobile phone A.

In an embodiment, after the mobile phone A and the mobile phone B enter a full-screen mode, the icon 1003 of the multiplier mode, the icon 1004 of the dual-application mode, the icon 1005 of the paging mode, and the exit control 1006 may alternatively be drawn by the mobile phone B and displayed through the display of the mobile phone B.

In an embodiment, after the mobile phone A and the mobile phone B enter a full-screen mode, the icon 1003 of the multiplier mode, the icon 1004 of the dual-application mode, and the icon 1005 of the paging mode may be displayed on the mobile phone B, and the exit control 1006 may be displayed on the mobile phone A.

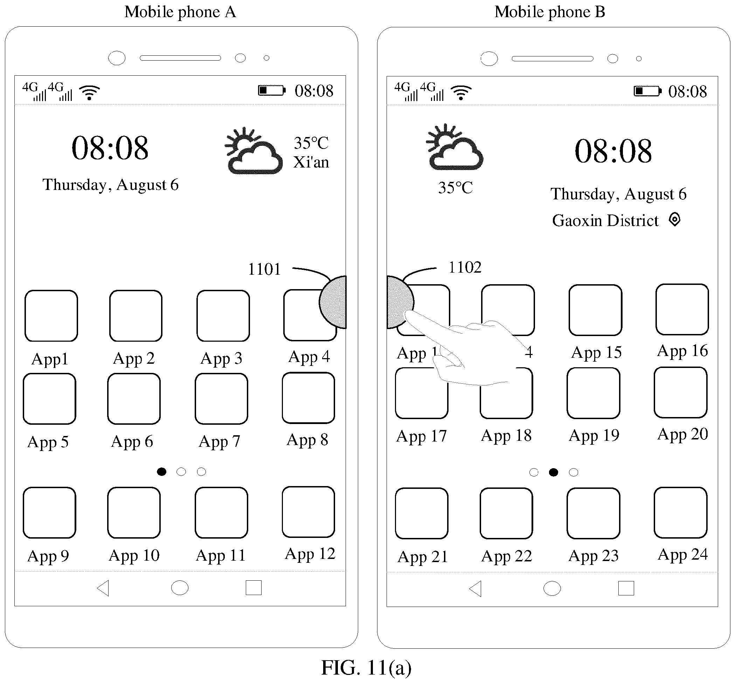

FIG. 11(a) to FIG. 11(c) show another set of GUIs according to an embodiment of this application.

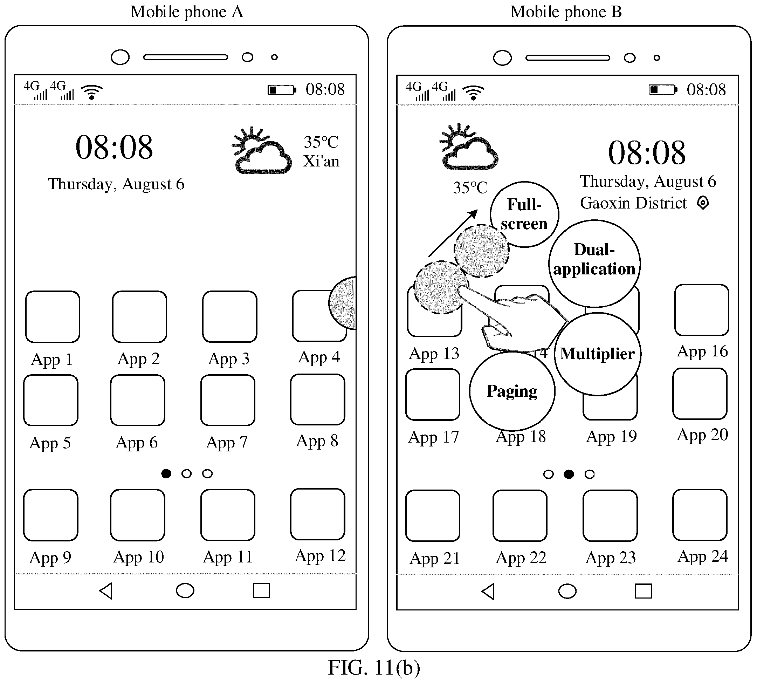

With reference to GUIs shown in FIG. 11(a), when a distance between a mobile phone A and a mobile phone B is less than or equal to a preset distance, a control 1101 is displayed on a desktop of the mobile phone A, and a control 1102 is displayed on a desktop of the mobile phone B. When detecting an operation of dragging the control 1102 rightwards by a user, the mobile phone B displays a GUI shown in FIG. 11(b).

With reference to GUIs shown in FIG. 11(b), in response to detecting the operation of dragging the control 1102 rightwards by the user, the mobile phone B may display an icon of a full-screen mode, an icon of a dual-application mode, an icon of a multiplier mode, and an icon of a paging mode on a display. If the user expects the mobile phone A and the mobile phone B to enter a full-screen mode, the user may drag the control 1102 to an upper right side.

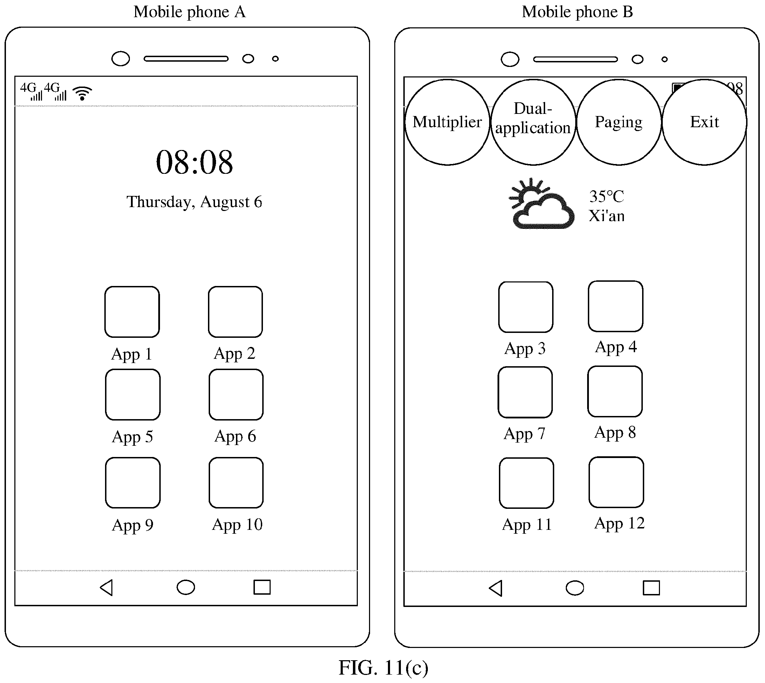

With reference to GUIs shown in FIG. 11(c), after the mobile phone B detects that the user drags the control 1102 to partially or wholly overlap with the icon corresponding to the full-screen mode, the mobile phone B may send indication information to the mobile phone A, where the indication information indicates that the mobile phone B expects to enter a full-screen mode. After receiving the indication information, the mobile phone A may enlarge a canvas on a current interface (the desktop of the mobile phone A) by one time. The mobile phone A may crop the canvas that is enlarged by one time, to obtain two regions (a left region and a right region) of a same size. The mobile phone A may display a canvas (including a network standard and a Wi-Fi connection status in a status bar, time (08:08), date information (Thursday, August 6), and icons of App 1, App 2, App 5, App 6, App 9, and App 10) in the left region through a display and project a canvas (including battery level information, weather information (35°C), and icons of App 3, App 4, App 7, App 8, App 11, and App 12) in the right region to the mobile phone B, so that the mobile phone B displays the canvas in the right region through a display. In addition, the mobile phone B may further display an icon of a multiplier mode, an icon of a dual-application mode, an icon of a paging mode, and an exit control.

In an embodiment, as shown in FIG. 11(b), when the mobile phone B detects that an area of a part in which the user drags the control 1102 to overlap with the icon of the full-screen mode is greater than or equal to a preset area, the mobile phone B may send the indication information to the mobile phone A.

It should be understood that, the mobile phone A shown in FIG. 11(a) to FIG. 11(c) may crop, in a segmentation manner, the canvas that is enlarged by one time, or the mobile phone A may crop, in a mask manner, the canvas that is enlarged by one time.

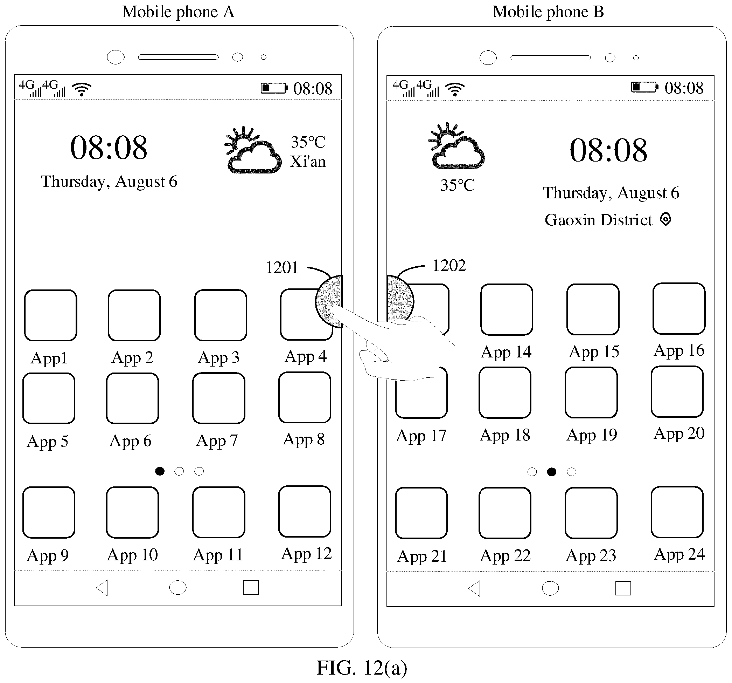

FIG. 12(a) to FIG. 12(c) show another set of GUIs according to an embodiment of this application.

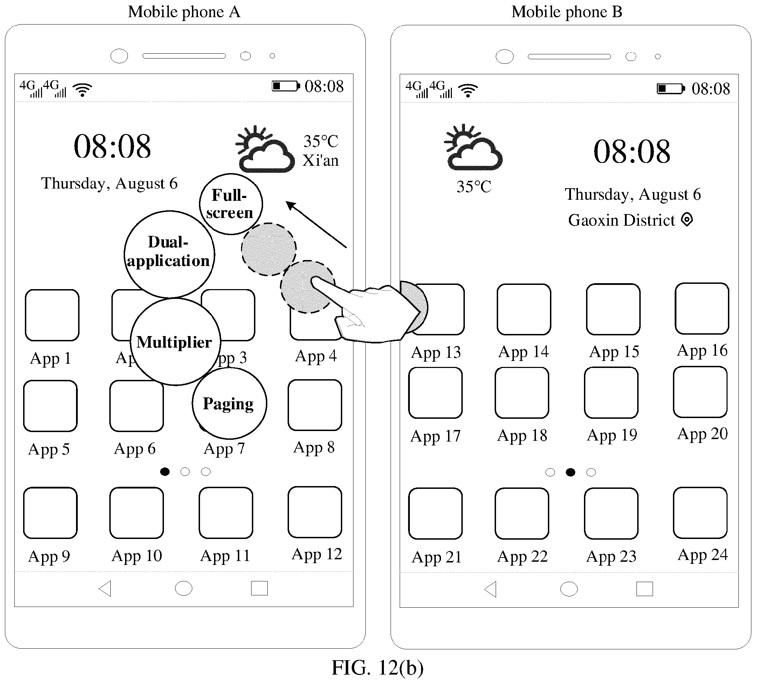

With reference to GUIs shown in FIG. 12(a), when a distance between a mobile phone A and a mobile phone B is less than or equal to a preset distance, a control 1201 is displayed on a desktop of the mobile phone A, and a control 1202 is displayed on a desktop of the mobile phone B. When detecting an operation of dragging the control 1201 leftwards by a user, the mobile phone A displays a GUI shown in FIG. 12(b).

With reference to GUIs shown in FIG. 12(b), in response to detecting the operation of dragging the control 1201 leftwards by the user, the mobile phone B may display an icon of a full-screen mode, an icon of a dual-application mode, an icon of a multiplier mode, and an icon of a paging mode on a display. If the user expects the mobile phone A and the mobile phone B to enter a full-screen mode, the user may drag the control 1201 to an upper left side.

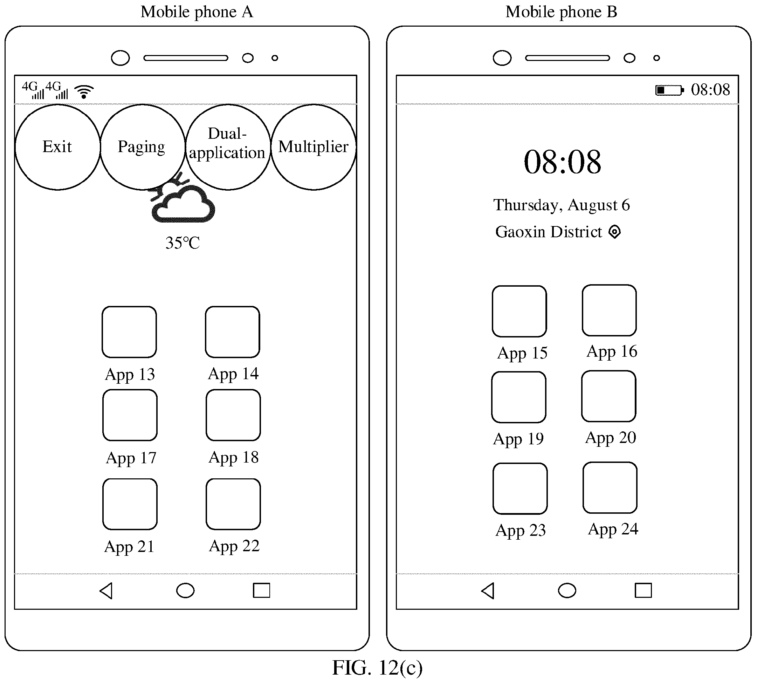

With reference to GUIs shown in FIG. 12(c), after the mobile phone A detects that the user drags the control 1201 to partially or wholly overlap with the icon of the full-screen mode, the mobile phone A sends indication information to the mobile phone B, where the indication information indicates that the mobile phone A expects to enter a full-screen mode. After receiving the indication information, the mobile phone B may enlarge a canvas on a current interface (the desktop of the mobile phone B) by one time. The mobile phone B may crop the canvas that is enlarged by one time, to obtain two regions (a left region and a right region) of a same size. The mobile phone B may display a canvas (including battery level information, time (08:08), date information (Thursday, August 6), location information (Gaoxin District), and icons of App 15, App 16, App 19, App 20, App 23, and App 24) in the right region through a display and project a canvas (including a network standard and a Wi-Fi connection status in a status bar, weather information (35°C), and icons of App 13, App 14, App 17, App 18, App 21, and App 22) in the left region to the mobile phone A, so that the mobile phone A displays the canvas in the left region through a display. In addition, the mobile phone A may further display an icon of a multiplier mode, an icon of a dual-application mode, an icon of a paging mode, and an exit control.

In an embodiment, when the mobile phone A detects that an area of a part in which the user drags the control 1201 to overlap with the icon of the full-screen mode is greater than or equal to a preset area, the mobile phone A may send the indication information to the mobile phone B.

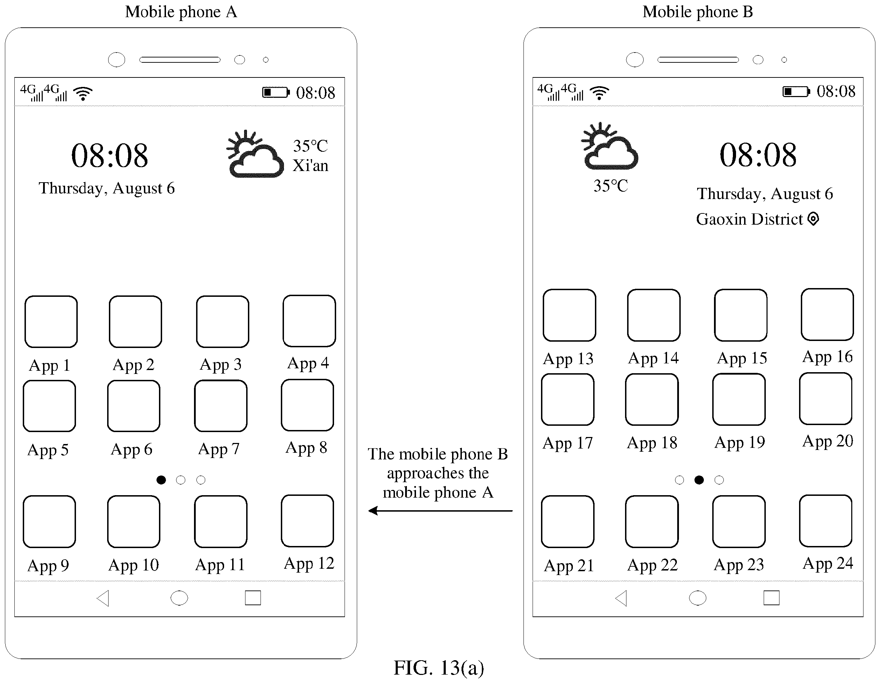

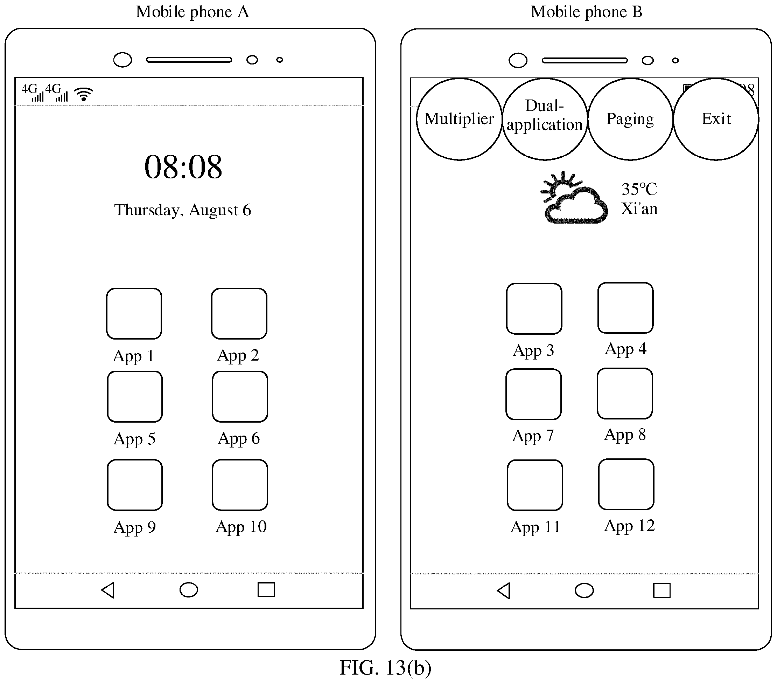

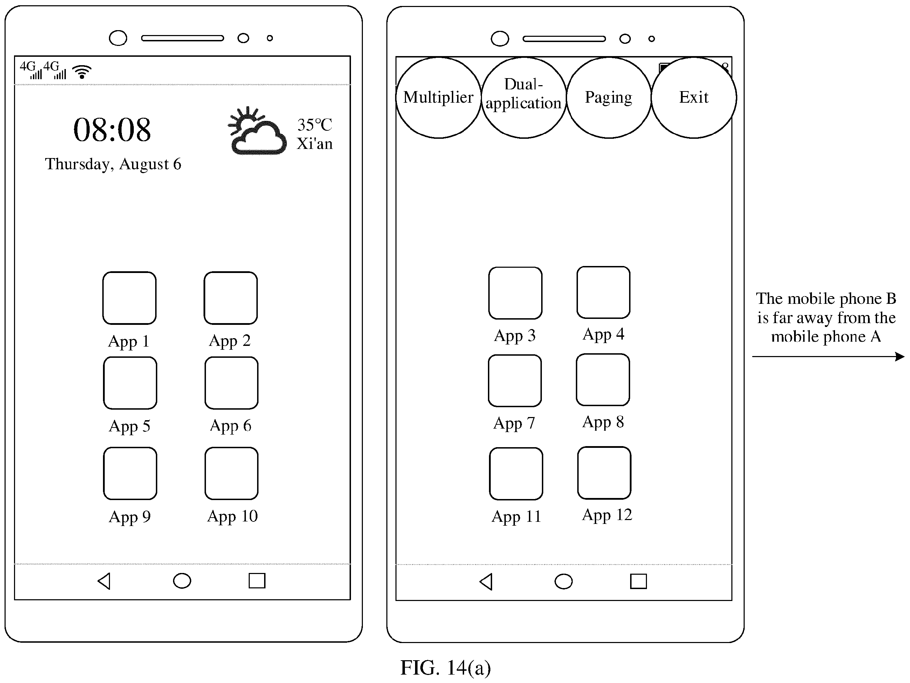

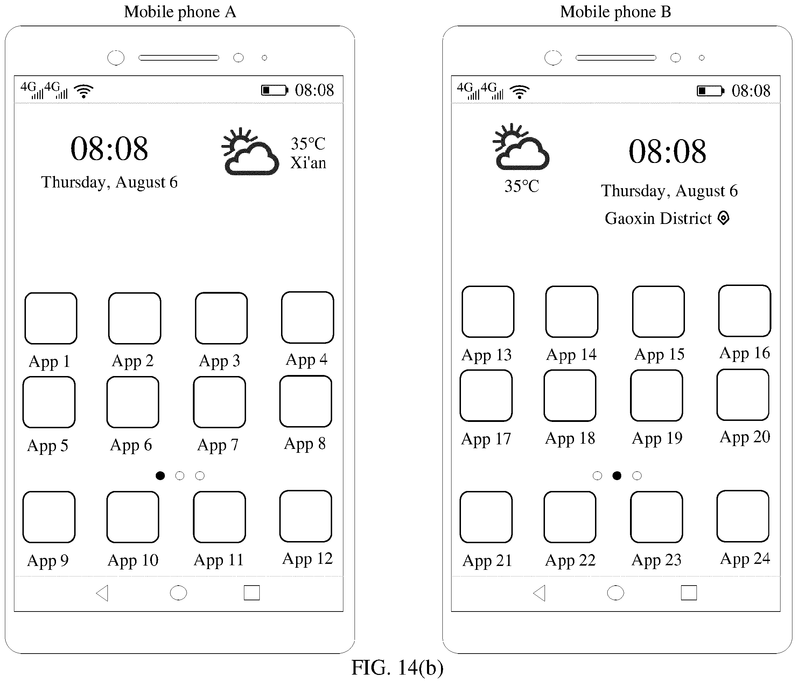

FIG. 13(a) and FIG. 13(b), and FIG. 14(a) and FIG. 14(b) show a process in which a mobile phone A and a mobile phone B automatically enter a full-screen mode and the mobile phone A and the mobile phone B automatically exit the full-screen mode.

With reference to GUIs shown in FIG. 13(a), when a distance between a mobile phone A and a mobile phone B is greater than a preset distance, the mobile phone A displays a desktop of the mobile phone A, and the mobile phone B displays a desktop of the mobile phone B. After the mobile phone A and the mobile phone B approach each other, GUIs shown in FIG. 13(b) are displayed.

With reference to GUIs shown in FIG. 13(b), when the distance between the mobile phone A and the mobile phone B is less than or equal to the preset distance, the mobile phone B sends indication information to the mobile phone A, where the indication information indicates that the mobile phone B expects to enter a full-screen mode. After receiving the indication information, the mobile phone A may enlarge a canvas on a current interface (the desktop of the mobile phone A) by one time. The mobile phone A may crop the canvas that is enlarged by one time, so that the mobile phone A and the mobile phone B perform full-screen display. For a process in which the mobile phone A crops the canvas that is enlarged by one time, refer to the descriptions of the foregoing embodiment. For brevity, details are not described herein again.

In this embodiment of this application, for the mobile phone A and the mobile phone B, a leftmost device may be a source device and a right device may be a sink device by default.

With reference to GUIs shown in FIG. 14(a), after a mobile phone A and a mobile phone B enter a full-screen mode, a user moves the mobile phone B away from the mobile phone A.

With reference to GUIs shown in FIG. 14(b), when the mobile phone A detects that a distance between the mobile phone A and the mobile phone B is greater than a preset distance, the mobile phone A and the mobile phone B may automatically exit the full-screen mode, or the mobile phone A may stop sending a cropped canvas to the mobile phone B. The mobile phone A may display a desktop of the mobile phone A, and the mobile phone B displays a desktop of the mobile phone B.

In an embodiment, when the mobile phone A detects that the distance between the mobile phone A and the mobile phone B is greater than the preset distance, the mobile phone A and the mobile phone B may automatically exit the full-screen mode, and simultaneously the mobile phone A may further disconnect from the mobile phone B wirelessly.

The foregoing describes several sets of GUIs provided in the embodiments of this application with reference to the GUIs shown in FIG. 3(a) to FIG. 3(d) to FIG. 14(a) and FIG. 14(b). The following describes an interaction process between a source device and a sink device in the embodiments of this application with reference to the accompanying drawings.

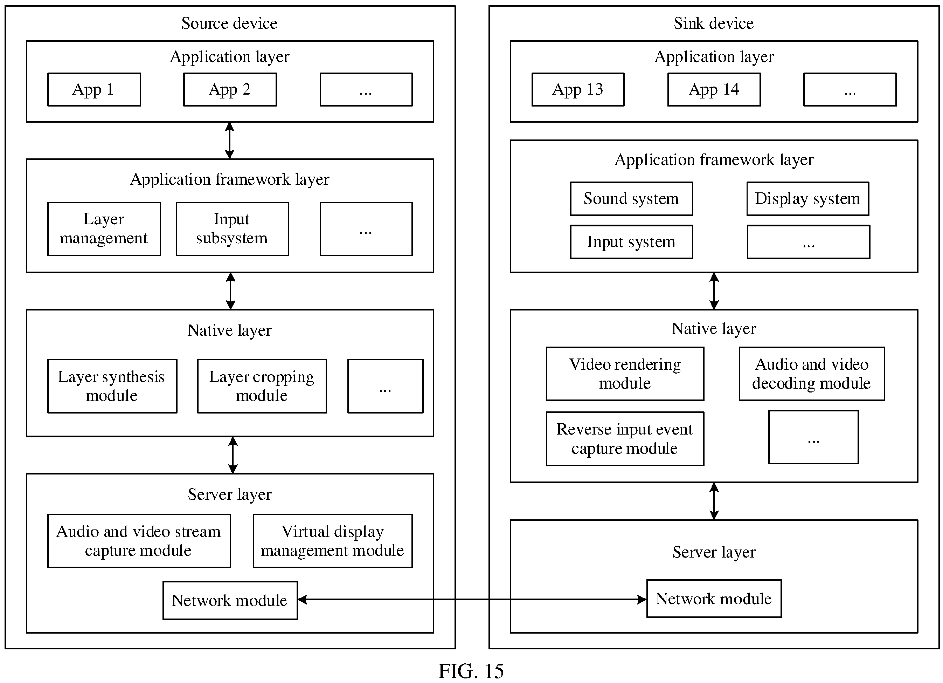

FIG. 15 is a schematic diagram of a structure of a source device and a sink device according to an embodiment of this application. The source device may be the mobile phone A shown in FIG. 3(a) to FIG. 3(d), and the sink device may be the mobile phone B shown in FIG. 3(a) to FIG. 3(d); or the source device may be the mobile phone B shown in FIG. 10(a) and FIG. 10(b), and the sink device may be the mobile phone A shown in FIG. 10(a) and FIG. 10(b).

The source device includes an application (App) layer, an application framework (Framework) layer, a native (Native) layer, and a server (Server) layer. The App layer may include a plurality of applications. The framework layer includes layer (layer) management and an input (input) subsystem. The layer management is configured to manage layer information corresponding to an application interface, and the input subsystem is configured to process a user input event or a reverse input event. The native layer includes a layer synthesis module and a layer cropping module. The layer synthesis module is configured to synthesize images based on the layer information, and the layer cropping module is configured to crop a canvas based on the layer information. The server layer includes an audio and video stream capture module, a virtual display management module, and a network module. The audio and video stream capture module is configured to capture an audio stream or a video stream, the virtual display management module is configured to manage creation and release of a virtual display (display), and the network module is configured to transmit the audio stream or the video stream to the sink device and receive a reverse input event sent by the sink device.

It should be understood that functions implemented by modules at the native layer and the server layer of the source device in FIG. 15 may depend on modules or driver hardware at the system library and the kernel layer in FIG. 2. For example, the layer synthesis module and the layer cropping module at the native layer may depend on the media library, the three-dimensional graphics processing library, the image processing library, and the like in the system library in FIG. 2, and the audio and video stream capture module and the virtual display management module at the server layer may depend on the display driver and the audio driver at the kernel layer and the three-dimensional graphics processing library and the image processing library in the system library in FIG. 2.

The sink device includes an application (App) layer, an application framework (Framework) layer, a native (Native) layer, and a server (Server) layer. The framework layer includes a sound system, an input system, and a display system. The sound system is configured to play a sound after audio decoding, the display system is configured to display an interface after video decoding, and the input system is configured to receive a touch operation of a user. The native layer includes a video rendering module, an audio and video decoding module, and a reverse input event capture module. The audio and video decoding module is configured to decode an audio stream or a video stream received from the source end, the video rendering module is configured to render and display a decoded video stream, and the reverse input event capture module is configured to capture a reverse input event of the user. The server layer includes a network module. The network module is configured to receive an audio stream or a video stream sent by the source device and send a reverse input event to the source device.

It should be understood that functions implemented by modules at the native layer of the sink device in FIG. 15 may depend on modules or driver hardware at the system library and the kernel layer in FIG. 2. For example, the video rendering module may depend on the three-dimensional graphics processing library and the image processing library in the system library and the display driver at the kernel layer in FIG. 2. The audio and video decoding module may depend on the three-dimensional graphics processing library, the image processing library, and the like in the system library in FIG. 2. The reverse input event capture module may depend on a touch panel (touch panel, TP) driver and the like at the hardware layer in FIG. 2.

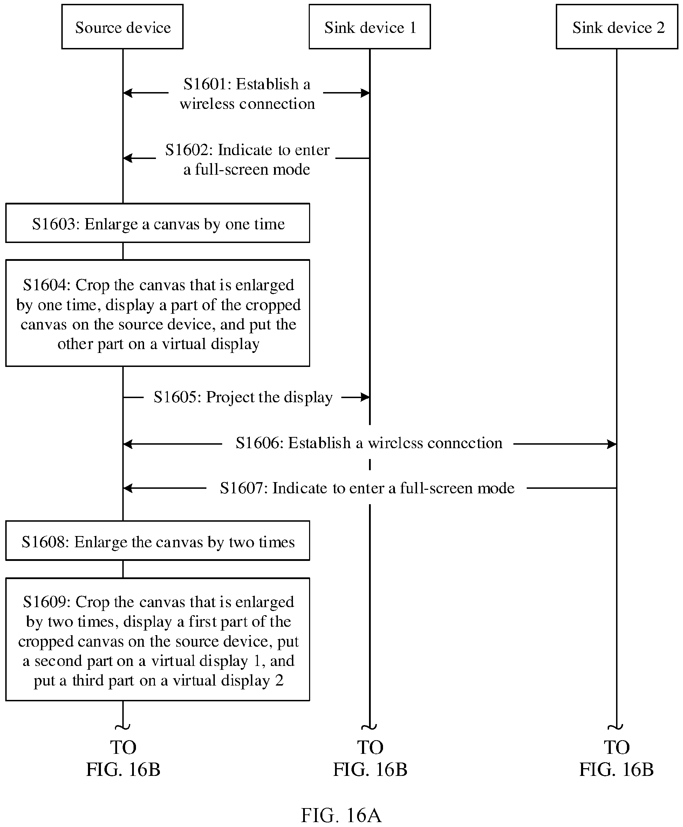

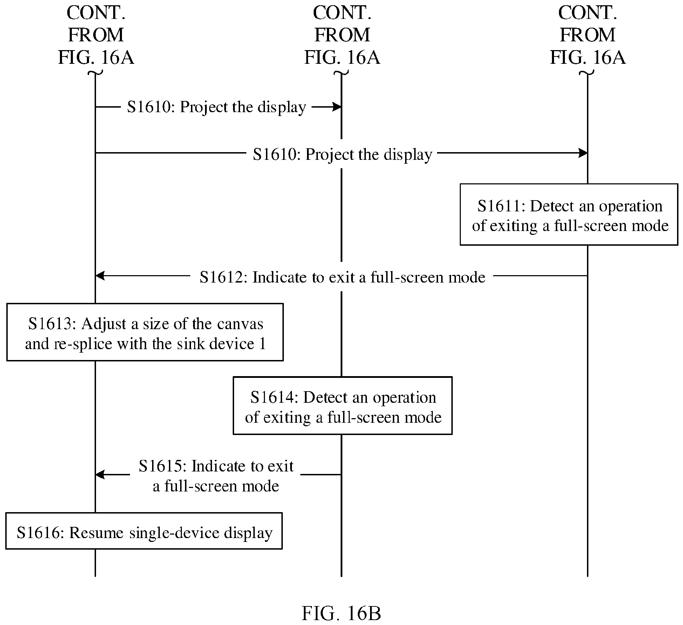

FIG. 16A and FIG. 16B are a schematic flowchart of a method 1600 for performing display by a source device and a sink device in a full-screen mode. The method 1600 includes the following steps.

S1601: The source device establishes a wireless connection to a sink device 1.

For example, as shown in FIG. 3(a), when the mobile phone A detects that a distance between the mobile phone A and the mobile phone B is less than or equal to a preset distance, the mobile phone A and the mobile phone B may perform networking in a near field wireless connection manner, so that the mobile phone A and the mobile phone B establish a wireless connection. For example, the mobile phone A and the mobile phone B may perform AP networking, or the mobile phone A and the mobile phone B may perform P2P networking.

S1602: After the sink device 1 detects a first operation of a user, the sink device 1 indicates the source device to enter a full-screen mode.

For example, as shown in FIG. 3(a), the mobile phone A is the source device, and the mobile phone B is the sink device 1. When the mobile phone B detects a rightward slide operation of the user, the mobile phone B may send indication information to the mobile phone A, where the indication information indicates that the mobile phone B expects to enter a full-screen mode.

For example, as shown in FIG. 11(b), the mobile phone A is the source device, and the mobile phone B is the sink device 1. After the mobile phone B detects that the user drags a control 1102 to partially or wholly overlap with an icon of the full-screen mode, the mobile phone B may send indication information to the mobile phone A, where the indication information indicates that the mobile phone B expects to enter a full-screen mode.

For example, as shown in FIG. 10(a), the mobile phone B is the source device, and the mobile phone A is the sink device 1. When the mobile phone A detects a leftward slide operation of the user, the mobile phone A may send indication information to the mobile phone B, where the indication information indicates that the mobile phone A expects to enter a full-screen mode.

For example, as shown in FIG. 12(b), the mobile phone B is the source device, and the mobile phone A is the sink device 1. After the mobile phone A detects that the user drags a control 1201 to partially or wholly overlap with an icon of the full-screen mode, the mobile phone A may send indication information to the mobile phone B, where the indication information indicates that the mobile phone A expects to enter a full-screen mode.

In this embodiment of this application, when the sink device 1 detects a rightward slide operation of the user or the sink device 1 detects that a control is dragged rightwards to partially or wholly overlap with an icon of a specified mode, the sink device may determine that a left device of the sink device is the source device. When the sink device 1 detects a leftward slide operation of the user or the sink device 1 detects that a control is dragged leftwards to partially or wholly overlap with an icon of a specified mode, the sink device may determine that a right device of the sink device is the source device.

It should be understood that, in this embodiment of this application, the source device may determine a distance between the source device and the sink device 1 and orientation information of the source device and the sink device 1 by using a positioning technology such as Bluetooth, ultra-wideband (ultra-wideband, UWB), or an ultrasonic wave. For a specific implementation process, refer to the conventional technology. For brevity, details are not described herein.

For example, the source device has a Bluetooth/Wi-Fi antenna array (or the source device has an angle of arrival (angle of arrival, AOA) computing capability), and the sink device 1 has a Bluetooth/Wi-Fi antenna array (or the sink device 1 has an AOA computing capability). The source device may calculate an orientation of the sink device 1. The Bluetooth/Wi-Fi antenna array of the source device may receive a wireless signal of the sink device 1, and calculate the orientation of the sink device 1 according to formulas (1) and (2):

$$\varphi = \left(2\pi d \cos(\theta)\right) / \lambda \quad (1);$$

and

$$\theta = \cos^{-1}\left((\varphi\lambda)/(2\pi d)\right) \quad (2).$$

In the formulas, d is a distance between the Bluetooth/Wi-Fi antenna array of the source device and the Bluetooth/Wi-Fi antenna of the sink device 1, $\varphi$ is a phase difference between the Bluetooth/Wi-Fi antenna array of the source device and the Bluetooth/Wi-Fi antenna of the sink device 1, $\lambda$ is a wavelength of a Bluetooth signal sent by the sink device 1, and $\theta$ is an angle of arrival. It should be understood that, in this embodiment of this application, that the source device calculates the orientation of the sink device 1 may further be understood as that the source device may calculate an orientation of the Bluetooth/Wi-Fi antenna array of the source device and an orientation of the Bluetooth/Wi-Fi antenna connection line of the sink device 1.

It should be understood that the sink device 1 may also calculate an orientation of the source device by using the foregoing formulas (1) and (2).

In an embodiment, when the sink device 1 detects the first operation of the user, the sink device 1 may send a user datagram protocol (user datagram protocol, UDP) packet to the source device. The UDP packet may carry the indication information, and the indication information indicates that the sink device 1 expects to enter a full-screen mode. The UPD packet includes a data part of an IP datagram. The data part of the IP datagram may include an extensible bit. The sink device 1 and the source device may agree on content of a specified extensible bit. When a specified extensible bit is 1, the source device may learn that the sink device 1 expects to enter a full-screen mode.

In an embodiment, when the sink device 1 detects the first operation of the user, the sink device 1 may send a transmission control protocol (transmission control protocol, TCP) packet to the source device. The TCP packet may carry the indication information, and the indication information indicates that the sink device 1 expects to enter a full-screen mode. The TCP packet includes a TCP header and a TCP data part, and the TCP header includes a reserved field. The sink device 1 and the source device may agree on content of a specified reserved field. When a bit of a specified reserved field is 1, the source device may learn that the sink device 1 expects to enter a full-screen mode.

S 1603: In response to receiving the indication from the sink device 1, the source device enlarges a canvas on a current interface by one time.

For example, a size of a canvas originally displayed by the source device is 1080×2340. After the source device receives the indication information from the sink device 1, the source device may determine that the sink device 1 expects to form dual-screen splicing with the source device. In this case, the source device enlarges a size of a display canvas of a master device to (1080×2)×2340, namely, 2160×2340.

It should be understood that, in this embodiment of this application, after the source device receives the indication information of the sink device 1, if the source device and the sink device 1 are horizontally distributed (or distributed from left to right), the source device may enlarge the size of the display canvas of the master device to 2160×2340. If the source device determines that the source device and the sink device 1 are vertically distributed (or distributed from top to bottom), the source device may alternatively enlarge the size of the display canvas of the master device to 1080×(2340×2), namely, 1080×4680. The following provides descriptions by using an example in which the source device and the sink device 1 (and a sink device 2) are horizontally distributed.

S1604: The source device crops the canvas that is enlarged by one time, displays a part of the cropped canvas on the source device, and put the other part on a virtual display (display 1) created by the source device.

In this embodiment of this application, a manner in which the source device crops the enlarged canvas may include but is not limited to a segmentation manner and a mask manner.

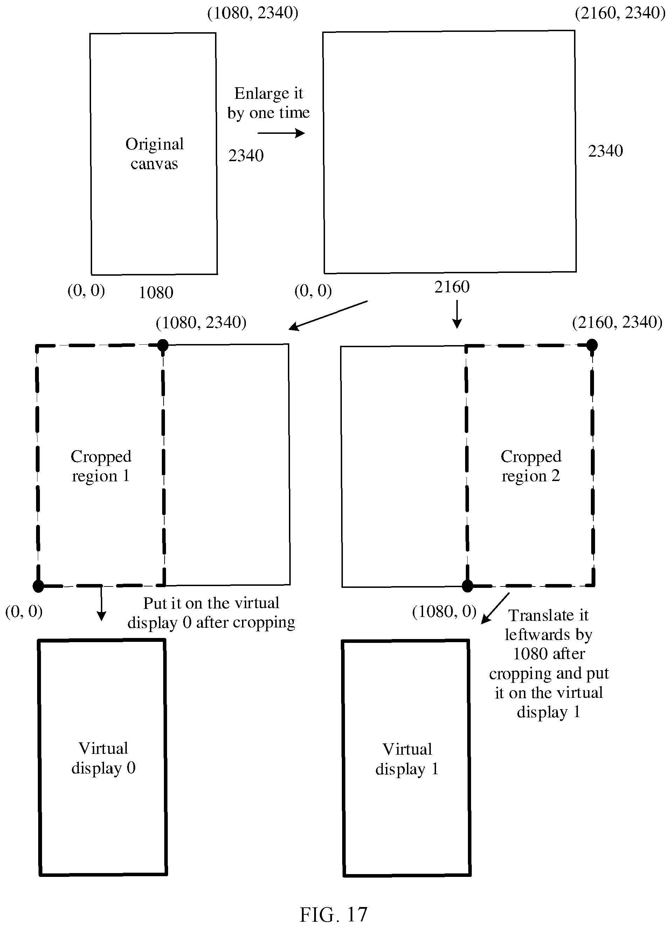

FIG. 17 shows a process in which a source device performs cropping in a segmentation manner and displays a cropped canvas on a virtual display. Layer information corresponding to a display image on each display is managed by an Android component SurfaceFlinger. Because no application is started in the display, the display does not have layer information. When SurfaceFlinger synthesizes an image each time, each display is synthesized in sequence. For example, when SurfaceFlinger synthesizes a display 0, a layer is cropped, where a cropped region 1 is [0, 0, 1080, 2340]. The source device may put a canvas in the cropped region 1 on the display 0, so that the source device can display the display 0. When SurfaceFlinger synthesizes a display 1, all layer information is copied from the display 0 and then cropping is performed, where a cropped region 2 is [1080, 0, 2160, 2340]; and the cropped region 2 is translated leftwards by 1080 and then is put on the display 1. The source device may project the display 1 to the sink device 1.

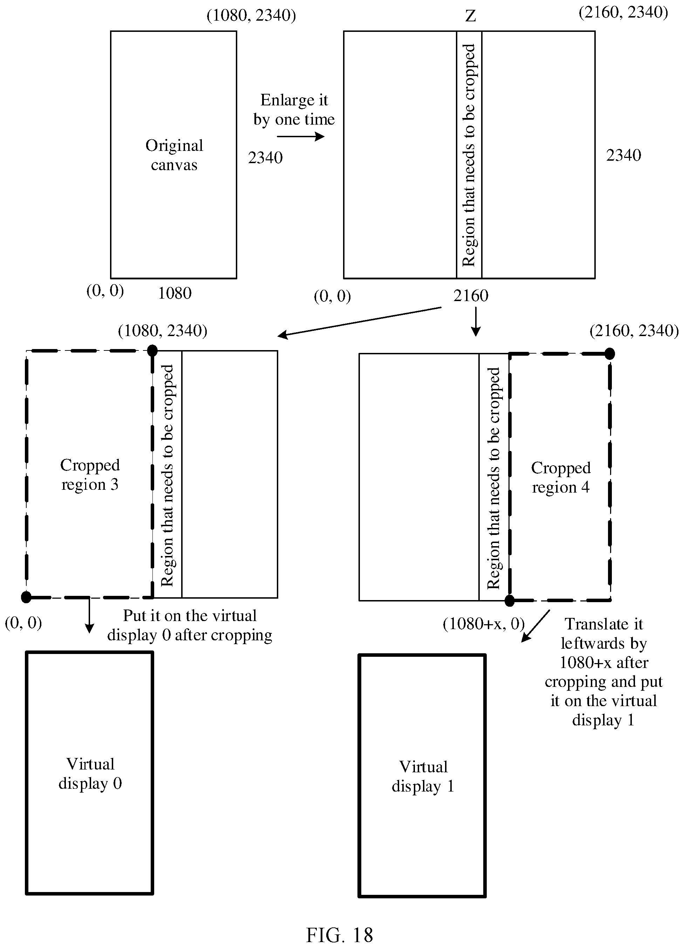

FIG. 18 shows a process in which a source device performs cropping in a mask manner and displays a cropped canvas on a virtual display. The source device first determines, based on the distance between the source device and the sink device 1, a region that needs to be cropped (for example, a region 402 shown in FIG. 4(b)). It should be understood that, for a process in which the source device determines a pixel value of the region that needs to be cropped, refer to the descriptions of the foregoing embodiment. For brevity, details are not described herein again. It is assumed that the pixel value that needs to be cropped and that is determined by the source end is x.

For example, when SurfaceFlinger synthesizes a display 0, a layer is cropped, where a cropped region 3 is [0, 0, 1080, 2340]. The source device may put a canvas in the cropped region 3 on the display 0, so that the source device can display the display 0. When SurfaceFlinger synthesizes a display 1, all layer information is copied from the display 0 and then cropping is performed, where a cropped region 4 is [1080+x, 0, 2160, 2340]; and the cropped region is translated leftwards by 1080+x and then is put on the display 1. The source device may project the display 1 to the sink device 1.

S1605: The source device projects the display 1 to the sink device 1.

In an embodiment, if a resolution of a screen of the sink device 1 is 1080×2340, after receiving canvas information that is corresponding to the cropped region 4 and that is sent by the source device, the sink device 1 may display the canvas in the middle and reserve a black edge with a size of x/2 on each side of the screen.

In an embodiment, after receiving canvas information that is corresponding to the cropped region 4 and that is sent by the source device, the sink device 1 may alternatively display the canvas on a left side of the screen and reserve a black edge with a size of x on a right side of the screen.

In an embodiment, after receiving canvas information that is corresponding to the cropped region 4 and that is sent by the source device, the sink device 1 may alternatively display the canvas on a right side of the screen and reserve a black edge with a size of x on a left side of the screen.

In an embodiment, when indicating that the source device expects to join a full-screen mode, the sink device 1 may further send information about the screen resolution of the sink device 1 to the source device. After learning the screen resolution of the sink device 1 and the distance between the source device and the sink device 1, the source device may first enlarge the canvas size to 2160×2340. The source device may stretch the enlarged canvas horizontally to (2160+x)×2340 based on a pixel value (for example, x) that needs to be cropped. In this case, the cropped region 3 may be [0, 0, 1080, 2340], and a size of the cropped region 4 is [1080+x, 0, 2160+x, 2340]. The source device may translate the cropped region 4 leftwards by 1080+x and then put the cropped region 4 on the display 1. The source device may project the display 1 to the sink device 1. The sink device 1 does not need to reserve a black edge on the screen during display.

It should be understood that, for a process in which the source device projects the display 1 to the sink device 1, refer to an existing projection technology. For brevity, details are not described herein.

In an embodiment, in S1602, the sink device 1 may trigger the source device and the sink device to enter a full-screen mode. In this embodiment of this application, the source device may alternatively trigger the source device and the sink device 1 to enter a full-screen mode. For example, when the source device detects an operation in which the user performs sliding from left to right on the screen, the source device may send a part of segmented image information and indication information to the sink device 1, where the indication information indicates the source device and the sink device 1 to enter a full-screen mode. The sink device 1 displays the image information by using the sink device 1 in response to receiving the part of segmented image information and the indication information.

S1606: The source device establishes a wireless connection to the sink device 2.

For example, as shown in FIG. 3(a), when the mobile phone C approaches the mobile phone B, and the mobile phone B may determine, through RSSI ranging, that a distance between the mobile phone C and the mobile phone B is less than or equal to a preset distance, the mobile phone A, the mobile phone B, and the mobile phone C may perform networking in a near field wireless connection manner, so that the mobile phone A, the mobile phone B, and the mobile phone B establish a wireless connection. For example, the mobile phone A, the mobile phone B, and the mobile phone C may perform AP networking, or the mobile phone A, the mobile phone B, and the mobile phone C may perform P2P networking.

S 1607: After the sink device 2 detects a second operation of the user, the sink device 2 indicates the source device to enter a full-screen mode.

For example, as shown in FIG. 3(d), the mobile phone A is the source device, the mobile phone B is the sink device 1, and the mobile phone C is the sink device 2. When the mobile phone C detects a rightward slide operation of the user, the mobile phone C may send indication information to the mobile phone A, where the indication information indicates that the mobile phone C expects to enter a full-screen mode.

It should be understood that, for a process in which the sink device 2 sends the indication information to the source device (the indication information indicates that the sink device 2 expects to enter a full-screen mode), refer to the descriptions of S1602. Details are not described herein again.

In this embodiment of this application, when the sink device 2 detects a rightward slide operation of the user or the sink device 2 detects that a control is dragged rightwards to partially or wholly overlap with an icon of a specified mode, the sink device may determine that a left device of the sink device is the source device. If the sink device 2 detects that there are a plurality of devices on a left side of the sink device 2, the sink device 2 may use a leftmost device of the sink device 2 as the source device.

When the sink device 2 detects a leftward slide operation of the user or the sink device 2 detects that the user drags a control leftwards to partially or wholly overlap with an icon of a specified mode, the sink device 2 may determine that a right device of the sink device 2 is the source device. If the sink device 2 detects that there are a plurality of devices on a right side of the sink device 2, the sink device 2 may use a rightmost device of the sink device 2 as the source device.

In an embodiment, the sink device 2 may further send information about a distance between the sink device 1 and the sink device 2 to the source device.

For example, the sink device 2 may send a UDP packet to the source device. The UDP packet may carry the information about the distance between the sink device 1 and the sink device 2. The UPD packet includes a data part of an IP datagram. The data part of the IP datagram may include an extensible bit. The sink device 2 and the source device may agree on content of a specified extensible bit. For example, when a specified extensible bit is 000, the source device may learn that the distance between the sink device 1 and the sink device 2 is one centimeter; when a specified extensible bit is 001, the source device may learn that the distance between the sink device 1 and the sink device 2 is two centimeters; or when a specified extensible bit is 011, the source device may learn that the distance between the sink device 1 and the sink device 2 is three centimeters.

S1608: In response to receiving the indication from the sink device 2, the source device enlarges the canvas on the current interface by two times.

For example, a size of a canvas originally displayed by the source device is 1080×2340. After the source device receives the indication information from the sink device 2, the source device may determine that the sink device 1 and the sink device 2 expect to form three-screen splicing with the source device. In this case, the source device enlarges a size of a display canvas of a master device to (1080×3)×2340, namely, 3240×2340.

S1609: The source device crops the canvas that is enlarged by two times, display a first cropped part on the source device, and put a second part on the virtual display (display 1) created by the source device and a third part on another virtual display (display 2) created by the source device.

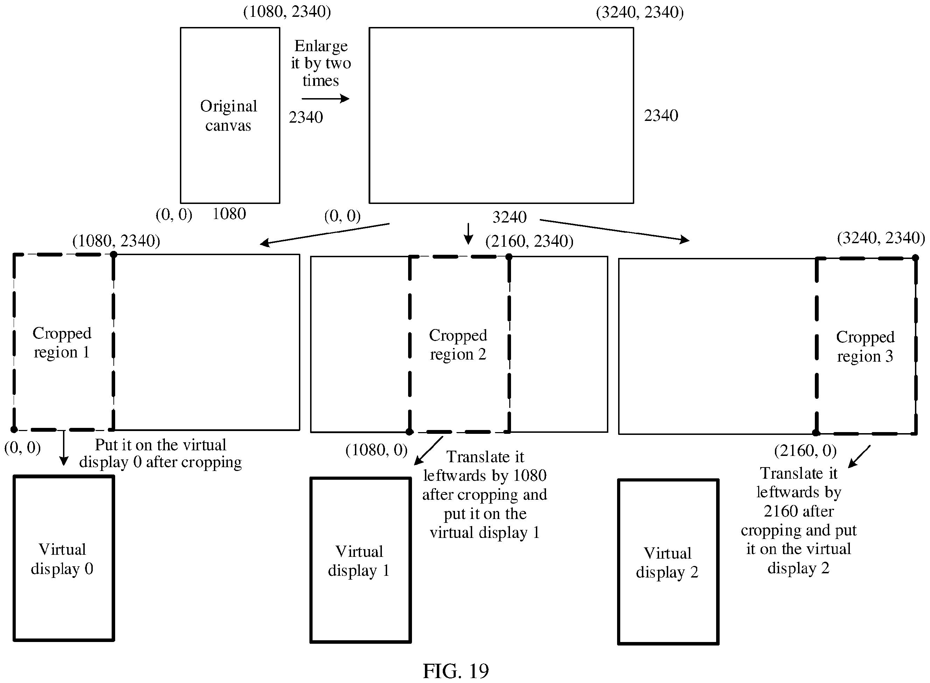

For a segmentation manner, as shown in FIG. 19, when SurfaceFlinger synthesizes a display 0, a layer is cropped, where a cropped region 1 is [0, 0, 1080, 2340]. The source device may put a canvas in the cropped region 1 on the display 0, so that the source device can display the canvas on the display 0. When SurfaceFlinger synthesizes a display 1, all layer information is copied from the display 0 and then cropping is performed, where a cropped region 2 is [1080, 0, 2160, 2340]. The source device may translate the cropped region 2 leftwards by 1080 and then put the cropped region 2 on the display 1. The source device may project a canvas on the display 1 to the sink device 1.

When SurfaceFlinger synthesizes a display 2, all layer information is copied from the display 0 and then cropping is performed, where a cropped region 3 is [2160, 0, 3240, 2340]. The source device may translate the cropped region 3 leftwards by 2160 and then put the cropped region 3 on the display 2. The source device may project a canvas on the display 2 to the sink device 2.

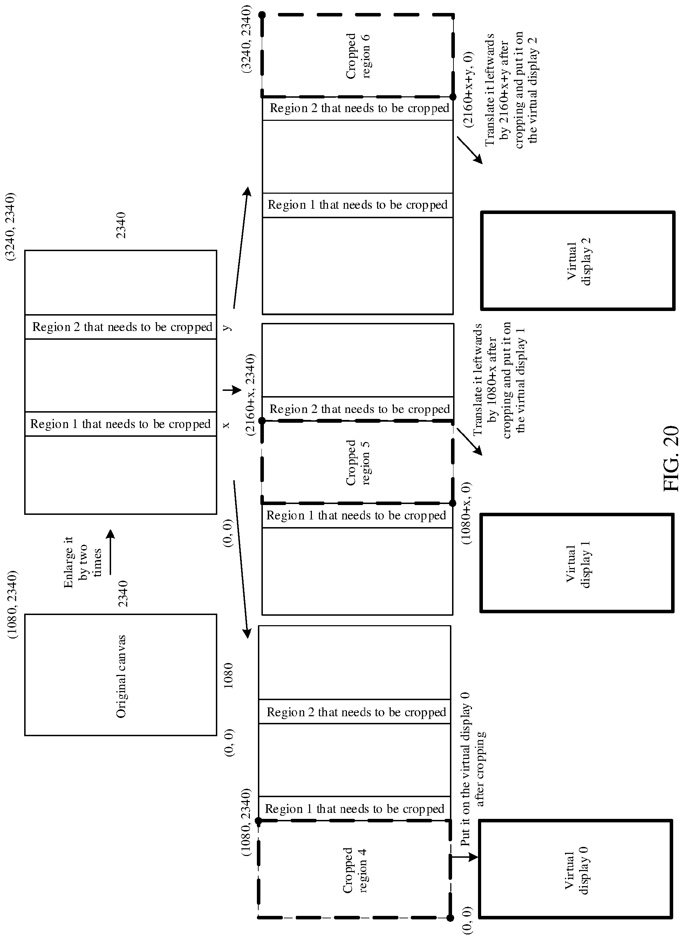

For a mask manner, as shown in FIG. 20, the source device first determines, based on the distance between the source device and the sink device 1 and the distance between the sink device 1 and the sink device 2, two regions that need to be cropped (for example, a region 405 and a region 407 shown in FIG. 4(d)). It should be understood that, for a process in which the source device determines pixel values of the regions that need to be cropped, refer to the descriptions of the foregoing embodiment. For brevity, details are not described herein again. It is assumed that the pixel values that need to be cropped and that are determined by the source end are x and y.

When SurfaceFlinger synthesizes a display 0, a layer is cropped, where a cropped region 4 is [0, 0, 1080, 2340]. The source device may put a canvas in the cropped region 4 on the display 0, so that the source device can display the canvas on the display 0.

When SurfaceFlinger synthesizes a display 1, all layer information is copied from the display 0 and then cropping is performed, where a cropped region 5 is [1080+x, 0, 2160+x, 2340]. The source device may translate the cropped region 5 leftwards by 1080+x and then put the cropped region 5 on the display 1. The source device may project a canvas on the display 1 to the sink device 1.

When SurfaceFlinger synthesizes a display 2, all layer information is copied from the display 0 and then cropping is performed, where a cropped region 6 is [2160+x+y, 0, 3240, 2340]. The source device may translate the cropped region 6 leftwards by 2160+x+y and then put the cropped region 6 on the display 2. The source device may project a canvas on the display 2 to the sink device 2.

It should be understood that FIG. 20 is merely a manner of cropping an enlarged canvas in a mask manner. This embodiment of this application is not limited thereto. For example, the cropped region 5 may alternatively be [1080+x, 0, 2160, 2340]. The source device may translate the cropped region 5 leftwards by 1080+x and then put the cropped region 5 on the display 1. The source device may project a canvas on the display 1 to the sink device 1.

The cropped region 6 may alternatively be [2160+y, 0, 3240, 2340]. The source device may translate the cropped region 6 leftwards by 2160+y and then put the cropped region 6 on the display 2. The source device may project a canvas on the display 2 to the sink device 2.

S1610: The source device projects the display 1 to the sink device 1 and projects the display 2 to the sink device 2.

It should be understood that, for a process in which the source device projects the display 1 to the sink device 1 and projects the display 2 to the sink device 2, refer to the foregoing process of S1605. Details are not described herein again.

It should be understood that, for a process in which the source device projects the display 1 to the sink device 1 and projects the display 2 to the sink device 2, refer to an existing projection technology. For brevity, details are not described herein.

S1611: The sink device 2 detects an operation of exiting a full-screen mode by the user on the sink device 2.

For example, as shown in FIG. 5(a), the operation may be an operation in which the mobile phone C detects that the user taps an exit control.

S1612: In response to detecting the operation, the sink device 2 sends indication information to the source device, where the indication information indicates the sink device 2 to exit a full-screen mode.

In an embodiment, as shown in FIG. 5(a), the exit control may be drawn by the source device and added to the enlarged canvas. When detecting the operation, the sink device 2 may obtain a touch event of the user and corresponding coordinates. The sink device 2 may send the touch event and converted coordinates to the source device.

For example, if the source device, the sink device 1, and the sink device 2 perform full-screen display in a segmentation manner, when the sink device 2 detects that the user performs a tap operation at a position (100, 100) on a screen, the sink device determines that the event is a touch event and converts the coordinates into (100+2160, 100), namely, (2260, 100). In this case, the sink device 2 may send the touch event and the converted coordinates to the source device. After receiving the touch event and the converted coordinates, the source device may determine that the user taps the exit control on the sink device 2, and then perform S1613.

In an embodiment, if the source device, the sink device 1, and the sink device 2 perform full-screen display in a mask manner, the cropped region 6 determined by the source device is [2160+x+y, 0, 3240, 2340]. In this case, the sink device 2 detects that the user performs a tap operation at a position (100, 100) on a screen, and the sink device determines that the event is a touch event and converts the coordinates into (100+2160+x+y, 100), namely, (2260+x+y, 100).

For example, when detecting the operation, the sink device 2 may send a UDP packet to the source device. The UDP packet may carry information about the converted coordinates, and the indication information indicates the sink device 2 to exit a full-screen mode. The UPD packet includes a data part of an IP datagram. The data part of the IP datagram may include an extensible bit. The sink device 2 and the source device may agree on content of a specified extensible bit. For example, when a specified extensible bit is 1, it indicates that the touch event is a tap event. For another example, the sink device 2 may encode the information about the converted coordinates in an encoding manner such as GBK, ISO8859-1, or Unicode (for example, UTF-8 or UTF-16). The source device may learn, by using information in the extensible bit, the touch event detected by the sink device 2 and the information about the converted coordinates. In this case, the source device may determine that the sink device 2 detects the operation of exiting the full-screen mode by the user on the sink device 2.

In an embodiment, as shown in FIG. 5(a), the exit control may alternatively be drawn by the sink device 2. When the sink device 2 detects that the user taps the exit control, the sink device 2 may send indication information to the source device, where the indication information indicates the sink device 2 to exit a full-screen mode.

For example, when detecting the operation, the sink device 2 may send a UDP packet to the source device. The UDP packet may carry the indication information, and the indication information indicates the sink device 2 to exit a full-screen mode. The UPD packet includes a data part of an IP datagram. The data part of the IP datagram may include an extensible bit. The sink device 2 and the source device may agree on content of a specified extensible bit. When a specified extensible bit is 1, the source device may learn that the sink device 2 exits a full-screen mode.

S1613: In response to receiving the indication information, the source device adjusts a canvas size, and performs re-splicing with the sink device 1.

It should be understood that, after receiving the indication information, the source device may perform operations in S1603 to S1605. For brevity, details are not described herein again.

S1614: The sink device 1 detects an operation of exiting a full-screen mode by the user on the sink device 1.

For example, as shown in FIG. 5(b), the operation may be an operation in which the mobile phone B detects that the user taps an exit control.

S1615: In response to detecting the operation, the sink device 1 sends indication information to the source device, where the indication information indicates the sink device 1 to exit a full-screen mode.

In an embodiment, as shown in FIG. 5(a), the exit control may be drawn by the source device and added to the enlarged canvas. When detecting the operation, the sink device 1 may obtain a touch event of the user and corresponding coordinates. The sink device 1 may send the touch event and converted coordinates to the source end. The source device may determine, based on the touch event and the converted coordinates, that the sink device 1 detects that the user taps the exit control.

For example, if the source device, the sink device 1, and the sink device 2 perform full-screen display in a segmentation manner, when the sink device 1 detects that the user performs a tap operation at a position (100, 100) on a screen, the sink device determines that the touch event is a tap event of the user and converts the coordinates into (100+1080, 100), namely, (1180, 100). In this case, the sink device 1 may send the touch event and the converted coordinates to the source device. After receiving the touch event and the converted coordinates, the source device may determine that the user taps the exit control on the sink device 1, and then perform S1616.

In an embodiment, if the source device, the sink device 1, and the sink device 2 perform full-screen display in a mask manner, the cropped region 5 determined by the source device is [1080+x, 0, 2160+x, 2340]. In this case, the sink device 2 detects that the user performs a tap operation at a position (100, 100) on a screen, and the sink device determines that the event is a touch event and converts the coordinates into (100+1080+x, 100), namely, (1180+x, 100).

It should be understood that, for a process in which the sink device 1 sends the indication information to the source device, refer to the foregoing descriptions of S1612. Details are not described herein again.

S1616: In response to receiving the indication information, the source device does not enlarge the canvas and resumes single-device display of the source device.

In this embodiment of this application, a plurality of devices may be wirelessly networked, and splicing of screens of the plurality of devices is triggered through a preset gesture, to implement a full-screen mode on the plurality of devices, thereby improving user experience.

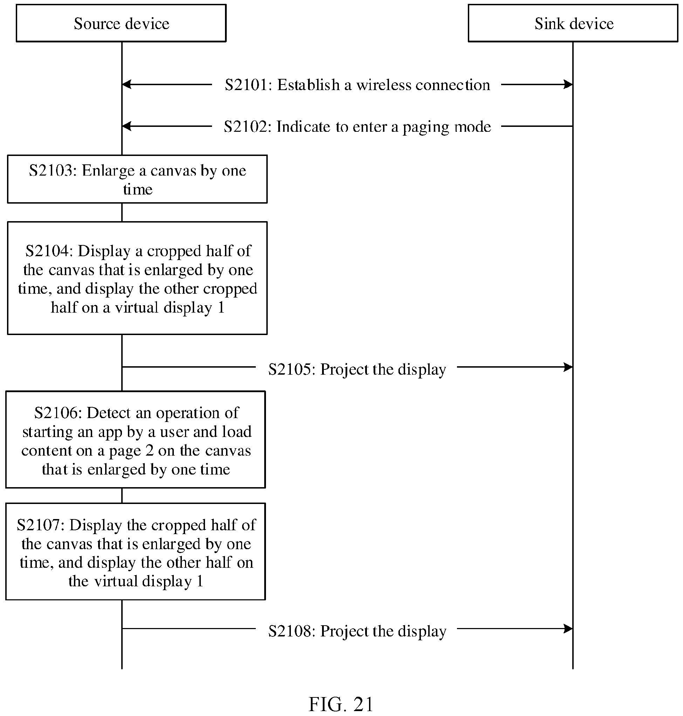

FIG. 21 is a schematic flowchart of a method 2100 for performing display by a source device and a sink device in a paging mode. The method 2100 includes the following steps.

S2101: The source device establishes a wireless connection to the sink device.

It should be understood that for a process of S2101, refer to the foregoing process of S1601. For brevity, details are not described herein again.

S2102: After the sink device detects a third operation of a user, the sink device indicates the source device to enter a paging mode.

For example, as shown in FIG. 8(a), an icon of a paging mode displayed on the mobile phone B may be drawn by the mobile phone A. The mobile phone A may add an icon of a multiplier mode, an icon of a dual-application mode, an icon of a paging mode, and an exit control to a cropped canvas after putting the cropped canvas on a display 1.

In an embodiment, when detecting an operation of tapping the paging mode, the mobile phone B may obtain a touch event of the user and corresponding coordinates. The mobile phone B may send the touch event and converted coordinates to the mobile phone A. The mobile phone A may switch from a full-screen mode to a paging mode based on the touch event and the converted coordinates.

For example, if the mobile phone B detects that the user performs a tap operation at a position (100, 100) on a screen, the mobile phone B determines that the event is a touch event and converts the coordinates into (100+1080, 100), namely, (1180, 100). In this case, the mobile phone B may send the touch event and the converted coordinates to the mobile phone A. After receiving the touch event and the converted coordinates, the mobile phone A may determine that the user taps the paging mode on the mobile phone B, and then perform S2103.

In an embodiment, the mobile phone B may alternatively send, to the mobile phone A, information about the coordinates (for example, (100, 100)) of the tap operation of the user detected on the screen of the mobile phone B. After the mobile phone A receives the coordinate information sent by the mobile phone B, the mobile phone A may convert the coordinates to coordinates (for example, (1180, 100)) on a canvas that is enlarged by one time. Therefore, the mobile phone A may determine that the user taps the icon of the paging mode on the mobile phone B.

It should be understood that, for a process in which the sink device sends the touch event and the converted coordinates to the source device, refer to the descriptions of the foregoing embodiment. For brevity, details are not described herein again.

In an embodiment, the icon of the paging mode displayed on the mobile phone B may be drawn by the mobile phone B. After receiving the canvas on the display 1 sent by the mobile phone A, the mobile phone B may add an icon of a multiplier mode, an icon of a dual-application mode, an icon of a paging mode, and an exit control to the canvas. When the mobile phone B detects the operation of tapping the icon of the paging mode by the user, the mobile phone B sends indication information to the mobile phone A, where the indication information indicates that the mobile phone B expects to enter a paging mode.

For example, when the mobile phone B detects the operation of tapping the icon of the paging mode by the user, the mobile phone B may send a UDP packet to the mobile phone A. The UDP packet may carry the indication information, and the indication information indicates that the mobile phone B expects to enter a paging mode. The UPD packet includes a data part of an IP datagram. The data part of the IP datagram may include an extensible bit. The mobile phone B and the mobile phone A may agree on content of a specified extensible bit. When a specified extensible bit is 1, the mobile phone A may learn that the mobile phone B expects to join a paging mode.

In an embodiment, as shown in FIG. 11(b), after the mobile phone B detects that the user drags a control 1102 to partially or wholly overlap with a control corresponding to the paging mode, the mobile phone B sends indication information to the mobile phone A, where the indication information indicates that the mobile phone B expects to enter a paging mode.

In an embodiment, after the mobile phone B detects that the user drags the control 1102 to partially or wholly overlap with the control corresponding to the paging mode, the mobile phone B may send a UDP packet to the mobile phone A. The UDP packet may carry the indication information, and the indication information indicates that the mobile phone B expects to enter a paging mode. The UPD packet includes a data part of an IP datagram. The data part of the IP datagram may include an extensible bit. The mobile phone A and the mobile phone B may agree on content of a specified extensible bit. When a specified extensible bit is 1, the mobile phone A may learn that the mobile phone B expects to enter a paging mode.

S2103: In response to receiving the indication from the sink device, the source device performs splicing display with the sink device in a paging mode.

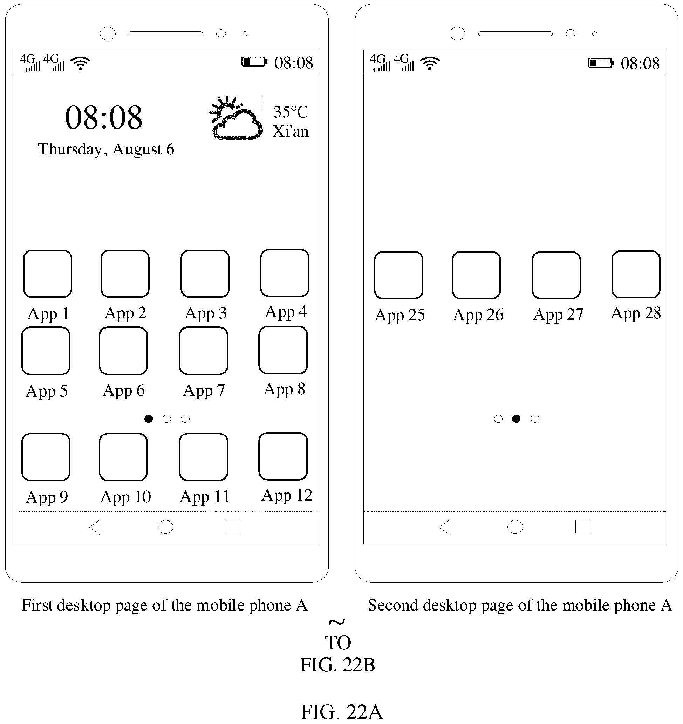

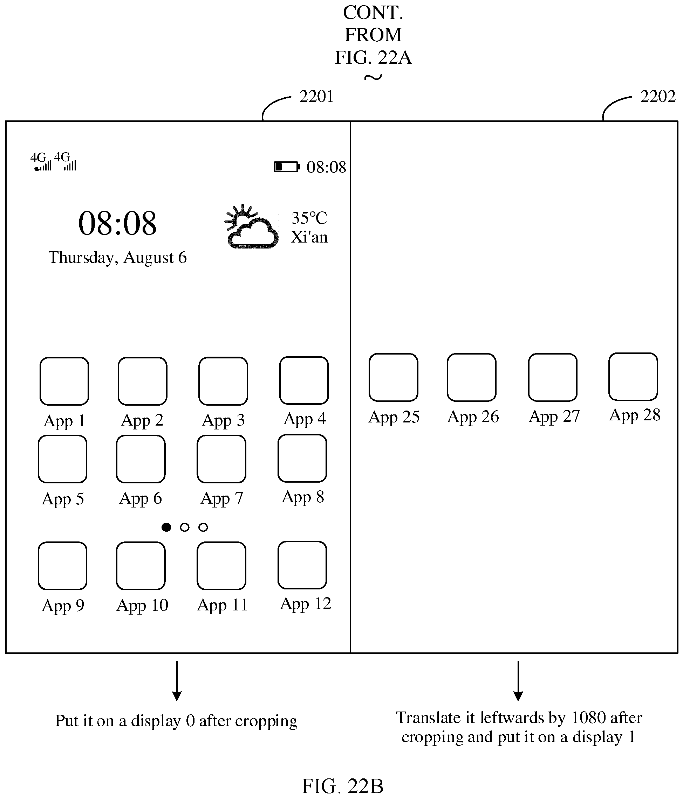

FIG. 22A and FIG. 22B are a schematic diagram of displaying a desktop of a source end in a paging mode. After the source device receives the indication from the sink device, the source device enlarges a size of a display canvas by one time, and simultaneously the source end adjusts a desktop layout. For example, a system of the source device is an Android system. An app of the source device overrides protected void onSizeChanged(int w, int h, int oldw, int oldh), so that icons (icon) on a first page are displayed in a region 2201 and icons on a second page are displayed in a region 2202.

In this embodiment of this application, the paging mode is different from mirroring of one desktop, and is also different from two independent desktops. In the paging mode, a first desktop page is displayed on the first page, and the second page is a natural extension of the first desktop page and the second page may not include a function bar at the bottom. In the paging mode, each page supports a tap operation, a slide operation, and a gesture operation. For example, sliding may be performed on each page, and sliding between two pages is linked.

For example, a system of the source device is an Android system. After monitoring a change of a canvas size, an app of the source device invokes the interface getSplicingModeType() shown in Table 1 to determine a current mode. For example, when a return value is 2, it may be determined that the source device is currently in a paging mode, and therefore may switch to the paging mode.

For example, Table 1 shows a correspondence among a package name, an interface prototype, and a return value.

**Table 1**

| Package name | Interface | Return value | Interface description |
|---|---|---|---|
| WindowM anagerEx | getSplicing ModeType() | SPLICING_MODE_ NONE = 0 SPLICING_MODE_ FULLSCREEN = 1 SPLICING_MODE_ BOOKMODE = 2 SPLICING_MODE_ SUBPAGE = 3 SPLICING_MODE_ MULTIAPP = 4 | Obtain a current mode, where 0 represents no splicing, 1 represents a full-screen mode, 2 represents a paging mode, 3 represents a multiplier mode, and 4 represents a dual-application mode |

When determining that the source device is currently in a paging mode, the app overrides protected void onSizeChanged(int w, int h, int oldw, int oldh), so that the icons (icon) on the first page are displayed in the region 2201 and the icons on the second page are displayed in the region 2202. The source device may translate a canvas in the cropped region 2202 leftwards by 1080 and then put the translated canvas in the display 1, to project the display 1 to the sink device.

S2104: The source device crops and displays a half of the canvas that is enlarged by one time, creates a virtual display (display 1), and puts the other cropped half on the display 1.

S2105: The source device projects the display 1 to the sink device.

With reference to FIG. 8(b), the source device (the mobile phone A) may display an icon of a first desktop page, and the sink device (the mobile phone B) may display an icon of a second desktop page.

S2106: The source device detects an operation of starting the app by the user, and loads content on a second page on the canvas that is enlarged by one time.

S2107: The source device crops and displays a half of the canvas that is enlarged by one time, and displays the other half on the display 1.

For example, as shown in FIG. 8(c), the mobile phone A may display, on the canvas that is enlarged by one time, a canvas of a first page and a canvas of a second page (PDF1/8 and PDF2/8) of App 5. The mobile phone A may crop content on the first page (PDF1/8) and display the content through a display, and translate the canvas of the second page (PDF2/8) obtained through cropping leftwards by 1080 and then put the translated canvas on the display 1. The mobile phone A may project the display 1 to the mobile phone B.

It should be understood that, for specific implementation processes of S2106 and S2107, refer to the foregoing processes of S2103 and S2104. For brevity, details are not described herein again.

S2108: The source device projects the display 1 to the sink device.

For example, the sink device (the mobile phone B) may display content on the second page (PDF2/8).

This embodiment of this application provides a manner of entering a paging mode, and an application may adjust a layout in this mode, thereby bringing better user experience during multi-device splicing.

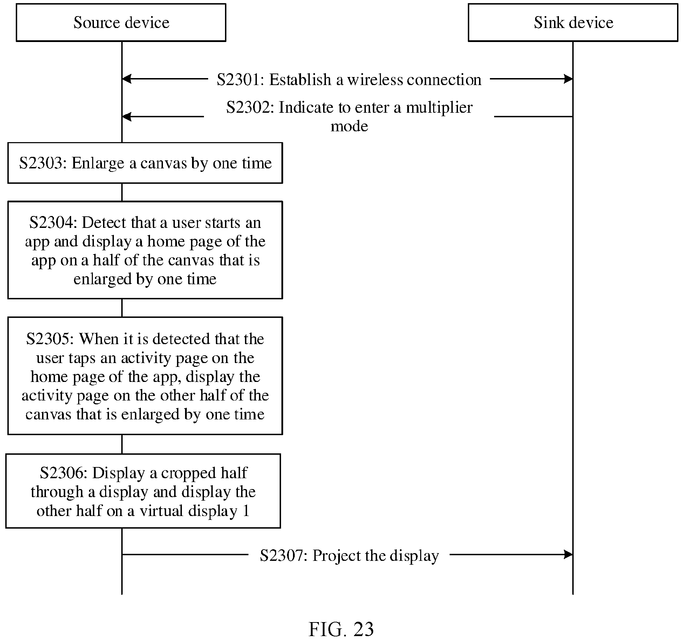

FIG. 23 is a schematic flowchart of a method 2300 for performing display by a source device and a sink device in a multiplier mode. The method 2300 includes the following steps.

S2301: The source device establishes a wireless connection to the sink device.

It should be understood that for a process of S2301, refer to the foregoing process of S1601. For brevity, details are not described herein again.

S2302: After the sink device detects a fourth operation of a user, the sink device indicates the source device to enter a multiplier mode.

For example, as shown in FIG. 9(a), an icon of a multiplier mode displayed on the mobile phone B may be drawn by the mobile phone A. The mobile phone A may add an icon of a multiplier mode, an icon of a dual-application mode, an icon of a paging mode, and an exit control to a cropped canvas after putting the cropped canvas on a display 1.

In an embodiment, when detecting an operation of tapping the paging mode, the mobile phone B may obtain a touch event of the user and corresponding coordinate information. The mobile phone B may send the touch event and the coordinate information to the mobile phone A. The mobile phone A may switch from a full-screen mode to a multiplier mode based on the touch event and the coordinate information.

For example, if the mobile phone B detects that the user performs a tap operation at a position (100, 100) on a screen, the mobile phone B may determine that the event is a touch event, and convert the coordinates into (100+1080, 100), namely, (1180, 100). In this case, the mobile phone B may send the touch event and the converted coordinates to the mobile phone A. After receiving the touch event and the converted coordinates, the mobile phone A may determine that the user taps the multiplier mode on the mobile phone B, and then perform S2303.

In an embodiment, the mobile phone B may alternatively send, to the mobile phone A, information about the coordinates (for example, (100, 100)) of the tap operation of the user detected on the screen of the mobile phone B. After the mobile phone A receives the coordinate information sent by the mobile phone B, the mobile phone A may convert the coordinates to coordinates (for example, (1180, 100)) on a canvas that is enlarged by one time. Therefore, the mobile phone A may determine that the user taps the icon of the paging mode on the mobile phone B.

It should be understood that, for a process in which the mobile phone B sends the touch event and the information about the converted coordinates to the mobile phone A, refer to the descriptions of the foregoing embodiment. For brevity, details are not described herein again.

In an embodiment, the icon of the paging mode displayed on the mobile phone B may be drawn by the mobile phone B. After receiving the canvas on the display 1 sent by the mobile phone A, the mobile phone B may add an icon of a multiplier mode, an icon of a dual-application mode, an icon of a paging mode, and an exit control to the canvas. When the mobile phone B detects the operation of tapping the icon of the multiplier mode by the user, the mobile phone B sends indication information to the mobile phone A, where the indication information indicates that the mobile phone B expects to enter a multiplier mode.

For example, when the mobile phone B detects the operation of tapping the icon of the multiplier mode by the user, the mobile phone B may send a UDP packet to the mobile phone A. The UDP packet may carry the indication information, and the indication information indicates that the mobile phone B expects to enter a multiplier mode. The UPD packet includes a data part of an IP datagram. The data part of the IP datagram may include an extensible bit. The mobile phone B and the mobile phone A may agree on content of a specified extensible bit. When a specified extensible bit is 1, the mobile phone A may learn that the mobile phone B expects to enter a multiplier mode.

For example, as shown in FIG. 11(b), after the mobile phone B detects that the user drags a control 1102 to partially or wholly overlap with a control corresponding to the multiplier mode, the mobile phone B may send indication information to the mobile phone A, where the indication information indicates that the mobile phone B expects to enter a multiplier mode.

S2303: In response to receiving the indication from the sink device, the source device enlarges a size of a display canvas by one time.

S2304: Detect that the user starts an app, and the source end displays a home page of the app on a half of the canvas that is enlarged by one time.

For example, as shown in FIG. 9(c), the mobile phone A may display a home page of App 6 on the left half of the canvas that is enlarged by one time, and the mobile phone A may crop the left half and put the left half on a display 0, so that the mobile phone A displays a canvas shown on the display 0. In this case, because the mobile phone A has not detected an operation of tapping an activity page by the user, content to be displayed on the right half is not limited. The mobile phone A may display a desktop of the mobile phone A on the right half of the canvas that is enlarged by one time. The mobile phone A may crop the right half and put the right half on the display 1, so that the mobile phone A projects the display 1 to the mobile phone B. Alternatively, the mobile phone A may not perform projection on the mobile phone B, and the mobile phone B displays a desktop of the mobile phone B.

S2305: When detecting that the user taps an activity (activity) page on the home page of the app, the source device displays the activity page on the other half of the canvas that is enlarged by one time.

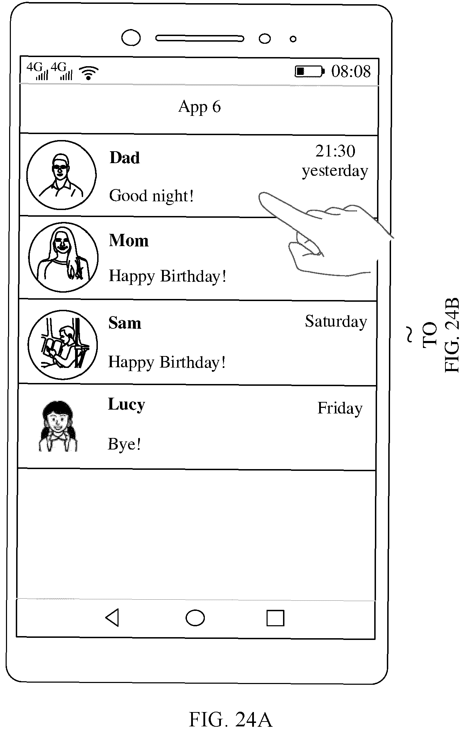

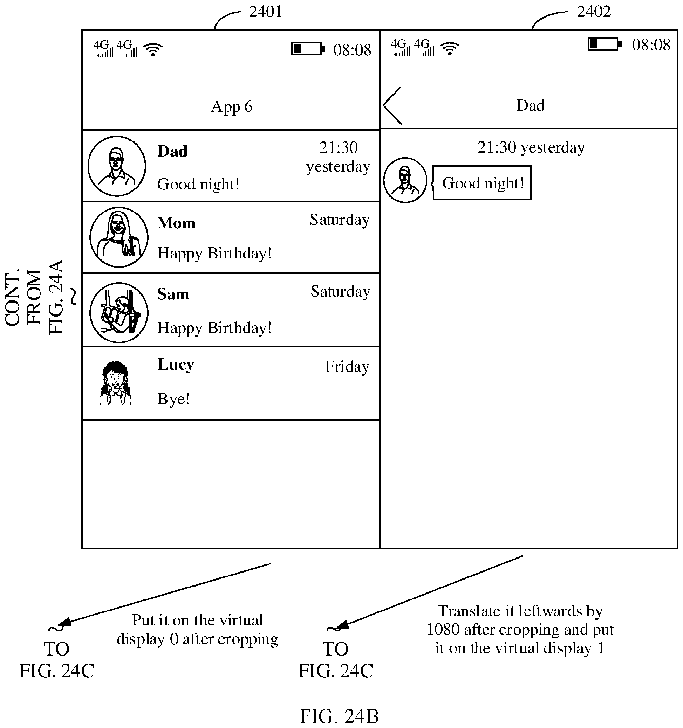

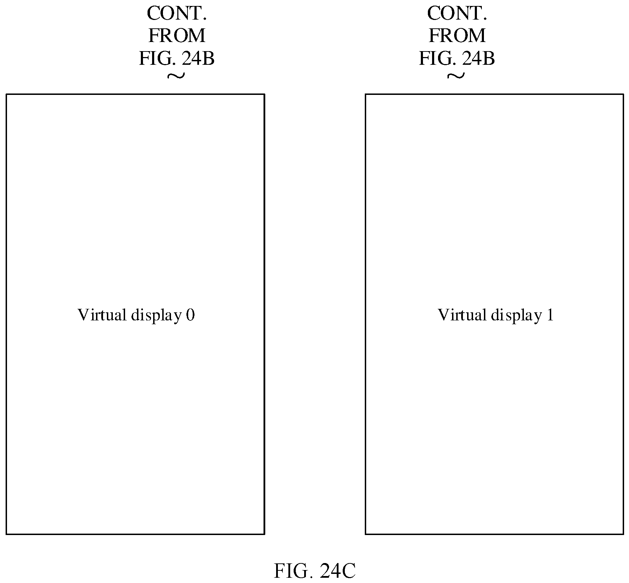

FIG. 24A to FIG. 24C show a process of opening an activity page in an application in a multiplier mode. GUIs shown in FIG. 9(a) to FIG. 9(f) are used as an example. When detecting an operation of tapping an activity page on a home page of an app by the user, the source device may display content on the home page of the app in a region 2401 that is enlarged by one time, and display content on the activity page in a region 2402. The source device may crop the canvas that is enlarged by one time, put a canvas in the region 2401 on the display 0, and display the canvas on the display 0 through a display. The source device may translate a canvas in the region 2402 leftwards by 1080 and then put the translated canvas on the display 1, and project the display 1 to the sink device, so that the sink device displays the activity page.

In this embodiment of this application, when detecting that the user starts an app, the source device may display, by default, a home page of the app on the left half of the canvas that is enlarged by one time. When the source device detects that the user taps an activity page, the source device may invoke an API to display the activity page on the right half.

For example, Table 2 shows a correspondence among a package name, an interface prototype, and a return value.

**Table 2**

| Package name | Interface prototype | Return value | Interface description |
|---|---|---|---|
| Activity | public void startActivity (Intent) | void | An extended field "position" is added to the Intent, and intent.putExtra ("position", value) is written to stare an activity page at a specified orientation, where value is of an enumerated type: LEFT(0) and RIGHT (1). |

The source device invokes the interface getSplicingModeType() shown in Table 1 to determine a current mode. For example, when a return value is 3, it may be determined that the source device is currently in a multiplier mode. When the source device detects that the user taps an activity page of an app, the app may invoke the interface startActivity() shown in Table 2, and set, in the extended field "position" in the Intent, the activity page to be started in a specified orientation. For example, if a current device detects that the user taps an activity page 1 of an app and expects to start the activity page on a screen of another device (the another device is located on a right side of the current device), the current device writes intent.putExtra ("position", RIGHT) into the Intent, and may display the activity page 1 on the another device by invoking startActivity (Intent).

For example, as shown in FIG. 9(c), when the mobile phone A starts App 6, App 6 may invoke the interface getSplicingModeType() to determine that the mobile phone A is currently in a multiplier mode. When the mobile phone A detects that the user taps a chat record between the user and a contact Dad, App 6 determines that an activity page corresponding to a chat interface between the user and the contact Dad needs to be started. The mobile phone A determines that the mobile phone B is located on a right side of the mobile phone A. In this case, the mobile phone A may write intent.putExtra ("position", RIGHT) into the Intent, and may display the activity page corresponding to the chat interface between the user and the contact Dad on the device B by invoking startActivity (Intent). The mobile phone A may crop the canvas that is enlarged by one time, and display a canvas corresponding to a chat list between the user and a plurality of contacts through a display. The mobile phone A may put the activity page that is obtained through cropping and that is corresponding to the chat interface between the user and the contact Dad on the display 1 and project the display 1 to the mobile phone B, so that the mobile phone B displays the activity page.

S2306: The source device crops the canvas that is enlarged by one time, displays a half of the cropped canvas through a display, and displays the other half on the display 1.

S2307: The source device projects content on the display 1 to the sink device.

This embodiment of this application provides a manner of displaying upper-level and lower-level activity pages of an app in a multiplier mode. In the multiplier mode, a plurality of activity pages are displayed by using a plurality of devices, thereby bringing better user experience during multi-device splicing.

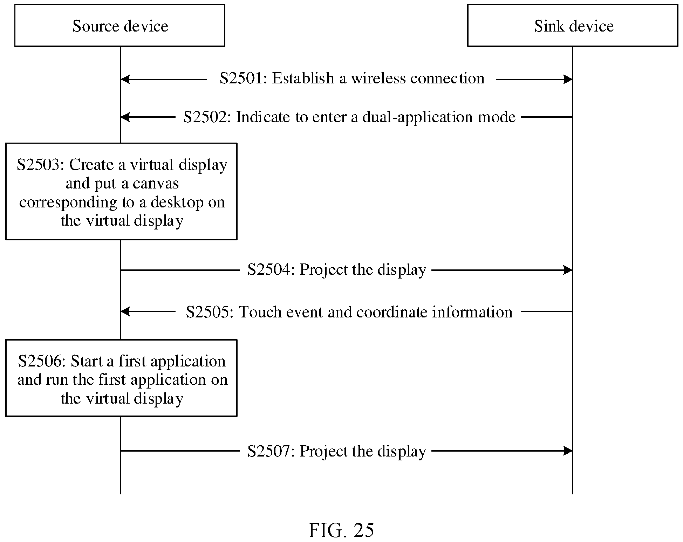

FIG. 25 is a schematic flowchart of a method 2500 for performing display by a source device and a sink device in a dual-application mode. The method 2500 includes the following steps.

S2501: The source device establishes a wireless connection to the sink device.

It should be understood that for a process of S2501, refer to the foregoing process of S1601. For brevity, details are not described herein again.

S2502: After the sink device detects a fifth operation of a user, the sink device indicates the source device to enter a dual-application mode.

For example, as shown in FIG. 7(a), an icon of a dual-application mode displayed on the mobile phone B may be drawn by the mobile phone A. The mobile phone A may add an icon of a multiplier mode, an icon of a dual-application mode, an icon of a paging mode, and an exit control to a cropped canvas after putting the cropped canvas on a display 1.

In an embodiment, when detecting an operation of tapping a dual-application mode, the mobile phone B may obtain a touch event of the user and corresponding coordinates. The mobile phone B may send the touch event and converted coordinates to the mobile phone A. The mobile phone A may switch from a full-screen mode to a dual-application mode based on the touch event and coordinate information.

For example, if the mobile phone B detects that the user performs a tap operation at a position (100, 100) on a screen, the mobile phone B may determine that the touch event is a tap event and convert the coordinates into (100+1080, 100), namely, (1180, 100). In this case, the mobile phone B may send the touch event and the converted coordinates to the mobile phone A. After receiving the touch event and the converted coordinates, the mobile phone A may determine that the user taps the icon of the dual-application mode on the mobile phone B, and then perform S2503.

In an embodiment, the mobile phone B may alternatively send, to the mobile phone A, information about the coordinates (for example, (100, 100)) of the tap operation of the user detected on the screen of the mobile phone B. After the mobile phone A receives the coordinate information sent by the mobile phone B, the mobile phone A may convert the coordinates to coordinates (for example, (1180, 100)) on a canvas that is enlarged by one time. Therefore, the mobile phone A may determine that the user taps the icon of the dual-application mode on the mobile phone B.

It should be understood that, for a process in which the mobile phone B sends the touch event and the coordinate information to the mobile phone A, refer to the descriptions of the foregoing embodiment. For brevity, details are not described herein again.

In an embodiment, the icon of the dual-application mode displayed on the mobile phone B may be drawn by the mobile phone B. After receiving the canvas on the display 1 sent by the mobile phone A, the mobile phone B may add an icon of a multiplier mode, an icon of a dual-application mode, an icon of a paging mode, and an exit control to the canvas. When the mobile phone B detects the operation of tapping the icon of the dual-application mode by the user, the mobile phone B sends indication information to the mobile phone A, where the indication information indicates that the mobile phone B expects to enter a dual-application mode.

For example, when the mobile phone B detects the operation of tapping the icon of the dual-application mode by the user, the mobile phone B may send a UDP packet to the mobile phone A. The UDP packet may carry the indication information, and the indication information indicates that the mobile phone B expects to enter a dual-application mode. The UPD packet includes a data part of an IP datagram. The data part of the IP datagram may include an extensible bit. The mobile phone B and the mobile phone A may agree on content of a specified extensible bit. When a specified extensible bit is 1, the mobile phone A may learn that the mobile phone B expects to enter a dual-application mode.

S2503: In response to receiving the indication from the sink device, the source device creates a virtual display (display) and puts a canvas corresponding to a desktop of the source device on the display.

S2504: The source device projects the display to the sink device.

In an embodiment, for example, the source device is an Android system. After receiving the indication that the sink device expects to enter a dual-application mode, the source device may create the display. The source device may use a secondLauncher (secondLauncher) mechanism of Android to start secondLauncher on the display and then project the display to the sink device, so that the sink device can display the desktop of the source device.

For example, as shown in FIG. 7(b), after receiving the indication that the mobile phone B expects to enter a dual-application mode, the mobile phone A may start a desktop (including a network standard, a Wi-Fi connection status, and a battery level in a status bar, weather information, date information, and icons of App 1 to App 12) of the mobile phone A on the display and then project the display to the mobile phone B, so that the mobile phone B can also display the desktop of the mobile phone A.

S2505: The sink device detects that the user taps an icon of a first application, and sends a touch event and coordinate information to the source device.

It should be understood that for a process in which the sink device sends the touch event and the coordinate information to the source device, refer to the descriptions of the foregoing embodiment. For brevity, details are not described herein again.

S2506: In response to receiving the touch event and the coordinate information, the source device may start the first application and run the first application on the display.

For example, as shown in FIG. 7(c), when the mobile phone B detects that the user taps an icon of App 4, the mobile phone B may send, to the mobile phone A, a touch event and coordinate information that is collected by the mobile phone B and that is obtained when the user taps the icon. After receiving the touch event and the coordinate information, the mobile phone A may determine that the mobile phone B detects that the user taps the screen and detects the corresponding coordinate information. Therefore, the mobile phone A may determine that the user taps the icon of App 4 on the mobile phone B. The mobile phone A may start App 4, run App 4 on the display, and then project the display to the mobile phone B.

S2507: The source device projects the display to the sink device.

As shown in FIG. 7(d), the mobile phone B may display an interface of App 4.

It should be understood that, for a display process when the source device detects the operation of the user, refer to the descriptions in the conventional technology. For brevity, details are not described herein.

This embodiment of this application provides a method for separately displaying different applications of the source device on the source device and the sink device in a dual-application mode, to avoid a process in which the user switches back and forth between different applications by using the source device, thereby bringing better user experience during multi-device splicing.

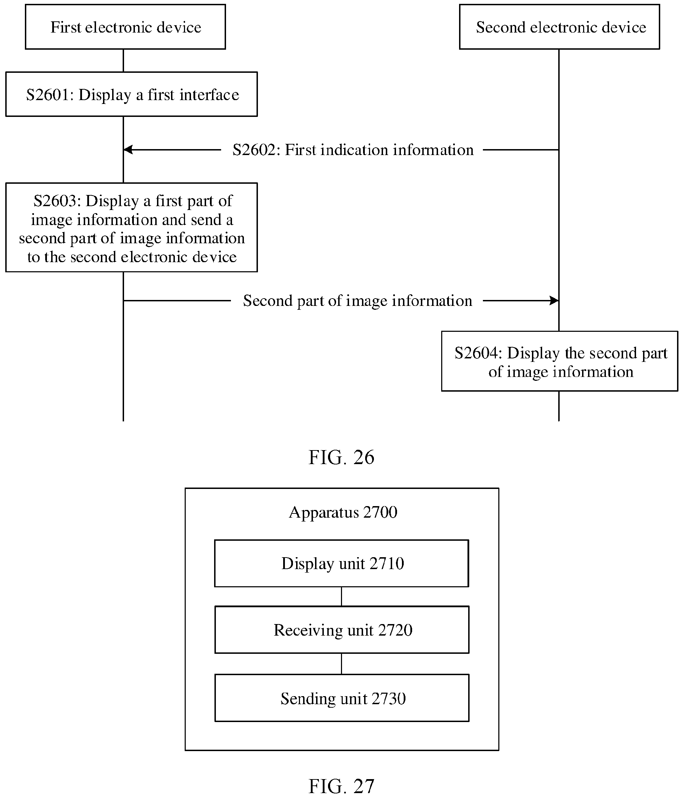

FIG. 26 is a schematic flowchart of a splicing display method 2600 according to an embodiment of this application. The method may be performed by a first electronic device and a second electronic device. The first electronic device may be the foregoing source device, the second electronic device may be the foregoing sink device, and the first electronic device may communicate with the second electronic device through a near field wireless connection. As shown in FIG. 26, the method 2600 includes the following steps.

S2601: The first electronic device displays a first interface.

In an embodiment, the first interface may be a desktop of the first electronic device, or may be a display interface of an application in the first electronic device, or may be a lock screen interface of the first electronic device. A type of the first interface is not specifically limited in this embodiment of this application.

For example, as shown in FIG. 3(a), the first interface may be a display interface of a video app on the mobile phone A.

S2602: The second electronic device sends first indication information to the first electronic device in response to detecting a first input of a user, where the first indication information indicates the first electronic device and the second electronic device to perform splicing display.

In an embodiment, the splicing display includes splicing display in a full-screen mode, splicing display in a paging mode, splicing display in a multiplier mode, or splicing display in a dual-application mode.

It should be understood that for an implementation process in which the second electronic device sends the first indication information to the first electronic device, refer to the descriptions of the foregoing embodiment. Details are not described herein again.

S2603: In response to receiving the first indication information, the first electronic device displays a first part of image information and sends a second part of image information to the second electronic device based on orientation information of the first electronic device and the second electronic device, where the first part of image information and the second part of image information are associated with the first interface.

In an embodiment, if the first electronic device determines to perform splicing display with the second electronic device in a full-screen mode, in response to receiving the first indication information, the first electronic device may enlarge image information corresponding to the first interface; and the first electronic device may segment the enlarged image information to obtain the first part of image information and the second part of image information. In other words, the first part of image information and the second part of image information are obtained after the first electronic device performs enlarging and segmentation on the first interface. Therefore, the first part of image information and the second part of image information are associated with the first interface.

In an embodiment, before enlarging the image information corresponding to the first interface, the first electronic device receives first information sent by the second electronic device, where the first information indicates a size of a display of the second electronic device; and the first electronic device enlarges the image information corresponding to the first interface based on a quantity of electronic devices performing splicing display, a size of a display of the first electronic device, and the size of the display of the second electronic device.

For example, if only the first electronic device and the second electronic device perform splicing display, the first electronic device may determine to enlarge a size of the image information corresponding to the first interface by one time. A size of the first electronic device in a first direction is A and a size of the first electronic device in a second direction is B, and a size of the second electronic device in the first direction is A and a size of the second electronic device in the second direction is B. When the first electronic device and the second electronic device are distributed (or arranged) along the first direction, the first electronic device may enlarge a size of the image information corresponding to the first interface in the first direction to 2A and keep a size of the image information corresponding to the first interface in the second direction unchanged.

It should be understood that the size of the first electronic device in the first direction may be a size of the display of the first electronic device in the first direction or a size of the first interface in the first direction; and the size of the first electronic device in the second direction may be a size of the display of the first electronic device in the second direction or a size of the first interface in the second direction.

It should be further understood that the first direction and the second direction may be in a perpendicular relationship. If the first direction is a horizontal direction, the second direction may be a vertical direction. If the first direction is a vertical direction, the second direction may be a horizontal direction.

In an embodiment, the size of the first electronic device in the first direction is A and the size of the first electronic device in the second direction is B, and the size of the second electronic device in the first direction is C and the size of the second electronic device in the second direction is D, where A is greater than C and B is greater than D. In this case, the size of the image information corresponding to the first interface in the first direction may be enlarged to 2A and the size of the image information corresponding to the first interface in the second direction keeps unchanged. The first electronic device may segment an enlarged canvas (for example, segment the enlarged canvas into two regions of a same size in a segmentation manner), and the first electronic device may proportionally reduce a region that needs to be sent to the second electronic device. For example, if A/B is less than C/D, the first electronic device may reduce the region that needs to be sent to the second electronic device to a size A×D/B in the first direction and a size D in the second direction. Therefore, the first electronic device may send the reduced region to the second electronic device, so that the second electronic device displays a canvas in the reduced region. For another example, if A/B is greater than C/D, the first electronic device may reduce the region that needs to be sent to the second electronic device to a size C in the first direction and a size B×C/A in the second direction. Therefore, the first electronic device may send the reduced region to the second electronic device, so that the second electronic device displays a canvas in the reduced region.

In an embodiment, a size of the display of the first electronic device in a first direction is a first size, a size of the first electronic device in a second direction is a second size, a size of the display of the second electronic device in the first direction is a third size, the first direction is perpendicular to the second direction, and when the first electronic device and the second electronic device perform splicing display along the first direction, the first electronic device enlarges a size of the image information corresponding to the first interface in the first direction to a fourth size and keeps a size of the image information corresponding to the first interface in the second direction unchanged, where the fourth size is a sum of the first size and the third size.

In an embodiment, a third part of image information is further obtained after the enlarged image information is segmented, the third part of image information is located between the first part of image information and the second part of image information, and the third part of image information is determined by the first electronic device based on a distance between the first electronic device and the second electronic device.

For example, the third part of image information may be a region that needs to be cropped in FIG. 18.

In an embodiment, content on a first page of a first file is displayed on the first interface. When determining that the first file includes content on a plurality of pages, the first electronic device may display the content on the first page and send content on a second page of the first file to the second electronic device. The second electronic device displays the content on the second page in response to receiving the content on the second page.

In this embodiment of this application, if the first electronic device determines to perform splicing display with the second electronic device in a paging mode, the first electronic device may send the content on the second page of the first file to the second electronic device when displaying the content on the first page of the first file, so that the second electronic device displays the content on the second page. In this case, the first part of image information may be the content on the first page, the second part of image information may be the content on the second page, and both the first part of image information and the second part of image information are associated with the first file displayed on the first interface.

For example, if the first electronic device is displaying content on a first page of a document, the document includes content on a plurality of pages. The second electronic device displays a desktop of the second electronic device. The second electronic device may send the first indication information to the first electronic device when the second electronic device detects the first input of the user, where the first indication information may indicate the first electronic device and the second electronic device to perform splicing display. If the first electronic device determines to perform splicing display with the second electronic device in a paging mode, the first electronic device may continue to display the content on the first page of the document and the first electronic device may send content on a second page of the document to the second electronic device, so that the second electronic device displays the content on the second page.

In an embodiment, the first file further includes content on a third page and content on a fourth page. In response to detecting a second input of the user, the first electronic device displays the content on the third page and sends the content on the fourth page to the second electronic device. The second electronic device displays the content on the fourth page in response to receiving the content on the fourth page.

For example, as shown in FIG. 8(c), the PDF includes content on eight pages. Currently, the first electronic device and the second electronic device respectively display content on a first page and content on a second page in a paging mode. When the mobile phone A detects a page flip operation of the user (for example, the mobile phone A detects that the user performs sliding from bottom to top on the screen or detects that the user performs sliding from right to left on the screen), the mobile phone A may display content on a third page of the PDF and the mobile phone A may send content on a fourth page of the PDF to the mobile phone B, so that the mobile phone B displays the content on the fourth page.

In an embodiment, the first file further includes content on a third page and content on a fourth page. The second electronic device sends second indication information to the first electronic device in response to detecting a third input of the user, where the second indication information indicates that the second electronic device detects the third input. In response to receiving the second indication information, the first electronic device displays the content on the third page and sends the content on the fourth page to the second electronic device. The second electronic device displays the content on the fourth page in response to receiving the content on the fourth page.

For example, as shown in FIG. 8(c), the PDF includes content on eight pages. Currently, the first electronic device and the second electronic device respectively display content on a first page and content on a second page in a paging mode. When the mobile phone B detects a page flip operation of the user (for example, the mobile phone B detects that the user performs sliding from bottom to top on the screen or detects that the user performs sliding from right to left on the screen), the mobile phone B may send a corresponding touch event (for example, a slide event) to the mobile phone A. The mobile phone A may determine, based on the touch event sent by the mobile phone B, that the mobile phone B detects the page flip operation of the user. In this case, the mobile phone A may be triggered to display content on a third page of the PDF and the mobile phone A may send content on a fourth page of the PDF to the mobile phone B, so that the mobile phone B displays the content on the fourth page.

In an embodiment, the first interface is a desktop of the first electronic device, in response to receiving the first indication information, the first electronic device displays the desktop and sends image information corresponding to the desktop to the second electronic device. The second electronic device displays the desktop in response to receiving the image information corresponding to the desktop.

For example, the first electronic device may display the desktop of the first electronic device. The second electronic device may send the first indication information to the first electronic device when the second electronic device detects the first input of the user, where the first indication information indicates the first electronic device and the second electronic device to perform splicing display. If the first electronic device determines to perform splicing display with the second electronic device in a dual-application mode, the first electronic device may continue to display the desktop of the first electronic device and the first electronic device may send the image information corresponding to the desktop to the second electronic device, so that the second electronic device displays the desktop of the first electronic device.

In an embodiment, the desktop includes an icon of a first application, and the second electronic device sends third indication information to the first electronic device in response to a fourth input of the user, where the third indication information indicates that the second electronic device detects the fourth input, and the fourth input is an input for the icon of the first application. The first electronic device sends image information corresponding to a display interface of the first application to the second electronic device in response to receiving the third indication information. The second electronic device displays the display interface of the first application in response to receiving the image information corresponding to the display interface of the first application.

For example, as shown in FIG. 7(c), when the mobile phone B detects that the user taps an icon of App 4, the mobile phone B may send a corresponding touch event (for example, a tap event) to the mobile phone A. In response to receiving the touch event sent by the mobile phone B, the mobile phone A may determine that the mobile phone B detects that the user taps the icon of App 4, and the mobile phone A may send image information corresponding to a home page of App 4 to the mobile phone B, so that the mobile phone B displays the home page of App 4.

In an embodiment, if the mobile phone A does not start App 4 in the background when the mobile phone A receives the touch event sent by the mobile phone B, the mobile phone A may send the image information corresponding to the home page of App 4 to the mobile phone B. If the mobile phone A has started App 4 in the background and is on a display interface of App 4 when the mobile phone A receives the touch event sent by the mobile phone B, the mobile phone A may send image information corresponding to the display interface of App 4 to the mobile phone B, so that the mobile phone B displays the display interface of App 4.

In an embodiment, the desktop further includes an icon of a second application, and the first electronic device displays a display interface of the second application in response to detecting a fifth input of the user for the icon of the second application.

In an embodiment, the first interface is a display interface of a third application, the display interface includes a first interface element, and the first interface element is associated with a second interface of the third application. The first part of image information is image information corresponding to the first interface, and the second part of image information is image information corresponding to the first interface; or the first part of image information is image information corresponding to the first interface, and the second part of image information is image information corresponding to the second interface.

In this embodiment of this application, if the first electronic device determines to perform splicing display with the second electronic device in a multiplier mode, the first electronic device may send image information corresponding to a current display interface of the first electronic device to the second electronic device, or the first electronic device may select an interface element on a current display interface, where the interface element corresponds to another display interface, and the first electronic device may send image information corresponding to the another display interface to the second electronic device. The current display interface of the first electronic device may be a level-1 page, the another display interface may be a level-2 page, and the level-1 page and the level-2 page are associated.

For example, the first electronic device may display a display interface 1 of an application. The display interface 1 includes an interface element 1, and the interface element is associated with a display interface 2 of the application.

The second electronic device may send the first indication information to the first electronic device when the second electronic device detects the first input of the user, where the first indication information indicates the first electronic device and the second electronic device to perform splicing display. If the first electronic device determines to perform splicing display with the second electronic device in a multiplier mode, the first electronic device may continue to display the display interface 1 and the first electronic device may send image information of the display interface 1 to the second electronic device, so that the second electronic device displays the display interface 1; or the first electronic device may continue to display the display interface 1 and the first electronic device may send image information of the display interface 2 to the second electronic device, so that the second electronic device displays the display interface 2.

In an embodiment, the interface element 1 may be any interface element that is on the display interface 1 and that is associated with another display interface; or the interface element 1 may be an interface element in a preset direction (for example, an upper left side).

For example, the first electronic device may display the desktop of the first electronic device. The second electronic device may send the first indication information to the first electronic device when the second electronic device detects the first input of the user, where the first indication information indicates the first electronic device and the second electronic device to perform splicing display. If the first electronic device determines to perform splicing display with the second electronic device in a multiplier mode, the first electronic device may continue to display the desktop of the first electronic device and the first electronic device may send the image information of the desktop of the first electronic device to the second electronic device, so that the second electronic device displays the desktop of the first electronic device; or the first electronic device may continue to display the desktop of the first electronic device and the first electronic device does not send any image information to the second electronic device, so that the second electronic device can continue to display the current interface of the second electronic device.

In an embodiment, the first interface further includes a second interface element, and the second interface element is associated with a third interface of the third application. The first electronic device is further configured to: in response to detecting a sixth input of the user for the second interface element, display the image information corresponding to the first interface and send image information corresponding to the third interface to the second electronic device. The second electronic device is further configured to display the third interface in response to receiving the image information corresponding to the third interface.

For example, as shown in FIG. 9(c), the second interface element may be a chat record between the user and a contact Dad, and the second interface element is associated with a chat interface between the user and the contact Dad. When the mobile phone A detects that the user taps the chat record with the contact Dad, the mobile phone A may continue to display the current interface and the mobile phone A may send the chat interface between the user and the contact Dad to the mobile phone B, so that the mobile phone B displays the chat interface between the user and the contact Dad.

In an embodiment, the third interface includes a third interface element, and the third interface element is associated with a fourth interface of the third application. The second electronic device sends fourth indication information to the first electronic device in response to detecting a seventh input of the user, where the fourth indication information indicates that the second electronic device detects the seventh input, and the seventh input is an input for the third interface element. In response to receiving the fourth indication information, the first electronic device displays the fourth interface and sends the image information corresponding to the third interface to the second electronic device. The second electronic device displays the third interface in response to receiving the image information corresponding to the third interface.

For example, as shown in FIG. 9(d), when the mobile phone B detects a tap operation of the user, the mobile phone B may send a corresponding touch event (for example, a tap event) to the mobile phone A. In response to receiving the touch event, the mobile phone A may determine that the mobile phone B detects that the user taps a video call control, so that the mobile phone A is triggered to display a video call interface between the user and the contact Dad. Simultaneously, the mobile phone A may continue to send the chat interface between the user and the contact Dad to the mobile phone B, so that the mobile phone B continues to display the chat interface between the user and the contact Dad.

S2604: The second electronic device displays the second part of image information in response to receiving the second part of image information.

In an embodiment, the second electronic device displays a first control when displaying the second part of image information.

In response to detecting an eighth input of the user for the first control, a fifth interface is displayed and fifth indication information is sent to the first electronic device, where the fifth indication information indicates the first electronic device and the second electronic device to exit splicing display, and the fifth interface is a display interface displayed before the second electronic device detects the first input.

FIG. 27 is a schematic block diagram of an apparatus 2700 according to an embodiment of this application. The apparatus 2700 may be disposed in the first electronic device in FIG. 26. The apparatus 2700 includes: a display unit 2710, configured to display a first interface; a receiving unit 2720, configured to receive first indication information sent by a second electronic device, where the first indication information indicates the apparatus and the second electronic device to perform splicing display; and the display unit 2710 is further configured to display a first part of image information based on orientation information of the first electronic device and the second electronic device in response to receiving the first indication information; and a sending unit 2730, configured to send a second part of image information to the second electronic device, where the first part of image information and the second part of image information are associated with the first interface.

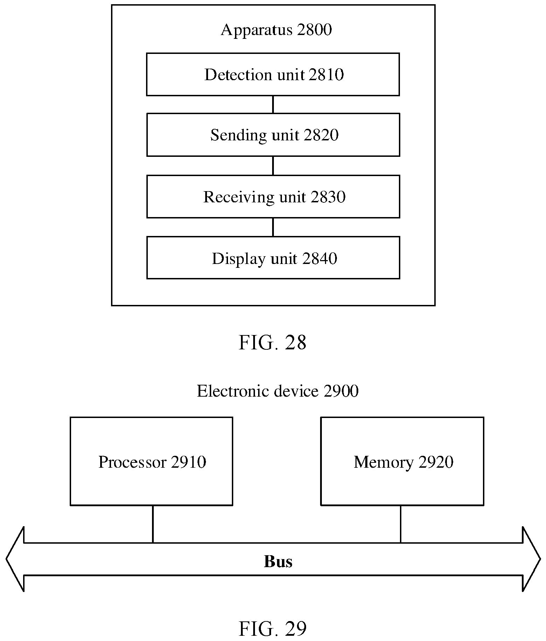

FIG. 28 is a schematic block diagram of an apparatus 2800 according to an embodiment of this application. The apparatus 2800 may be disposed in the second electronic device in FIG. 26. The apparatus 2800 includes: a detection unit 2810, configured to detect a first input of a user; a sending unit 2820, configured to send first indication information to a first electronic device in response to the first input, where the first indication information indicates the first electronic device and the apparatus to perform splicing display; a receiving unit 2830, configured to receive a second part of image information sent by the first electronic device, where the second part of image information is associated with a first interface, and the first interface is a display interface displayed when the first electronic device receives the first indication information; and a display unit 2840, configured to display the second part of image information in response to receiving the second part of image information.

FIG. 29 is a schematic diagram of a structure of an electronic device 2900 according to an embodiment of this application. As shown in FIG. 29, the electronic device includes one or more processors 2910 and one or more memories 2920. The one or more memories 2920 store one or more computer programs, and the one or more computer programs include instructions. When the instructions are run by the one or more processors 2910, the first electronic device or the second electronic device is enabled to perform the technical solutions in the foregoing embodiments.

An embodiment of this application provides a system, including a first electronic device and a second electronic device. The system is configured to perform the technical solutions in the foregoing embodiments. Implementation principles and technical effects thereof are similar to those of the foregoing method embodiments, and details are not described herein again.

An embodiment of this application provides a computer program product. When the computer program product is run on a first electronic device (or a source device), the first electronic device is enabled to perform the technical solutions in the foregoing embodiments. Implementation principles and technical effects thereof are similar to those of the foregoing method embodiments, and details are not described herein again.

An embodiment of this application provides a computer program product. When the computer program product is run on a second electronic device (or a sink device), the second electronic device is enabled to perform the technical solutions in the foregoing embodiments. Implementation principles and technical effects thereof are similar to those of the foregoing method embodiments, and details are not described herein again.

An embodiment of this application provides a readable storage medium. The readable storage medium includes instructions. When the instructions are on a first electronic device (or a source device), the first electronic device is enabled to perform the technical solutions in the foregoing embodiments. Implementation principles and technical effects thereof are similar, and details are not described herein again.

An embodiment of this application provides a readable storage medium. The readable storage medium includes instructions. When the instructions are on a second electronic device (or a sink device), the second electronic device is enabled to perform the technical solutions in the foregoing embodiments. Implementation principles and technical effects thereof are similar, and details are not described herein again.

An embodiment of this application provides a chip. The chip is configured to execute instructions. When the chip runs, the technical solutions in the foregoing embodiments are performed. Implementation principles and technical effects thereof are similar, and details are not described herein again.

A person of ordinary skill in the art may be aware that, in combination with examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed systems, apparatuses, and methods may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected depending on actual requirements to achieve the objectives of the solutions in the embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A system, wherein the system comprises a first electronic device and a second electronic device, and the first electronic device communicates with the second electronic device through a near field wireless connection;

   the first electronic device is configured to display a first interface;
   the second electronic device is configured to send first indication information to the first electronic device in response to detecting a first input of a user, wherein the first indication information indicates the first electronic device and the second electronic device to perform splicing display;
   the first electronic device is further configured to: in response to receiving the first indication information, display a first part of image information and send a second part of image information to the second electronic device based on orientation information of the first electronic device and the second electronic device, wherein the first part of image information and the second part of image information are associated with the first interface; and
   the second electronic device is further configured to display the second part of image information in response to receiving the second part of image information.

2. The system according to claim 1, wherein the first electronic device is further configured to receive first information sent by the second electronic device, wherein the first information indicates a size of a display of the second electronic device; and
   the first electronic device is specifically configured to: enlarge image information corresponding to the first interface and segment the enlarged image information based on a quantity of electronic devices performing splicing display, a size of a display of the first electronic device, and the size of the display of the second electronic device, to obtain the first part of image information and the second part of image information.

3. The system according to claim 2, wherein a size of the display of the first electronic device in a first direction is a first size, a size of the first electronic device in a second direction is a second size, a size of the display of the second electronic device in the first direction is a third size, the first direction is perpendicular to the second direction, and the first electronic device is specifically configured to:
   when the first electronic device and the second electronic device perform splicing display along the first direction, enlarge, by the first electronic device, a size of the image information corresponding to the first interface in the first direction to a fourth size and keep a size of the image information corresponding to the first interface in the second direction unchanged, wherein the fourth size is a sum of the first size and the third size.

4. The system according to claim 2 or 3, wherein a third part of image information is further obtained after the enlarged image information is segmented, the third part of image information is located between the first part of image information and the second part of image information, and the third part of image information is determined by the first electronic device based on a distance between the first electronic device and the second electronic device.

5. The system according to claim 1, wherein content on a first page of a first file is displayed on the first interface, and the first electronic device is specifically configured to:

   when it is determined that the first file comprises content on a plurality of pages, display the content on the first page and send content on a second page of the first file to the second electronic device; and
   the second electronic device is specifically configured to display the content on the second page in response to receiving the content on the second page.

6. The system according to claim 5, wherein the first file further comprises content on a third page and content on a fourth page;

   the first electronic device is further configured to: in response to detecting a second input of the user, display the content on the third page and send the content on the fourth page to the second electronic device; and
   the second electronic device is further configured to display the content on the fourth page in response to receiving the content on the fourth page.

7. The system according to claim 5, wherein the first file further comprises content on a third page and content on a fourth page;

   the second electronic device is further configured to send second indication information to the first electronic device in response to detecting a third input of the user, wherein the second indication information indicates that the second electronic device detects the third input;
   the first electronic device is further configured to: in response to receiving the second indication information, display the content on the third page and send the content on the fourth page to the second electronic device; and
   the second electronic device is further configured to display the content on the fourth page in response to receiving the content on the fourth page.

8. The system according to claim 1, wherein the first interface is a desktop of the first electronic device, and the first electronic device is specifically configured to:

   in response to receiving the first indication information, display the desktop and send image information corresponding to the desktop to the second electronic device; and
   the second electronic device is specifically configured to display the desktop in response to receiving the image information corresponding to the desktop.

9. The system according to claim 8, wherein the desktop comprises an icon of a first application;

   the second electronic device is further configured to send third indication information to the first electronic device in response to a fourth input of the user, wherein the third indication information indicates that the second electronic device detects the fourth input, and the fourth input is an input for the icon of the first application;
   the first electronic device is further configured to send image information corresponding to a display interface of the first application to the second electronic device in response to receiving the third indication information; and
   the second electronic device is further configured to display the display interface of the first application in response to receiving the image information corresponding to the display interface of the first application.

10. The system according to claim 8 or 9, wherein the desktop further comprises an icon of a second application; and the first electronic device is further configured to display a display interface of the second application in response to detecting a fifth input of the user for the icon of the second application.

11. The system according to claim 1, wherein the first interface is a display interface of a third application, the display interface comprises a first interface element, and the first interface element is associated with a second interface of the third application, wherein

   the first part of image information is image information corresponding to the first interface, and the second part of image information is image information corresponding to the first interface; or

the first part of image information is image information corresponding to the first interface, and the second part of image information is image information corresponding to the second interface.

**12.** The system according to claim 11, wherein the first interface further comprises a second interface element, and the second interface element is associated with a third interface of the third application;

the first electronic device is further configured to: in response to detecting a sixth input of the user for the second interface element, display the image information corresponding to the first interface and send image information corresponding to the third interface to the second electronic device; and

the second electronic device is further configured to display the third interface in response to receiving the image information corresponding to the third interface.

**13.** The system according to claim 12, wherein the third interface comprises a third interface element, and the third interface element is associated with a fourth interface of the third application;

the second electronic device is further configured to send fourth indication information to the first electronic device in response to detecting a seventh input of the user, wherein the fourth indication information indicates that the second electronic device detects the seventh input, and the seventh input is an input for the third interface element;

the first electronic device is further configured to: in response to receiving the fourth indication information, display the fourth interface and send the image information corresponding to the third interface to the second electronic device; and

the second electronic device is further configured to display the third interface in response to receiving the image information corresponding to the third interface.

**14.** The system according to any one of claims 1 to 13, wherein the second electronic device is further configured to: display a first control when displaying the second part of image information; and

in response to detecting an eighth input of the user for the first control, display a fifth interface and send fifth indication information to the first electronic device, wherein the fifth indication information indicates the first electronic device and the second electronic device to exit splicing display, and the fifth interface is a display interface displayed before the second electronic device detects the first input.

**15.** A splicing display method, wherein the method is applied to a first electronic device, the first electronic device communicates with a second electronic device through a near field wireless connection, and the method comprises:

displaying, by the first electronic device, a first interface;

receiving, by the first electronic device, first indication information sent by the second electronic device, wherein the first indication information indicates the first electronic device and the second electronic device to perform splicing display; and

in response to receiving the first indication information, displaying, by the first electronic device, a first part of image information and sending a second part of image information to the second electronic device based on orientation information of the first electronic device and the second electronic device, wherein the first part of image information and the second part of image information are associated with the first interface.

**16.** The method according to claim 15, wherein the method further comprises:

receiving, by the first electronic device, first information sent by the second electronic device, wherein the first information indicates a size of a display of the second electronic device; and

before the displaying a first part of image information and sending a second part of image information to the second electronic device, the method comprises:

enlarging, by the first electronic device, image information corresponding to the first interface and segmenting the enlarged image information based on a quantity of electronic devices performing splicing display, a size of a display of the first electronic device, and the size of the display of the second electronic device, to obtain the first part of image information and the second part of image information.

**17.** The method according to claim 16, wherein a size of the display of the first electronic device in a first direction is a first size, a size of the display of the first electronic device in a second direction is a second size, a size of the display of the second electronic device in the first direction is a third size, the first direction is perpendicular to the second direction, and the enlarging, by the first electronic device, image information corresponding to the first interface based on a quantity of electronic devices performing splicing display, a size of a display of the first electronic device, and the size of the display of the second electronic device comprises:

when the first electronic device and the second electronic device perform splicing display along the first direction, enlarging, by the first electronic device, a size of the image information corresponding to the first interface in the first direction to a fourth size and keeping a size of the image information corresponding to the first interface in the second direction unchanged, wherein the fourth size is a sum of the first size and the third size.

18. The method according to claim 16 or 17, wherein a third part of image information is further obtained after the enlarged image information is segmented, the third part of image information is located between the first part of image information and the second part of image information, and the third part of image information is determined by the first electronic device based on a distance between the first electronic device and the second electronic device.

19. The method according to claim 15, wherein content on a first page of a first file is displayed on the first interface, and the displaying a first part of image information and sending a second part of image information to the second electronic device comprises:

when it is determined that the first file comprises content on a plurality of pages, displaying the content on the first page and sending content on a second page of the first file to the second electronic device.

20. The method according to claim 19, wherein the first file further comprises content on a third page and content on a fourth page, and the method further comprises:

in response to detecting a second input of the user, displaying, by the first electronic device, the content on the third page and sending the content on the fourth page to the second electronic device.

21. The method according to claim 19, wherein the first file further comprises content on a third page and content on a fourth page, and the method further comprises:

receiving, by the first electronic device, second indication information sent by the second electronic device, wherein the second indication information indicates that the second electronic device detects a third input; and
in response to receiving the second indication information, displaying the content on the third page and sending the content on the fourth page to the second electronic device.

22. The method according to claim 15, wherein the first interface is a desktop of the first electronic device, and the displaying a first part of image information and sending a second part of image information to the second electronic device comprises:

in response to receiving the first indication information, displaying, by the first electronic device, the desktop and sending image information corresponding to the desktop to the second electronic device.

23. The method according to claim 22, wherein the desktop comprises an icon of a first application, and the method further comprises:

receiving, by the first electronic device, third indication information sent by the second electronic device, wherein the third indication information indicates that the second electronic device detects a fourth input, and the fourth input is an input for the icon of the first application; and
in response to receiving the third indication information, sending, by the first electronic device, image information corresponding to a display interface of the first application to the second electronic device.

24. The method according to claim 22 or 23, wherein the desktop further comprises an icon of a second application, and the method further comprises:

displaying, by the first electronic device, a display interface of the second application in response to detecting a fifth input of the user for the icon of the second application.

25. The method according to claim 15, wherein the first interface is a display interface of a third application, the display interface comprises a first interface element, and the first interface element is associated with a second interface of the third application, wherein

the first part of image information is image information corresponding to the first interface, and the second part of image information is image information corresponding to the first interface; or
the first part of image information is image information corresponding to the first interface, and the second part of image information is image information corresponding to the second interface.

26. The method according to claim 25, wherein the first interface further comprises a second interface element, the second interface element is associated with a third interface of the third application, and the method further comprises: in response to detecting a sixth input of the user for the second interface element, displaying, by the first electronic device, the image information corresponding to the first interface and sending image information corresponding to the third interface to the second electronic device.

27. The method according to claim 26, wherein the third interface comprises a third interface element, the third interface element is associated with a fourth interface of the third application, and the method further comprises:

receiving, by the first electronic device, fourth indication information sent by the second electronic device, wherein the fourth indication information indicates that the second electronic device detects a seventh input, and the seventh input is an input for the third interface element; and
in response to receiving the fourth indication information, displaying, by the first electronic device, the fourth interface and sending the image information corresponding to the third interface to the second electronic device.

28. The method according to any one of claims 15 to 27, wherein the method further comprises:
receiving, by the first electronic device, fifth indication information sent by the second electronic device, wherein the fifth indication information indicates the first electronic device and the second electronic device to exit splicing display.

29. A splicing display method, wherein the method is applied to a second electronic device, the second electronic device communicates with a first electronic device through a near field wireless connection, and the method comprises:

sending first indication information to the first electronic device in response to detecting a first input of a user, wherein the first indication information indicates the first electronic device and the second electronic device to perform splicing display;
receiving a second part of image information sent by the first electronic device, wherein the second part of image information is associated with a first interface, and the first interface is a display interface displayed when the first electronic device receives the first indication information; and
displaying the second part of image information in response to receiving the second part of image information.

30. The method according to claim 29, wherein the second part of image information is image information obtained by enlarging image information corresponding to the first interface and then segmenting the enlarged image information by the first electronic device.

31. The method according to claim 29, wherein content on a first page of a first file is displayed on the first interface, and the displaying the second part of image information in response to receiving the second part of image information comprises:
displaying, by the second electronic device, content on a second page in response to receiving the content on the second page.

32. The method according to claim 31, wherein the first file further comprises content on a third page and content on a fourth page, and the method further comprises:

sending, by the second electronic device, second indication information to the first electronic device in response to detecting a third input of the user, wherein the second indication information indicates that the second electronic device detects the third input;
receiving, by the second electronic device, the content that is on the fourth page and that is sent by the first electronic device; and
displaying, by the second electronic device, the content on the fourth page in response to receiving the content on the fourth page.

33. The method according to claim 29, wherein the first interface is a desktop of the first electronic device, and the displaying the second part of image information in response to receiving the second part of image information comprises:

displaying, by the second electronic device, the desktop in response to receiving image information corresponding to the desktop.

34. The method according to claim 33, wherein the desktop comprises an icon of a first application, and the method further comprises:

sending, by the second electronic device, third indication information to the first electronic device in response to a fourth input of the user, wherein the third indication information indicates that the second electronic device detects the fourth input, and the fourth input is an input for the icon of the first application;

receiving, by the second electronic device, image information corresponding to a display interface of the first application; and

displaying, by the second electronic device, the display interface of the first application in response to receiving the image information corresponding to the display interface of the first application.

35. The method according to claim 29, wherein the first interface is a display interface of a third application, the display interface comprises a first interface element, and the first interface element is associated with a second interface of the third application, wherein

the second part of image information is image information corresponding to the first interface; or

the second part of image information is image information corresponding to the second interface.

36. The method according to claim 35, wherein the second part of image information further comprises a second interface element, the second interface element is associated with a third interface of the third application, and the method further comprises:

sending, by the second electronic device, fourth indication information to the first electronic device in response to detecting a fifth input of the user, wherein the fourth indication information indicates that the second electronic device detects the fifth input, and the fifth input is an input for the second interface element;

receiving, by the second electronic device, image information that is corresponding to the third interface and that is sent by the first electronic device; and

displaying the third interface in response to receiving the image information corresponding to the third interface.

37. The method according to any one of claims 29 to 36, wherein the method further comprises:

displaying, by the second electronic device, a first control when displaying the second part of image information; and

in response to detecting an eighth input of the user for the first control, displaying, by the second electronic device, a fourth interface and sending fifth indication information to the first electronic device, wherein the fifth indication information indicates the first electronic device and the second electronic device to exit splicing display, and the fourth interface is a display interface displayed before the second electronic device detects the first input.

38. An electronic device, comprising:

one or more processors; and

one or more memories, wherein

the one or more memories store one or more computer programs, the one or more computer programs comprise instructions, and when the instructions are executed by the one or more processors, the electronic device is enabled to perform the method according to any one of claims 15 to 28; or when the instructions are executed by the one or more processors, the electronic device is enabled to perform the method according to any one of claims 29 to 37.

39. A computer-readable storage medium, comprising computer instructions, wherein when the computer instructions are run on an electronic device, the electronic device is enabled to perform the method according to any one of claims 15 to 28; or

when the computer instructions are run on an electronic device, the electronic device is enabled to perform the method according to any one of claims 29 to 37.

Electronic device 100

FIG. 1

| Application layer | Camera | Calendar | Maps | WLAN | Music | Messaging |
|---|---|---|---|---|---|---|
| | Gallery | Phone | Navigation | Bluetooth | Videos | ... |

| Application framework layer | Window manager | Content provider | Phone manager | Resource manager |
|---|---|---|---|---|
| | Notification manager | View system | ... | |

| System library | Surface manager | Three-dimensional graphics processing library | | |
|---|---|---|---|---|
| | Two-dimensional graphics engine | Media library | Image processing library | ... |

| Kernel layer | Display driver | Camera driver | |
|---|---|---|---|
| | Audio driver | Sensor driver | ... |

FIG. 2

FIG. 3(a)

Mobile phone A

Mobile phone B

Exit

Region 302

Region 303

FIG. 3(b)

FIG. 3(c)

Mobile phone A

Mobile phone B

Mobile phone C

Region 304

Region 305

Region 306

FIG. 3(d)

Mobile phone A

Mobile phone B

4G 4G 08:08

4G 4G 35°C

08:08

Sunday, September 6

Gaoxin District ⊚

App 1   App 2   App 3

App 4   App 5   App 6

App 7   App 8   App 9

FIG. 4(a)

Mobile phone A    Mobile phone B

Exit

Region 401    Region 402    Region 403

FIG. 4(b)

Mobile phone C

08:08
Sunday,
September 6

35°C
Xi'an

08:08

App 1  App 2  App 3  App 4
App 5  App 6  App 7  App 8
App 9  App 10  App 11  App 12

Mobile phone B

Exit

Mobile phone A

FIG. 4(c)

Mobile phone A    Mobile phone B    Mobile phone C

Region 404    Region 405    Region 406    Region 407    Region 408

FIG. 4(d)

FIG. 5(a)

FIG. 5(b)

Mobile phone A                    Mobile phone B                    Mobile phone C

FIG. 5(c)

EP 4 273 692 A1

FIG. 6(a)

FIG. 6(b)

Mobile phone A

Mobile phone B

4G 4G

603    604    605    08:08

Multiplier    Dual-application    Paging    Exit

606

08:08

35°C
Xi'an

Thursday, August 6

App 1    App 2

App 3    App 4

App 5    App 6

App 7    App 8

App 9    App 10

App 11    App 12

FIG. 6(c)

EP 4 273 692 A1

Mobile phone B

Exit

Paging

Dual-application

Multiplier

02:47

607

Introduction >

4   5   6

10   11   ...

Mobile phone A

00:20

Media Headlines Anthology

1   2   3

▲   9

7

FIG. 6(d)

Mobile phone A

Mobile phone B

Multiplier

Dual-application

Paging

Exit

00:20

02:47

FIG. 6(e)

EP 4 273 692 A1

Mobile phone A

Mobile phone B

4G 4G

08:08

08:08

Thursday, August 6

Multiplier

Dual-
application

Paging

Exit

App 1

App 2

App 3

App 4

App 5

App 6

App 7

App 8

App 9

App 10

App 11

App 12

FIG. 7(a)

EP 4 273 692 A1

FIG. 7(b)

64

Mobile phone A

Mobile phone B

4G 4G 📶 📶 🛜                          🔋 08:08

App 3

**Movie**     TV series     Variety shows

Movie 1          Movie 2

Movie 3          Movie 4

4G 4G 📶 📶 🛜                          🔋 08:08

Multiplier | Full-screen | Paging | Exit

Thursday, August 6                    Xi'an

App 1     App 2     App 3     App 4

App 5     App 6     App 7     App 8

App 9     App 10     App 11     App 12

FIG. 7(c)

EP 4 273 692 A1

Mobile phone A

App 3

**Movie**   TV series   Variety shows

Movie 1       Movie 2

Movie 3       Movie 4

Mobile phone B

App 4  Multiplier  Full-screen  Paging  Exit

**Today**   **8 photos and 4 videos**

**July 24, 2020**

FIG. 7(d)

Mobile phone A

Mobile phone B

4G 4G

08:08

Thursday, August 6

Multiplier

Dual-application

Paging

Exit

35°C
Xi'an

App 1 App 2

App 5 App 6

App 9 App 10

App 3 App 4

App 7 App 8

App 11 App 12

FIG. 8(a)

EP 4 273 692 A1

FIG. 8(b)

**Mobile phone B**

Exit

Dual-application

Full-screen

Multiplier

**PDF 2/8**

**Mobile phone A**

08:08

4G 4G

Document 1

**PDF 1/8**

FIG. 8(c)

FIG. 9(a)

Mobile phone A

Mobile phone B

4G .ıll 4G .ıll 📶                                    🔋 08:08

08:08

☀️☁️ 35°C
Xi'an

Thursday, August 6

App 1    App 2    App 3    App 4

App 5    App 6    ●    App 8

App 9    App 10    App 11    App 12

◁    ◯    ▢

4G .ıll 4G .ıll 📶                                    🔋 08:08

( Full-screen )  ( Dual-application )  ( Paging )  ( Exit )

35°C

Thursday, August 6
Gaoxin District ◉

App 13    App 14    App 15    App 16

App 17    App 18    App 19    App 20

○ ● ○

App 21    App 22    App 23    App 24

◁    ◯    ▢

FIG. 9(b)

EP 4 273 692 A1

EP 4 273 692 A1

Mobile phone A

4G 4G 📶 📶 🛜 ▭ 08:08

App 6

**Dad** 21:30 yesterday

Good night!

**Mom**

Happy Birthday!

**Sam** Saturday

Happy Birthday!

**Lucy** Friday

Bye!

◁ ○ ▢

Mobile phone B

4G 4G 📶 📶 🛜 ▭ 08:08

Full-screen  Dual-application  Paging  Exit

°C

Thursday, August 6
Gaoxin District ◉

App 13  App 14  App 15  App 16

App 17  App 18  App 19  App 20

○ ● ○

App 21  App 22  App 23  App 24

◁ ○ ▢

FIG. 9(c)

FIG. 9(d)

Mobile phone A

Full-screen    Dual-application    Paging    Exit

Dad

Waiting for the other party to answer

Cancel

Mobile phone B

4G 4G 📶                    🔋 08:08

< Dad

21:30 yesterday

Good night!

Send

Photo        Camera        Video call

● ○

FIG. 9(e)

EP 4 273 692 A1

Mobile phone A

Full-screen  Dual-application  Paging  Exit

Switch camera    Hang up    More

Mobile phone B

4G 4G 📶                    🔋 08:09

< Dad

21:30 yesterday

Good night!

08:09 AM

Show you the photo I took last night

FIG. 9(f)

FIG. 10(a)

Mobile phone A

4G 4G 🛜

1005  1004  1003

Exit | Paging | Dual-application | Multiplier

1006

35°C

App 13    App 14

App 17    App 18

App 21    App 22

Mobile phone B

4G 4G 🛜                🔋 08:08

08:08

Thursday, August 6

Gaoxin District ◎

App 15    App 16

App 19    App 20

App 23    App 24

FIG. 10(b)

FIG. 11(a)

Mobile phone A

Mobile phone B

FIG. 11(b)

EP 4 273 692 A1

FIG. 11(c)

FIG. 12(a)

Mobile phone A

Mobile phone B

4G 4G

08:08

08:08
Thursday, August 6

35°C
Xi'an

Full-screen

Dual-application

Multiplier

Paging

App 1  App  pp 3  App 4

App 5  App 6  App 7  App 8

App 9  App 10  App 11  App 12

4G 4G

08:08

35°C

08:08
Thursday, August 6
Gaoxin District

App 13  App 14  App 15  App 16

App 17  App 18  App 19  App 20

App 21  App 22  App 23  App 24

FIG. 12(b)

EP 4 273 692 A1

Mobile phone A

Mobile phone B

4G 4G

Exit    Paging    Dual-
application    Multiplier

35°C

App 13    App 14

App 17    App 18

App 21    App 22

08:08

08:08

Thursday, August 6

Gaoxin District ◉

App 15    App 16

App 19    App 20

App 23    App 24

FIG. 12(c)

EP 4 273 692 A1

Mobile phone A

Mobile phone B

4G 4G 📶 🛜                    🔋 08:08

08:08              ☀️☁️ 35°C
                        Xi'an
Thursday, August 6

☐ App 1    ☐ App 2    ☐ App 3    ☐ App 4

☐ App 5    ☐ App 6    ☐ App 7    ☐ App 8

● ○ ○

☐ App 9   ☐ App 10   ☐ App 11   ☐ App 12

◁    ○    ▢

The mobile phone B
approaches the
mobile phone A

←

4G 4G 📶 🛜                    🔋 08:08

☀️☁️            08:08
35°C
            Thursday, August 6
            Gaoxin District ◉

☐ App 13   ☐ App 14   ☐ App 15   ☐ App 16

☐ App 17   ☐ App 18   ☐ App 19   ☐ App 20

○ ● ○

☐ App 21   ☐ App 22   ☐ App 23   ☐ App 24

◁    ○    ▢

FIG. 13(a)

EP 4 273 692 A1

Mobile phone A

Mobile phone B

08:08

Thursday, August 6

Multiplier

Dual-application

Paging

Exit

35°C
Xi'an

App 1

App 2

App 3

App 4

App 5

App 6

App 7

App 8

App 9

App 10

App 11

App 12

FIG. 13(b)

Multiplier  Dual-application  Paging  Exit

App 1  App 2
App 5  App 6
App 9  App 10

App 3  App 4
App 7  App 8
App 11  App 12

08:08
Thursday, August 6
35°C
Xi'an

The mobile phone B is far away from the mobile phone A

FIG. 14(a)

Mobile phone A

08:08

4G 4G

08:08

Thursday, August 6

35°C
Xi'an

App 1

App 2

App 3

App 4

App 5

App 6

App 7

App 8

App 9

App 10

App 11

App 12

Mobile phone B

08:08

4G 4G

35°C

08:08

Thursday, August 6

Gaoxin District ◎

App 13

App 14

App 15

App 16

App 17

App 18

App 19

App 20

App 21

App 22

App 23

App 24

FIG. 14(b)

EP 4 273 692 A1

| Source device | Sink device |
|---|---|
| **Application layer**<br><br>App 1    App 2    ... | **Application layer**<br><br>App 13    App 14    ... |

**Source device**

**Application layer**

App 1 | App 2 | ...

**Application framework layer**

Layer management | Input subsystem | ...

**Native layer**

Layer synthesis module | Layer cropping module | ...

**Server layer**

Audio and video stream capture module | Virtual display management module

Network module

**Sink device**

**Application layer**

App 13 | App 14 | ...

**Application framework layer**

Sound system | Display system

Input system | ...

**Native layer**

Video rendering module | Audio and video decoding module

Reverse input event capture module | ...

**Server layer**

Network module

FIG. 15

| Source device | Sink device 1 | Sink device 2 |
|---|---|---|

S1601: Establish a wireless connection

S1602: Indicate to enter a full-screen mode

S1603: Enlarge a canvas by one time

S1604: Crop the canvas that is enlarged by one time, display a part of the cropped canvas on the source device, and put the other part on a virtual display

S1605: Project the display

S1606: Establish a wireless connection

S1607: Indicate to enter a full-screen mode

S1608: Enlarge the canvas by two times

S1609: Crop the canvas that is enlarged by two times, display a first part of the cropped canvas on the source device, put a second part on a virtual display 1, and put a third part on a virtual display 2

TO
FIG. 16B

TO
FIG. 16B

TO
FIG. 16B

FIG. 16A

CONT.
FROM
FIG. 16A

CONT.
FROM
FIG. 16A

CONT.
FROM
FIG. 16A

—— S1610: Project the display ——→

S1610: Project the display ———————————→

S1611: Detect an operation
of exiting a full-screen mode

←————— S1612: Indicate to exit a full-screen mode —————

S1613: Adjust a size of the canvas
and re-splice with the sink device 1

S1614: Detect an operation
of exiting a full-screen mode

←—— S1615: Indicate to exit
a full-screen mode

S1616: Resume single-device display

FIG. 16B

(1080, 2340)                                    (2160, 2340)

Original
canvas          Enlarge it
                by one time
                              2340                              2340
                2340

(0, 0)    1080          (0, 0)          2160

(1080, 2340)                                    (2160, 2340)

Cropped
region 1                                Cropped
                                        region 2

(0, 0)          Put it on the virtual    (1080, 0)   Translate it
                display 0 after cropping              leftwards by
                                                      1080 after
                                                      cropping and put
                                                      it on the virtual
                                                      display 1

Virtual                                 Virtual
display 0                               display 1

FIG. 17

(1080, 2340)

Original
canvas

Enlarge it
by one time
2340

→

(0, 0)   1080

Z   (2160, 2340)

Region that needs to be cropped

2340

(0, 0)   2160

(1080, 2340)

Region that needs to be cropped

Cropped
region 3

(0, 0)

Put it on the virtual
display 0 after cropping

(2160, 2340)

Region that needs to be cropped

Cropped
region 4

(1080+x, 0)

Translate it
leftwards by
1080+x after
cropping and put
it on the virtual
display 1

Virtual
display 0

Virtual
display 1

FIG. 18

EP 4 273 692 A1

(1080, 2340)          (3240, 2340)

Enlarge
it by two
times

Original
canvas

2340

2340

(0, 0)   1080       (0, 0)          3240

(1080, 2340)        (2160, 2340)        (3240, 2340)

Cropped
region 1

Cropped
region 2

Cropped
region 3

(0, 0)   Put it on the virtual      (1080, 0)    Translate it         (2160, 0)
display 0 after cropping        leftwards by 1080      Translate it
                                 after cropping and     leftwards by
                                 put it on the       2160 after
                                 virtual display 1    cropping and put
                                                  it on the virtual
                                                  display 2

Virtual
display 0

Virtual
display 1

Virtual
display 2

FIG. 19

FIG. 20

| Source device | | Sink device |
|---|---|---|

S2101: Establish a wireless connection

S2102: Indicate to enter a paging mode

S2103: Enlarge a canvas by one time

S2104: Display a cropped half of the canvas that is enlarged by one time, and display the other cropped half on a virtual display 1

S2105: Project the display

S2106: Detect an operation of starting an app by a user and load content on a page 2 on the canvas that is enlarged by one time

S2107: Display the cropped half of the canvas that is enlarged by one time, and display the other half on the virtual display 1

S2108: Project the display

FIG. 21

First desktop page of the mobile phone A    Second desktop page of the mobile phone A

~

TO

FIG. 22B

FIG. 22A

CONT.
FROM
FIG. 22A
~

2201                                                          2202

4G₄ᵢ₁ᵢₗ 4G₁ᵢₗ                          ▭ 08:08

08:08          ☀☁          35°C
Thursday, August 6          Xi'an

App 1     App 2     App 3     App 4          App 25     App 26     App 27     App 28

App 5     App 6     App 7     App 8

● ○ ○

App 9     App 10     App 11     App 12

Put it on a display 0 after cropping          Translate it leftwards by 1080 after
                                              cropping and put it on a display 1

FIG. 22B

Source device

Sink device

S2301: Establish a wireless connection

S2302: Indicate to enter a multiplier mode

S2303: Enlarge a canvas by one time

S2304: Detect that a user starts an app and display a home page of the app on a half of the canvas that is enlarged by one time

S2305: When it is detected that the user taps an activity page on the home page of the app, display the activity page on the other half of the canvas that is enlarged by one time

S2306: Display a cropped half through a display and display the other half on a virtual display 1

S2307: Project the display

FIG. 23

FIG. 24A

2401

2402

CONT.
FROM
FIG. 24A

| | |
|---|---|
| 4G ... 4G ... 🛜 ▮▮▮▯ 08:08 | 4G ... 4G ... 🛜 ▮▮▮▯ 08:08 |

App 6 — < Dad

**Dad** — 21:30 yesterday
Good night!

**Mom** — Saturday
Happy Birthday!

**Sam** — Saturday
Happy Birthday!

**Lucy** — Friday
Bye!

21:30 yesterday
Good night!

Put it on the virtual display 0 after cropping

TO
FIG. 24C

Translate it leftwards by 1080 after cropping and put it on the virtual display 1

TO
FIG. 24C

FIG. 24B

CONT.
FROM
FIG. 24B
~

Virtual display 0

CONT.
FROM
FIG. 24B
~

Virtual display 1

FIG. 24C

FIG. 25

First electronic device

Second electronic device

S2601: Display a first interface

S2602: First indication information

S2603: Display a first part of image information and send a second part of image information to the second electronic device

Second part of image information

S2604: Display the second part of image information

FIG. 26

Apparatus 2700

Display unit 2710

Receiving unit 2720

Sending unit 2730

FIG. 27

Apparatus 2800

Detection unit 2810

Sending unit 2820

Receiving unit 2830

Display unit 2840

FIG. 28

Electronic device 2900

Processor 2910

Memory 2920

Bus

FIG. 29

## INTERNATIONAL SEARCH REPORT

| International application No. |
| --- |
| **PCT/CN2022/073098** |

### A.    CLASSIFICATION OF SUBJECT MATTER

G06F 3/14(2006.01)i;  H04M 1/725(2021.01)i

According to International Patent Classification (IPC) or to both national classification and IPC

### B.    FIELDS SEARCHED

Minimum documentation searched (classification system followed by classification symbols)

G06F; H04M

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 屏, 显示, 拼接, 扩展, 扩屏, 多, 分立, screen, display, across, splice, multi, several

### C.    DOCUMENTS CONSIDERED TO BE RELEVANT

| Category* | Citation of document, with indication, where appropriate, of the relevant passages | Relevant to claim No. |
| --- | --- | --- |
| X | CN 104216675 A (SHENZHEN ZTE MOBILE TECHNOLOGY CO., LTD.) 17 December 2014 (2014-12-17)<br>claims 7-10, description paragraphs [0035]-[0077], figures 2-3 | 1-39 |
| X | CN 103366715 A (CHANGCHUN UNIVERSITY OF SCIENCE AND TECHNOLOGY) 23 October 2013 (2013-10-23)<br>description, paragraphs [0007]-[0012], figure 5 | 1-39 |
| X | CN 109101208 A (NETEASE (HANGZHOU) NETWORK CO., LTD.) 28 December 2018 (2018-12-28)<br>description, paragraphs [0033]-[0067], figure 1 | 1-39 |
| X | CN 111679801 A (ZHANG CHAO) 18 September 2020 (2020-09-18)<br>description, paragraphs [0021]-[0070], figure 3 | 1-39 |
| X | CN 108255446 A (THUNDER SOFTWARE TECHNOLOGY CO., LTD.) 06 July 2018 (2018-07-06)<br>description, paragraphs [0050]-[0166], figure 3 | 1-39 |
| X | CN 109327602 A (STMICROELECTRONICS INC. et al.) 12 February 2019 (2019-02-12)<br>description, paragraphs [0012]-[0063], figure 3B | 1-39 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 April 2022** | **19 April 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/073098**

| Patent document cited in search report | | | Publication date (day/month/year) | Patent family member(s) | | | Publication date (day/month/year) |
|---|---|---|---|---|---|---|---|
| CN | 104216675 | A | 17 December 2014 | None | | | |
| CN | 103366715 | A | 23 October 2013 | None | | | |
| CN | 109101208 | A | 28 December 2018 | None | | | |
| CN | 111679801 | A | 18 September 2020 | None | | | |
| CN | 108255446 | A | 06 July 2018 | None | | | |
| CN | 109327602 | A | 12 February 2019 | US | 2021349672 | A1 | 11 November 2021 |
| | | | | CN | 113518147 | A | 19 October 2021 |
| | | | | US | 2019034150 | A1 | 31 January 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110221570